(19) Europäisches Patentamt
European Patent Office
Office européen des brevets

(11) Publication number: **0 357 435 B1**

(12) # EUROPEAN PATENT SPECIFICATION

(45) Date of publication of patent specification: **08.12.93**

(51) Int. Cl.5: **C07C 69/76**, C09K 19/20, G02F 1/13

(21) Application number: **89308847.6**

(22) Date of filing: **31.08.89**

(54) **Optically active aromatic compounds, preparation process therefor, liquid crystal materials and a light switching element.**

(30) Priority: **31.08.88 JP 219504/88**
**12.09.88 JP 229492/88**
**20.09.88 JP 237121/88**
**21.09.88 JP 238557/88**

(43) Date of publication of application:
**07.03.90 Bulletin 90/10**

(45) Publication of the grant of the patent:
**08.12.93 Bulletin 93/49**

(84) Designated Contracting States:
**CH DE FR GB LI**

(56) References cited:
**EP-A- 0 284 371**
**WO-A-87/05012**

**PATENT ABSTRACTS OF JAPAN, 14th October 1988, page 166 C 536; & JP-A-63 135 346 (CANON INC.) 07-06-1988**

(73) Proprietor: **SUMITOMO CHEMICAL COMPANY, LIMITED**
**Kitahama 4-chome 5-33**
**Chuo-ku Osaka 541(JP)**

(72) Inventor: **Higashii, Takayuki**
**4-6 Kamoricho-2-chome**
**Kishiwada-shi(JP)**
Inventor: **Kurimoto, Isao**
**11-8-108 Sonehigashinocho-2-chome**
**Toyonaka-shi(JP)**
Inventor: **Toda, Shoji**
**2-40 Hirata-1-Chome**
**Ibaraki-shi(JP)**
Inventor: **Minai, Masayoshi**
**1606-5 Harimadacho**
**Moriyama-shi(JP)**
Inventor: **Chika, Shigeaki**
**13-10 Amakubo-2-chome**
**Tsukuba-shi(JP)**
Inventor: **Fujisawa, Koichi**
**23-7 Namiki-3-chome**
**Tsukuba-shi(JP)**
Inventor: **Imamura, Kiyoshi**
**16-5 Hattori Honmachi-3-chome**
**Toyonaka-shi(JP)**

(74) Representative: **Ablewhite, Alan James et al**
**MARKS & CLERK**
**57/60 Lincoln's Inn Fields**
**London WC2A 3LS (GB)**

EP 0 357 435 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

### Field of the Invention

This invention relates to the optically active aromatic compounds represented by the formula (I):

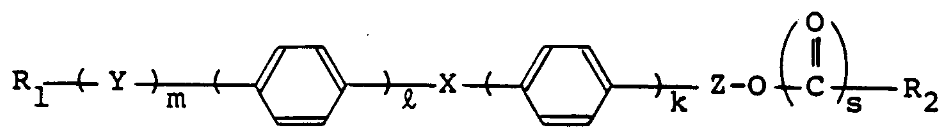

(I)

(wherein X represents -COO- or -OCO-; Y represents -COO-, -OCO- or -O-; $R_2$ represents an alkyl or alkoxyalkyl group having 1 to 20 carbon atoms optionally substituted by halogen atoms; $R_1$ represents an alkyl group having 3 to 20 carbon atoms; Z represents

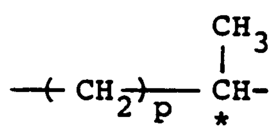

or

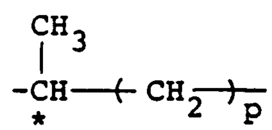

,

wherein P represents a number of 1 to 5 and * indicates asymmetric carbon atom; ℓ and k each represents a number of 1 or 2; m and s each represents a number of 0 or 1), preparation processes therefor, liquid crystal materials containing such aromatic compounds as active ingredient, and a light switching element using said liquid crystal materials as liquid crystal element.

### Description of the Prior Art

The optically active aromatic compounds represented by the formula (I) are the novel compounds found out for the first time by the present inventors. These compounds are useful as liquid crystal compounds, especially ones showing excellent responsiveness in video display. Further, the compounds of this invention can be worked into liquid crystal compositions that can be utilized as a liquid crystal element for producing a light switching element.

When the term "liquid crystal compounds" is used in this specification, it means not only those compounds which are per se capable of forming a liquid crystal phase but also the compounds which are useful as a component to be blended for a liquid crystal even if they per se cannot be observed as a liquid crystal phase.

Image display devices utilizing liquid crystal are now widely provided for practical application, and particularly, TN (twisted nematic) type display system is popularly employed for such devices.

This system had many advantages such as small power consumption and softness to the eye because of the light-receiving type display panel which itself is not liminous, but on the other hand it has the defect that the response speed in image display is low.

High-speed response is however, especially required in the recent image displays, and many efforts have been made for improving the response characteristics of the liquid crystal compounds. However, the above-mentioned twisted nematic type display system still can not stand comparison with the luminescent

type display systems such as light-emitting diode, electroluminescence or plasma displays in response time.

Efforts have been continued for finding out a new display system which is capable of high-speed response while making full use of the advantages of liquid crystal displays which are light-receiving type and low in power consumption, and one result thereof has been the proposal of a display device utilizing the optical switching phenomenon of ferroelectric liquid crystal such as disclosed in Applied Physical Letter, 36, 899 (1980).

This system utilizes chiral smectic phases such as chiral smectic C phase which shows ferroelectricity (hereinafter referred to as "Sc*"). It is known that not only the Sc*, but also chiral smectic F, G, H, and I phases show ferroelectricity.

Ferroelectric liquid crystals to be used for actually used ferroelectric liquid crystal display devices are required to have many characteristics. However, at present these requirements cannot be satisfied by only one compound and ferroelectric liquid crystal compositions obtained by mixing some liquid crystal compounds or non-liquid crystal compounds must be used for satisfying them.

Such ferroelectric liquid crystal compositions may be not only those which comprise only ferroelectric liquid crystal compounds. Japanese Patent Kokai (Laid-open) No. 61-195187 has reported to obtain ferroelectric liquid crystal compositions by mixing compound or composition which forms non-chiral smectic C, F, G, H, or I phase (hereinafter referred to as "phase such as Sc") as a basic substance with one or more compounds which forms ferroelectric liquid crystal phase, thereby to make the whole a ferroelectric liquid crystal composition. Furthermore, a report has been made to mix a compound or composition which forms a phase such as Sc as a basic substance with one or more compounds which are optically active, but show no ferroelectric liquid crystal phase to make the whole a ferroelectric liquid crystal composition. (Mol. Cryst. Liq. Cryst. 89, 327 (1982)).

From the above, it is seen that a ferroelectric liquid crystal composition can be produced by mixing a basic substance with one or more compounds which are optically active irrespective of forming ferroelectric liquid crystal phase or not. However, the optically active substance is preferably capable of forming liquid crystal phase and even if it cannot form liquid crystal phase, it is preferably one having structure which resembles a liquid crystal compound, so to speak, a quasi-liquid crystal substance. However, there have not yet been found liquid crystal materials which have spontaneous polarization and low viscosity necessary for high speed response and have liquid crystallinity in the lower temperature region.

Under the circumstances, the present invention provides a ferroelectric liquid crystal material which has sufficient spontaneous polarization, has high speed responsiveness, has low viscosity and besides has liquid crystallinity in the lower temperature region.

The present invention provides the optically active aromatic compounds represented by the formula (I):

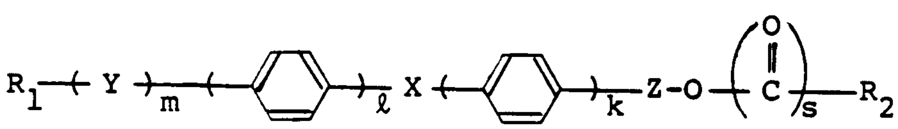 (I)

(wherein X represents -COO- or -OCO-; Y represents -COO-, -OCO- or -O-; $R_2$ represents an alkyl or alkoxyalkyl group having 1 to 20 carbon atoms optionally substituted by halogen atoms; $R_1$ represents an alkyl group having 3 to 20 carbon atoms; Z represents

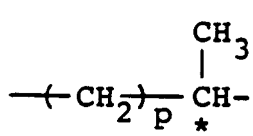

or

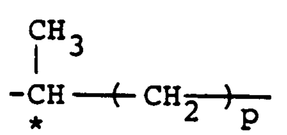 ,

wherein P represents a number of 1 to 5 and * indicates asymmetric carbon atom; ℓ and k each represents a number of 1 or 2; m and s each represents a number of 0 or 1), preparation processes therefor, liquid crystal materials containing such aromatic compounds as active ingredient, and a light switching element using said liquid crystal materials as liquid crystal element.

DETAILED DESCRIPTION OF THE INVENTION

Many of the optically active aromatic compounds represented by the formula (I) according to this invention are the liquid crystal compounds presenting a liquid crystal phase which falls in the category of $S_A$ phase or Sc* phase.

In the Sc* phase specific to ferroelectric liquid crystals, the molecules are arranged with an inclination to a specific direction, such direction of inclination being slightly shifted from layer to layer, and a helical structure is observed in molecular orientation (Mol. Cryst. Liq. Cryst., 40, 30 (1977)). The Sc* phase is also characterized in that spontaneous polarization takes place in a direction vertical to the axis of said helix.

As the structural conditions for the formation of conventional ferroelectric liquid crystals, it is pointed out that the liquid crystal has an optical active group for inducing a helical molecular arrangement at the end of the molecular chain, and that the crystal also has at the end portion of the molecular chain a substituent having a permanent dipole moment in a direction substantially vertical to the major axis of molecule for inducing spontaneous polarization.

Furthermore, it is said that response speed of ferroelectric liquid crystals has correlation with intensity of spontaneous polarization of the liquid crystals and in order to enhance response speed, it is preferred to increase spontaneous polarization.

For this purpose, it has been conducted to introduce a polar group into liquid crystal molecules. However, this suffers from the problems that the conventional optically active liquid crystal compounds are small in polarity or have limitation in polar group which can be introduced.

The present invention provides liquid crystal compounds having a large polarity and a process for introducing a wide variety of polar groups into liquid crystal compounds.

The optically active aromatic compounds represented by the formula (I) according to this invention can be produced by reacting phenols represented by the formula (II):

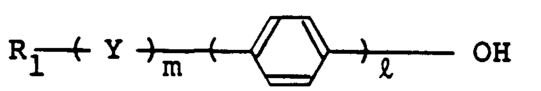

(II)

(wherein $R_1$, Y, ℓ and m have the meanings given above) with optically active carboxylic acids represented by the formula (III):

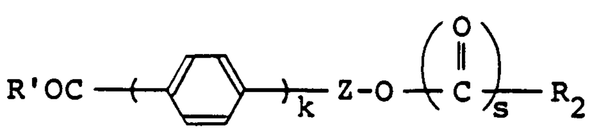

(III)

(wherein $R_2$, s and Z have the meanings given above; R′ represents a hydroxyl group or a halogen atom and k represents a number of 1 or 2), or by reacting carboxylic acid compounds represented by the formula (IV):

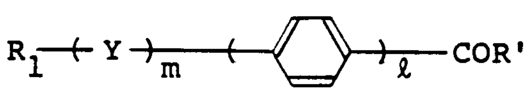

(IV)

(wherein $R_1$, Y, ℓ and m have the meanings given above and R′ represents a hydroxyl group or a halogen atom) with optically active phenols represented by the formula (V):

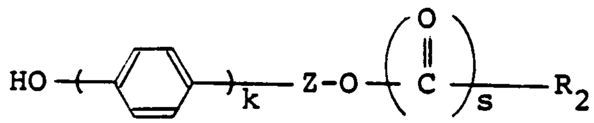

(V)

(where $R_2$, k, s and Z have the meanings given above).

The optically active carboxylic acids (III) containing asymmetric carbon can be produced, for instance,

(i) 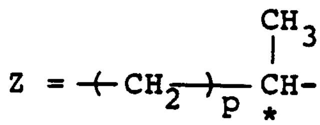 and s=0

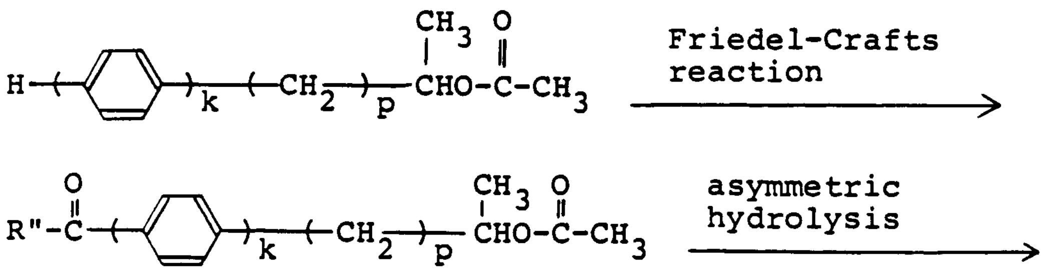

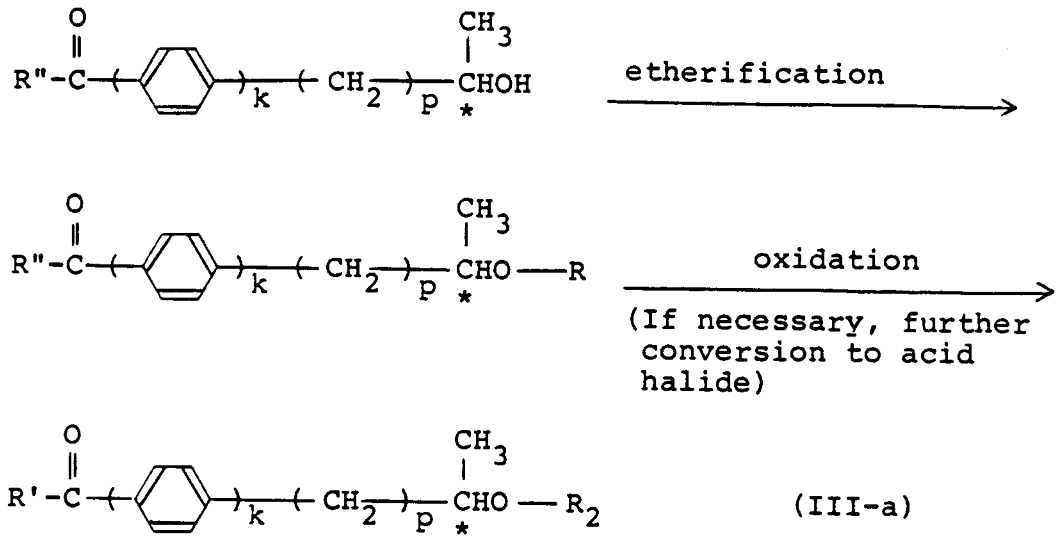


(III-a)

(ii) 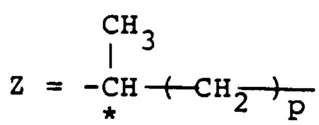 and S=0

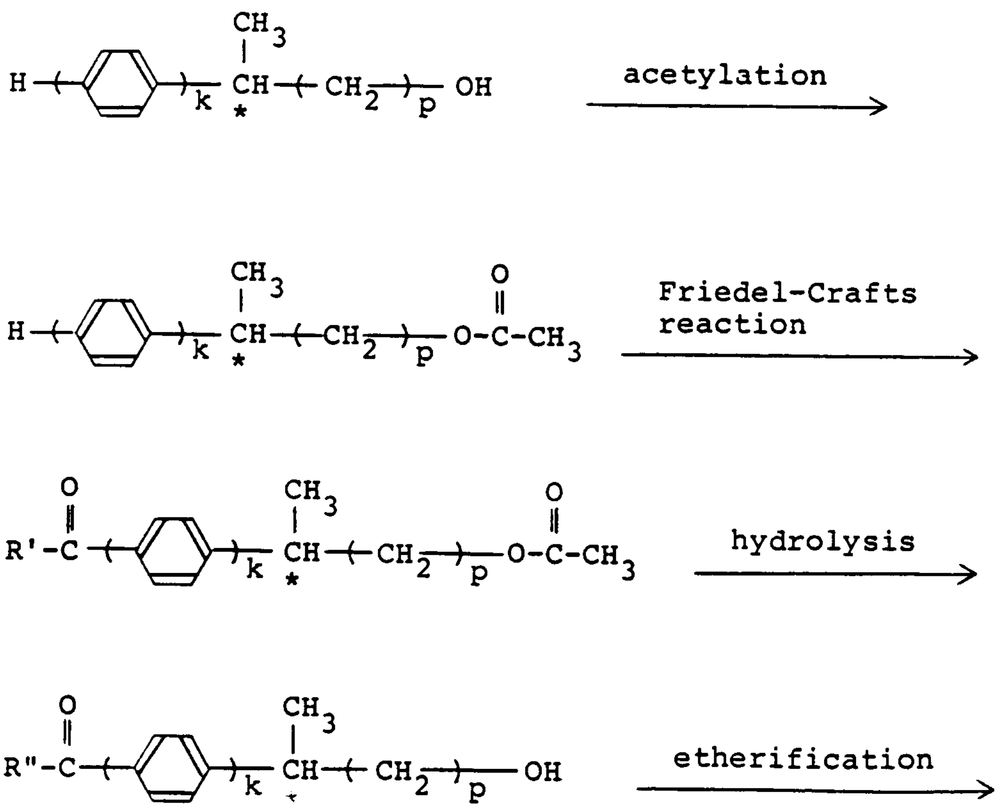

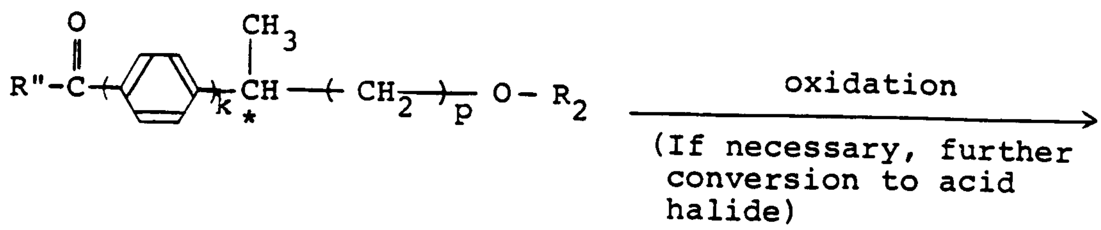


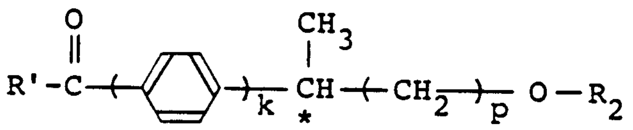

(III-b)

(In the above reaction formulas, R″ represents methyl group, and R′ represents hydroxyl group or a halogen atom)

(iii) s=1

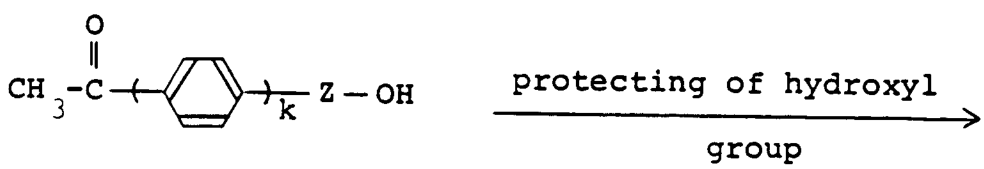


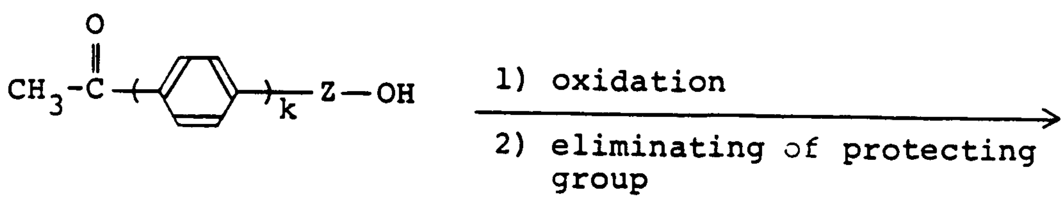


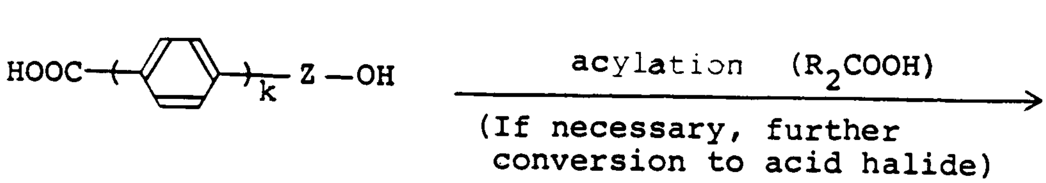


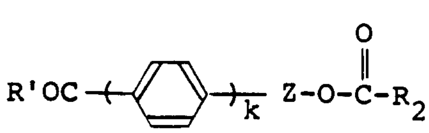

(III-c)

(In the above reaction formulas, A represents a protecting group such as tetrahydropyranyl, t-butyldimethylsilyl or benzyl group and R′ represents hydroxyl group or a halogen atom.)

The optically active phenols (V) containing asymmetric carbon can be produced, for instance,

(i) 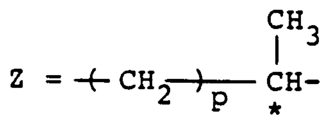

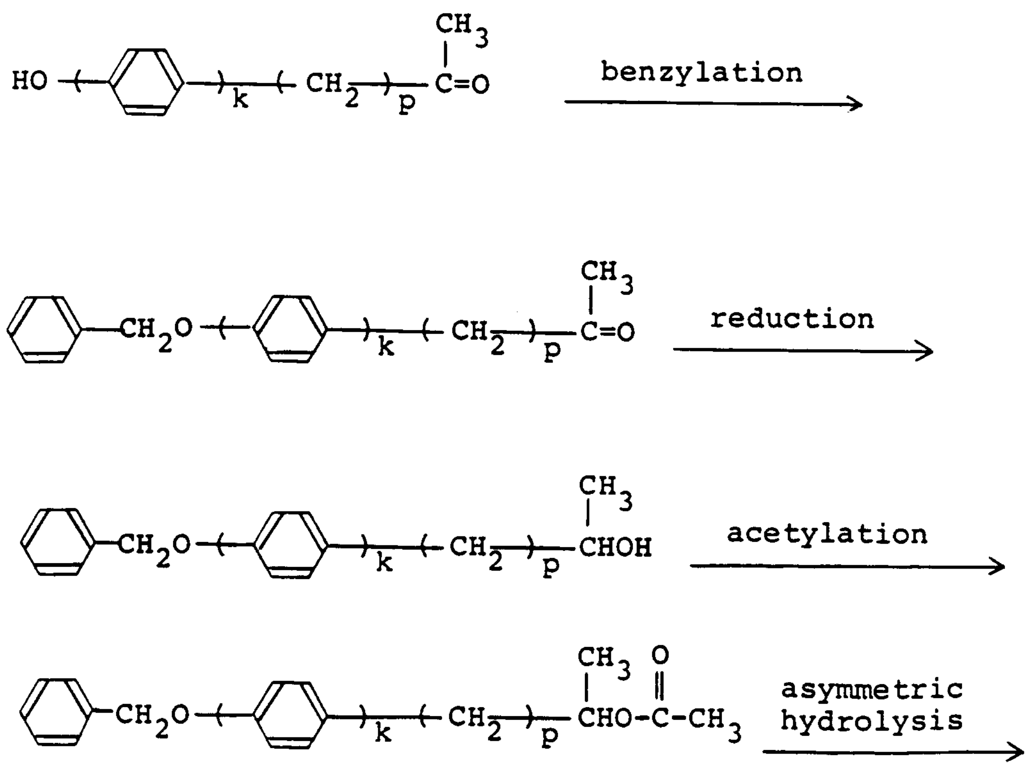

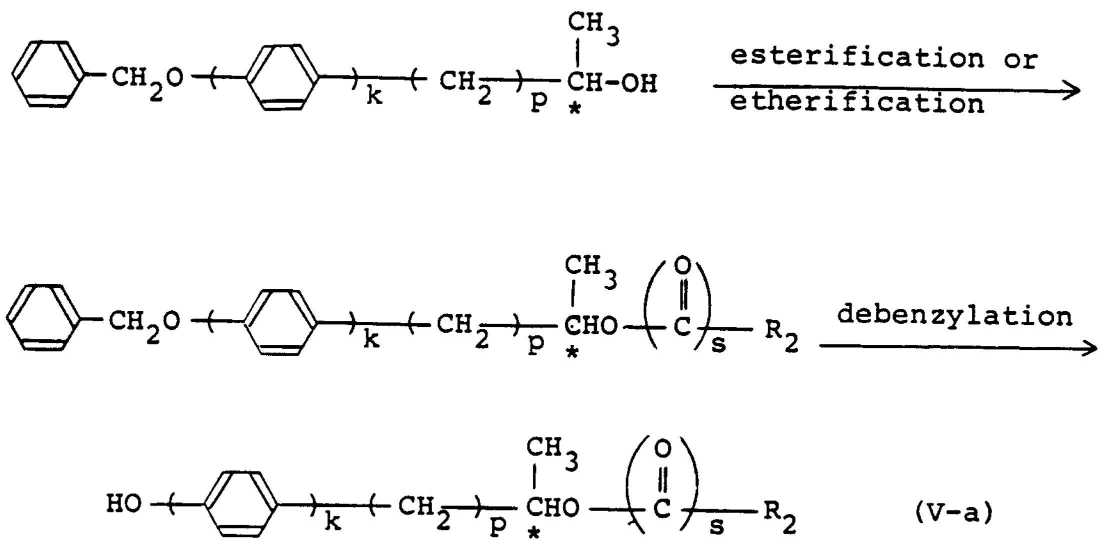


(V-a)

(ii) Z = 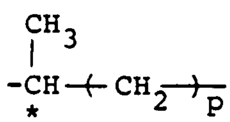

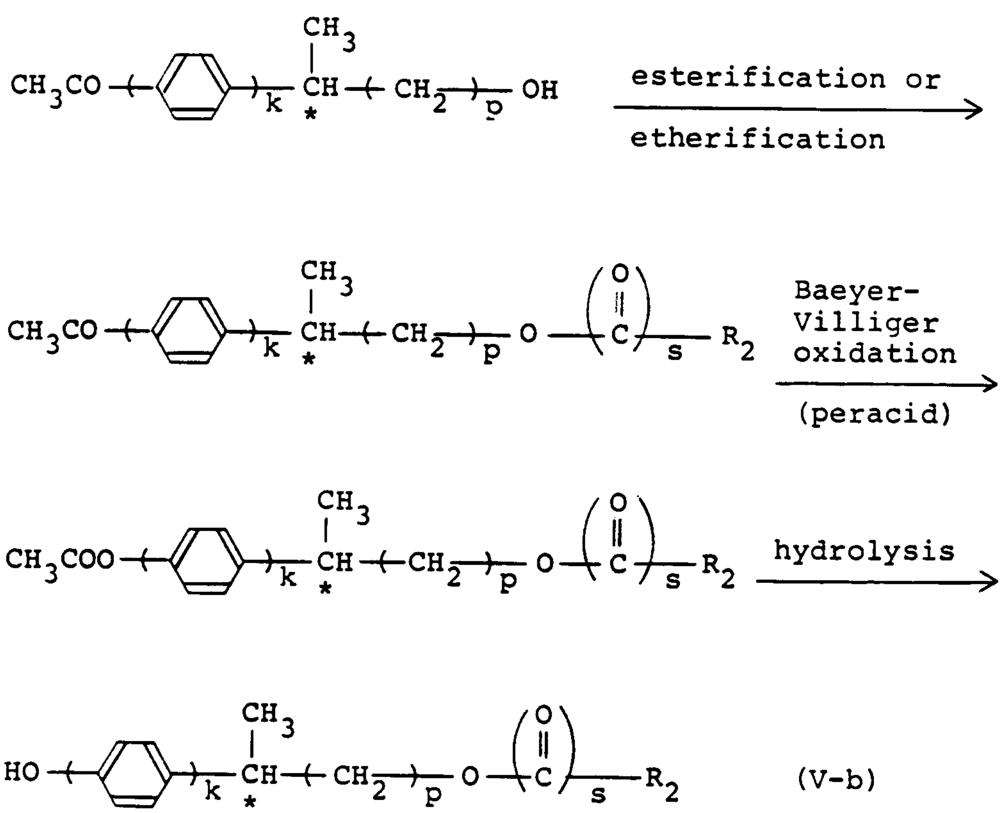


(V-b)

Typical examples of said optically active phenols (V) are as follows:

(i) 4-(2-alkoxy-1-methyl)ethylphenol,
4-(2-alkylcarbonyloxy-1-methyl)ethylphenol,
4-(2-alkoxyalkylcarbonyloxy-1-methyl)ethylphenol,
4-(3-alkoxy-1-methyl)propylphenol,

4-(2-alkoxyalkyloxy-1-methyl)ethylphenol,
4-(4-alkoxy-1-methyl)butylphenol,
4-(5-alkoxy-1-methyl)pnetylphenol,
4-(6-alkoxy-1-methyl)hexylphenol,
And 4-(3-alkoxy-1-methyl)propylphenol,
4-(4-alkoxy-1-methyl)butylphenol,
4-(5-alkoxy-1-methyl)pentylphenol,
4-(6-alkoxy-1-methyl)hexylphenol,
wherein said alkoxy substituents are substituted with alkyloxyalkyl, alkylcarbonyloxy or alkyloxyalkylcarbonyloxy groups.

Furthermore, 4-substituted-4′-hydroxybiphenyl have the same substituent as the above 4-substituted phenol.

(ii) 4-(2-alkoxypropyl)phenol,
4-(2-alkylcarbonyloxypropyl)phenol,
4-(2-alkoxyalkyloxypropyl)phenol,
4-(2-alkoxyalkylcarbonyloxypropyl)phenol,
4-(2-alkoxypropyl)-4′-hydroxybiphenyl,
4-(2-alkylcarbonyloxypropyl)-4′-hydroxybiphenyl,
4-(2-alkoxyalkyloxypropyl)-4′-hydroxybiphenyl,
4-(2-alkoxyalkylcarbonyloxypropyl)-4′-hydroxybiphenyl,
(iii) 4-(3-alkoxybutyl)phenol,
4-(3-alkylcarbonyloxybutyl)phenol,
4-(3-akoxyalkyloxybutyl)phenol,
4-(3-alkoxyalkylcarbonyloxybutyl)phenol,
4-(3-alkoxybutyl)-4′-hydroxybiphenyl,
4-(3-alkylcarbonyloxybutyl)-4′-hydroxybiphenyl,
4-(3-alkoxyalkyloxybutyl)-4′-hydroxybiphenyl,
4-(3-alkoxyalkylcarbonyloxybutyl)-4′-hydroxybiphenyl,
(iv) 4-(4-alkoxypentyl)phenol,
4-(4-alkylcarbonyloxypentyl)phenol,
4-(4-alkoxyalkyloxypnetyl)phenol,
4-(4-alkoxyalkylcarbonyloxypentyl)phenol,
4-(4-alkoxypentyl)-4′-hydroxybiphenyl,
4-(4-alkylcarbonyloxypentyl)-4′-hydroxybiphenyl,
4-(4-alkoxyalkyloxypentyl)-4′-hydroxybiphenyl,
4-(4-alkoxyalkylcarbonyloxypentyl)-4′-hydroxybiphenyl,

Further, the compounds in which 4-substituted pentyl group in the above compounds is 5-alkoxyhexyl, 5-alkylcarbonyloxyhexyl, 5-alkoxyalkyloxyhexyl, 5-alkoxyalkylcarbonyloxyhexyl, 6-alkoxyheptyl, 6-alkylcarbonyloxyheptyl, 6-alkoxyalkyloxyheptyl or 6-alkoxyalkylcarbonyloxyheptyl groups are exemplified. These may also be used as metal phenolates.

The above alkoxy, alkylcarbonyloxy, alkoxyalkyloxy and alkoxyalkylcarbonyloxy correspond to

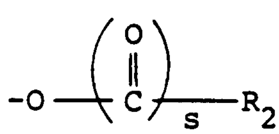

in the above-mentioned formula (V) and the substituent $R_2$ is an alkyl group or alkoxyalkyl group of 1-20 carbon atoms which may be substituted with halogen atom and these alkyl group and alkoxyalkyl group are straight chain or branched chain groups. In case of branched chain, this may be an optically active group.

Typical examples of these alkyl group and alkoxyalkyl group are methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, 1-methylethyl, 1-methylpropyl, 1-methylbutyl, 1-methylpentyl, 1-methylhexyl, 1-methylheptyl, 1-methyloctyl, 2-methylethyl, 2-methylbutyl, 2,3-dimethylbutyl, 2,3,3-trimethylbutyl, 2-methylpentyl, 3-methylpentyl, 2,3-dimethylpentyl, 2,4-dimethylpentyl, 2,3,3,4-tetramethylpentyl, 2-methylhexyl, 3-methylhexyl, 4-methylhexyl, 2,5-dimethylhexyl, 2-methylheptyl, 2-methyloctyl, 2-trihalomethylpentyl, 2-trihalomethylhexyl, 2-trihalomethylheptyl, 2-haloethyl, 2-halopropyl, 3-halopropyl, 3-halo-2-methylpropyl, 2,3-dihalopropyl, 2-halobutyl, 3-halobutyl, 4-halobutyl, 2,3-dihalobutyl, 2,4-dihalobutyl, 3,4-dihalobutyl, 2-halo-3-methylbutyl, 2-halo-3,3-dimethylbutyl, 2-halopentyl, 3-halopentyl, 4-halopentyl, 5-halopentyl, 2,4-dihalopentyl, 2,5-dihalopentyl, 2-halo-3-methylpentyl, 2-halo-4-methylpentyl, 2-halo-3-monohalomethyl-4-methylpentyl, 2-halohexyl, 3-halohexyl, 4-halohexyl, 5-halohexyl, 6-halohexyl, 2-haloheptyl, 2-halooctyl ("halo" in these alkyl groups means fluorine, chlorine, bromine or iodine), methoxymethyl, methoxyethyl, methoxypropyl, methoxybutyl, methoxypentyl, methoxyhexyl, methoxyheptyl, methoxyoctyl, methoxynonyl, methoxydecyl, ethoxymethyl, ethoxyethyl, ethoxypropyl, ethoxybutyl, ethoxypentyl, ethoxyhexyl, ethoxyheptyl, ethoxyoctyl, ethoxynonyl, ethoxydecyl, propoxymethyl, propoxyethyl, propoxypropyl, propoxybutyl, propoxypentyl, propoxyhexyl, propoxyheptyl, propoxyoctyl, propoxynonyl, propoxydecyl, butoxymethyl, butoxyethyl, butoxypropyl, butoxybutyl, butoxypentyl, butoxyhexyl, butoxheptyl, butoxyoctyl, butoxynonyl, butoxydecyl, pentyloxymethyl, pentyloxyethyl, pentyloxypropyl, pentyloxybutyl, pentyloxypentyl, pentyloxyhexyl, pentyloxyoctyl, pentyloxydecyl, hexyloxymethyl, hexyloxyethyl, hexyloxypropyl, hexyloxbutyl, hexyloxypentyl, hexyloxyhexyl, hexyloxyoctyl, hexyloxynonyl, hexyloxydecyl, heptyloxymethyl, heptyloxyethyl, heptyloxypropyl, heptyloxybutyl, heptyloxypentyl, octyloxymethyl, octyloxyethyl, octyloxypropyl, decyloxymethyl, decyloxyethyl, and decyloxypropyl.

Furthermore, in the case of s = 1, in addition of the above substituents, halomethyl, 1-haloethyl, 1-halopropyl, 1-halobutyl, 1-halopentyl, 1-halohexyl, 1-haloheptyl, 1-halooctyl are exemplified.

When substituent $R_2$ is an optically active group, in respect to an atomic group

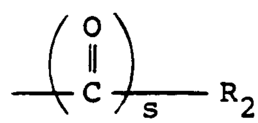

in the formula (V), wherein s is 0, halides or sulfuric acid esters thereof, which are used as an etherification agent in examples of preparing the above-mentioned optically active phenols, can be readily produced from the corresponding optically active alcohols. Some of said optically active alcohols can be obtained from asymmetric reduction of the corresponding ketones. Also, some of others can be derived from the following optically active amino acids and optically active oxyacids which occur in nature or are obtained by resolution:

Alanine, valine, leucine, isoleucine, phenylalanine, serine, threonine, allothreonine, homoserine, alloisoleucine, tert-leucine, 2-aminobutyric acid, norvaline, norleucine, ornithine, lysine, hydroxylysine, phenylglycine, trifluoroalanine, aspartic acid, glutamic acid, lactic acid, mandelic acid, tropic acid, 3-hydroxybutyric acid, malic acid, tartaric acid isopropylmalic acid and the like.

When s is 1, optically active carboxylic acids are used, some of them being obtained by oxidation of the corresponding aminoalcohols or reductive deamination of amino acids. Also, some of others can be derived from the following optically active amino acids and optically active oxyacids which occur in nature or are obtained by resolution:

alanine, valine, leucine, isoleucine, phenylalanine, serine, threonine, allothreonine, homothreonine, alloisoleucine, tert-leucine, 2-aminobutylric acid, norvaline, norleucine, ornithine, lysine, hydroxylysine, phenylglycine, trifluoroalanine, aspartic acid, glutamic acid, lactic acid, mandelic acid, tropic acid, 3-hydroxy butyric acid, malic acid, tartartic acid, isopropyl malic acid and the like.

Typical examples of said optically active carboxylic acids (III) are

(i) 4-(2-alkoxy-1-methyl)ethylbenzoic acid, 4-(2-alkylcarbonyloxy-1-methyl)ethylbenzoic acid, 4-(2-alkoxyalkyloxy-1-methyl)ethylbenzoic acid and 4-(2-alkoxyalkylcarbonyloxy-1-methyl)ethylbenzoic acid, 4-(3-alkoxy-1-methyl)propylbenzoic acid, 4-(4-alkoxy-1-methyl)butylbenzoic acid, 4-(5-alkoxy-1-methyl)-pentylbenzoic acid, 4-(6-alkoxy-1-methyl)hexylbenzoic acid.

Furthermore in the above compounds, those which alkoxy is substituted with alkylcarbonyloxy, alkoxyalkyloxy, alkoxyalkylcarbonyloxy are exemplified.

Furthermore, 4-(2-alkoxy-1-methyl)ethyl-4′-biphenylcarboxylic acid, 4-(2-alkylcarbonyloxy-1-methyl)-ethyl-4′-biphenylcarboxylic acid, 4-(2-alkoxyalkyloxy-1-methyl)ethyl-4′-biphenylcarboxylic acid and 4-(2-alkoxyalkylcarbonyloxy-1-methyl)ethyl-4′-biphenylcarboxylic acid.

4-(3-alkoxy-1-methyl)propyl-4′-biphenylcarboxylic acid, 4-(4-alkoxy-1-methyl)butyl-4′-biphenylcarboxylic acid, 4-(5-alkoxy-1-methyl)pentyl-4′-biphenylcarboxylic acid, 4-(6-alkoxy-1-methyl)hexyl-4′-biphenylcarboxylic acid, and further, in the above compounds, those which alkoxy is substituted with alkylcarbonyloxy, alkoxyalkyloxy, alkoxyalkylcarbonyloxy are exemplified.

(ii) 4-(2-alkoxypropyl)benzoic acid, 4-(2-alkylcarbonyloxypropyl)benzoic acid, 4-(2-alkoxyalkyloxypropyl)-benzoic acid and 4-(2-alkoxyalkylcarbonyloxypropyl)benzoic acid, 4-(2-alkoxypropyl)-4′-biphenylcarboxylic acid, 4-(2-alkylcarbonyloxypropyl)-4′-biphenylcarboxylic acid, 4-(2-alkoxyalkyloxypropyl)-4′-biphenylcarboxylic acid, 4-(2-alkoxyalkylcarbonyloxypropyl)-4′-biphenylcarboxlic acid.

(iii) 4-(3-alkoxybutyl)benzoic acid, 4-(3-alkylcarbonyloxybutyl)benzoic acid, 4-(3-alkoxyalkyloxybutyl)-benzoic acid and 4-(3-alkoxyalkylcarbonyloxybutyl)benzoic acid, 4-(3-alkoxybutyl)-4′-biphenylcarboxylic acid, 4-(3-alkylcarbonyloxybutyl)-4′-biphenylcarboxylic acid, 4-(3-alkoxyalkyloxybutyl)-4′-biphenylcarboxylic acid, 4-(3-alkoxyalkylcarbonyloxybutyl)-4′-biphenylcarboxylic acid.

(iv) 4-(4-alkoxypentyl)benzoic acid, 4-(4-alkylcarbonyloxypentyl)benzoic acid, 4-(4-alkoxyalkyloxypentyl)-benzoic acid and 4-(4-alkoxyalkylcarbonyloxypentyl)benzoic acid.

4-(4-alkoxypentyl)-4′-biphenylcarboxylic acid, 4-(4-alkylcarbonyloxypentyl)-4′-biphenylcarboxylic acid, 4-(4-alkoxyalkyloxypentyl)-4′-biphenylcarboxylic acid, 4-(4-alkoxyalkylcarbonyloxypentyl)-4′-biphenylcarboxylic acid or in the above compounds, the compounds in which 4-substituted pentyl group is 5-alkoxyhexyl, 5-alkylcarbonyloxyhexyl, 5-alkoxyalkyloxyhexyl, 5-alkoxyalkylcarbonyloxyhexyl, 6-alkoxyheptyl, 6-alkylcarbonyloxyheptyl, 6-alkoxyalkyloxyheptyl, 6-alkoxyalkylcarbonyloxyheptyl group.

These optically active carboxylic acids can also be used as acid halides such as acid chloride and acid bromide.

In the above carboxylic acids, alkoxy, alkylcarbonyloxy, alkoxyalkyloxy and alkoxyalkylcarbonyloxy correspond to

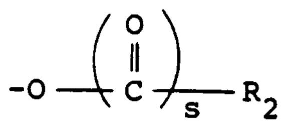

in the above formula (III). The substituent $R_2$ is an alkyl group or alkoxyalkyl group of 1-20 carbon atoms which may be substituted with halogen atom. These alkyl group and alkoxyalkyl group are those of straight chain or branched chain and in case of branched chain, this may be an optically active group.

Examples of these alkyl group and alkoxyalkyl group are the same as exemplified herebefore.

The phenols (II) and carboxylic acid compounds (IV) used as another starting materials in said reactions are mostly the known compounds and can be produced according to the methods disclosed in the literatures.

Examples of such phenols (II) are 4-alkoxyphenol, 4-alkylphenol, 4′-alkoxy-4-hydroxybiphenyl, 4′-alkyl-4-hydroxybiphenyl, 4-alkoxycarbonylphenol, 4-alkylcarbonyloxyphenol, 4′-alkoxycarbonyl-4-hydroxybiphenyl, 4′-alkylcarbonyloxy-4-hydroxyphenyl and the like.

The above alkyl and alkoxy groups have alkyl group of 3-20 carbon atoms and typical examples of the alkyl group are propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl and the like.

It is also possible to react these phenols in the form of metal phenolates with said optically active carboxylic acids (III).

As the carboxylic acids (IV), mention may be made of, for example, 4-alkoxybenzoic acid, 4-alkylbenzoic acid, 4-′alkoxy-4-biphenylcarboxylic acid, 4′-alkyl-4-biphenylcarboxylic acid, 4-alkoxycarbonylbenzoic acid, 4-alkylcarbonyloxybenzoic acid, 4′-alkoxycarbonyl-4-biphenylcarboxylic acid, 4′-alkylcarbonyloxy-4-biphenylcarboxylic acid and the like. These carboxylic acids can also be utilized as acid halides such as acid chlorides and acid bromides.

The alkyl and alkoxy in these carboxylic acids have straight chain alkyl group of 3-20 carbon atoms as mentioned above.

An ordinary esterification method can be applied for the reaction of optically active phenols (V) and carboxylic acid compounds (IV) or the reaction of optically active carboxylic acids (III) and phenols (II), and such reaction can be carried out in the presence or absence of a solvent by using a catalyst.

In case of using a solvent in these reactions, such solvent is selected from those which are inert to the reaction, such as aliphatic or aromatic hydrocarbons, ethers, halogenated hydrocarbons and the like, the typical examples thereof being tetrahydrofuran, ethyl ether, acetone, methyl ethyl ketone, toluene, benzene, chlorobenzene, dichloromethane, dichloroethane, chloroform, carbon tetrachloride, dimethylformamide, hexane and the like. These solvents may be used either singly or in combination. No specific limitations are imposed on the amount of such solvent(s) used.

Since the optically active phenols (V) and the optically active carboxylic acids (III) used in the reation are expensive, it is advisable to use the other starting material, viz, carboxylic acid compounds (IV) or phenols (II), in an excess amount, usually 1 to 4 equivalents, preferably 1 to 2 equivalents to the optically active phenols (V) or optically active carboxylic acid (III).

As the catalyst, there can be used organic or inorganic basic materials such as dimethylaminopyridine, triethylamine, tri-n-butylamine, pyridine, picoline, collidine, imidazole, sodium carbonate, sodium methylate, potassium hydrogencarbonate and the like.

Organic or inorganic acids such as toluenesulfonic acid, methanesulfonic acid, sulfuric acid, etc., are also usable as catalyst.

It is also possible to use a condensing reagent in the case of dehydration for the free carboxylic acids and phenols.

As the condensing reagent, there can be used organic materials such as N,N′-dicyclohexyl carbodiimide, N-cyclohexyl-N′-(4-diethylamino)cyclohexyl carbodiimide, imidazoylimidazole and the like.

If necessary there can be used organic amines such as 4-pyrollidinopyridine, pyridine, triethylamine and the like.

The amount of a condensing reagent is usually 1 to 1.2 equivalents to the carboxylic acid.

The amount of the organic amine is usually 0.01 to 0.2 equivalent to a condensing reagent.

The amount of the catalyst to be used is not specified as it varies depending on the type of the starting materials used, their combination with the catalyst used and other factors, but in case of using an acid halide as a starting material, a basic material is used as catalyst in an amount not less than one equivalent to said acid halide,

The reaction temperature is usually -30 to 100 °C. The reaction time is not subject to any specific limitations.

After the reaction has been completed, the reaction product is subjected to the ordinary separating means such as extraction, separation of liquid phase, concentration, etc., to isolate the objective optically active aromatic compound of the formula (I). If necessary, the product may be purified by column chromatography, recrystallization or other means.

The optically active aromatic compound to be thus obtained are actually exemplified as follows [In these examples, $(C_{1-20})$ and $(C_{3-20})$ mean "having 1-20 carbon atoms" and "having 3-20 carbon atom", respectively].

(i) X = -OCO-

(i-1) 4-[2-alkoxy$(C_{1-20})$-1-methyl]ethylbenzoic acid 4-[alkyl$(C_{3-20})$]phenyl ester,
4-[2-alkoxy$(C_{1-20})$-1-methyl]ethylbenzoic acid 4-[alkyl$(C_{3-20})$oxy]phenyl ester,
4-[2-alkoxy$(C_{1-20})$-1-methyl]ethylbenzoic acid 4-[alkyl$(C_{3-20})$oxycarbonyl]phenyl ester,
4-[2-alkoxy$(C_{1-20})$-1-methyl]ethylbenzoic acid 4-[alkyl$(C_{3-20})$carbonyloxy]phenyl ester,
4-[2-alkoxy$(C_{1-20})$-1-methyl]ethylbenzoic acid 4-[alkyl$(C_{3-20})$]biphenylyl ester,
4-[2-alkoxy$(C_{1-20})$-1-methyl]ethylbenzoic acid 4-[alkyl$(C_{3-20})$oxy]biphenylyl ester,
4-[2-alkoxy$(C_{1-20})$-1-methyl]ethylbenzoic acid 4-[alkyl$(C_{3-20})$oxycarbonyl]biphenyl ester,
4-[2-alkoxy$(C_{1-20})$-1-methyl]ethylbenzoic acid 4-[alkyl$(C_{3-20})$carbonyloxy]biphenyl ester.
4-[2-alkoxy$(C_{1-20})$-1-methyl]ethyl-4′-biphenylcarboxylic acid-4-[alkyl$(C_{3-20})$]phenylester,
4-[2-alkoxy$(C_{1-20})$-1-methyl-4′-biphenylcarboxylic acid-4-[alkyl$(C_{3-20})$oxy]phenylester,
4-[2-alkoxy$(C_{1-20})$-1-methyl]ethyl-4′-biphenylcarboxylic acid-4-[alkyl$(C_{3-20})$oxycarbonyl]phenylester,
4-[2-alkoxy$(C_{1-20})$-1-methyl]ethyl-4′-biphenyl0 carboxylic acid 4-[alkyl$(C_{3-20})$carbonyloxy]phenylester,
4-[2-alkoxy$(C_{1-20})$-1-methyl]ethyl-4′-biphenylcarboxylic acid 4-[alkyl$(C_{3-20})$]biphenylylester,
4-[2-alkoxy$(C_{1-20})$-1-methyl]ethyl-4′-biphenyl carboxylic acid 4-[alkyl$(C_{3-20})$oxy]biphenylester,
4-[2-alkoxy$(C_{1-20})$-1-methyl]ethyl-4′-biphenylcarboxylic acid 4-[alkyl$(C_{3-20})$oxycarbonyl]biphenylylester,
4-[2-alkoxy$(C_{1-20})$-1-methyl]ethyl-4′-biphenylcarboxylic acid 4-[alkyl$(C_{3-20})$carbonyloxy]biphenylester.

Furthermore, mentioned may be made of the above-enumerated compounds where the substituent [2-alkoxy$(C_{1-20})$-1-methyl]ethyl is replaced with one of the following substituents.

[3-alkoxy$(C_{1-20})$-1-methyl]propyl group,
[4-alkoxy$(C_{1-20})$-1-methyl]butyl group,
[5-alkoxy$(C_{1-20})$-1-methyl]propyl group,
[5-alkoxy$(C_{1-20})$-1-methyl]hexyl group,

(i-2) 4-[2-alkyl($C_{1-20}$)carbonyloxy-1-methyl]ethylbenzoic acid 4-[alkyl($C_{3-20}$)]phenyl ester,
4-[2-alkyl($C_{1-20}$)carbonyloxy-1-methyl]ethylbenzoic acid 4-[alkyl($C_{3-20}$)oxy]phenyl ester,
4-[2-alkyl($C_{1-20}$)carbonyloxy-1-methyl]ethylbenzoic acid 4-[alkyl($C_{3-20}$)oxycarbonyl]phenyl ester,
4-[2-alkyl($C_{1-20}$)carbonyloxy-1-methyl]ethylbenzoic acid 4-[alkyl($C_{3-20}$)carbonyloxy]phenyl ester,
4-[2-alkyl($C_{1-20}$)carbonyloxy-1-methyl]ethylbenzoic acid 4-[alkyl($C_{3-20}$)]biphenylyl ester,
4-[2-alkyl($C_{1-20}$)carbonyloxy-1-methyl]ethylbenzoic acid 4-[alkyl($C_{3-20}$)oxy]biphenylyl ester,
4-[2-alkyl($C_{1-20}$)carbonyloxy-1-methyl]ethylbenzoic acid 4-[alkyl($C_{3-20}$)oxycarbonyl]biphenylyl ester,
4-[2-alkyl($C_{1-20}$)carbonyloxy-1-methyl]ethylbenzoic acid 4-[alkyl($C_{3-20}$)carbonyloxy]biphenylyl ester.
4-[2-alkyl($C_{1-20}$)carbonyloxy-2-methyl]ethyl-4′-biphenylcarboxylic acid 4-[alkyl($C_{3-20}$)phenylester,
4-[2-alkyl($C_{1-20}$)carbonyloxy-1-methyl]ethyl-4′biphenylcarboxylic acid 4-[alkyl($C_{3-20}$)oxy]phenylester,
4-[2-alkyl($C_{1-20}$)carbonyloxy-1-methyl]ethyl-4′-biphenylcarboxylic acid 4-[alkyl($C_{3-20}$)oxycarbonyl]phenylester,
4-[2-alkyl($C_{1-20}$)carbonyloxy-1-methyl]ethyl-4′-biphenylcarboxylic acid 4-[alkyl($C_{3-20}$)carbonyloxy]phenylester,
4-[2-alkyl($C_{1-20}$)carbonyloxy-1-methyl]ethyl-4′-biphenylcarboxylic acid 4-[alkyl($C_{3-20}$)]biphenylester,
4-[2-alkyl($C_{1-20}$)carbonyloxy-1-methyl]ethyl-4′-biphenylcarboxylic acid 4-[alkyl($C_{3-20}$)oxy]biphenylester,
4-[2-alkyl($C_{1-20}$)carbonyloxy-1-methyl]ethyl-4′-biphenylcarboxylic acid 4-[alkyl($C_{3-20}$)oxycarbonyl]biphenylylester,
4-[2-alkyl($C_{1-20}$)carbonyloxy-1-methyl]ethyl-4′-biphenylcarboxylic acid 4-(alkyl($C_{3-20}$)carbonyloxy]biphenylylester.

Furthermore, mention may be made of the above-enumerated compounds where the substituents.
[3-[alkyl($C_{1-20}$)carbonyloxy-1-methyl]propyl group,
[4-[alkyl($C_{1-20}$)carbonyloxy-1-methyl]butyl group,
[5-[alkyl($C_{1-20}$)carbonyloxy-1-methyl]pentyl group,
[5-[alkyl($C_{1-20}$)carbonyloxy-1-methyl]hexyl group,

(i-3) 4-[2-alkoxyalkyloxy($C_{1-20}$)-1-methyl]ethylbenzoic acid 4-[alkyl($C_{3-20}$)]phenyl ester,
4-[2-alkoxyalkyloxy($C_{1-20}$)-1-methyl]ethylbenzoic acid 4-[alkyl($C_{3-20}$)oxy]phenyl ester,
4-[2-alkoxyalkyloxy($C_{1-20}$)-1-methyl]ethylbenzoic acid 4-[alkyl($C_{3-20}$)oxycarbonyl]phenyl ester,
4-[2-alkoxyalkyloxy($C_{1-20}$)-1-methyl]ethylbenzoic acid 4-[alkyl($C_{3-20}$)carbonyloxy]phenyl ester,
4-[2-alkoxyalkyloxy($C_{1-20}$)-1-methyl]ethylbenzoic acid 4-[alkyl($C_{3-20}$)]biphenylyl ester,
4-[2-alkoxyalkyloxy($C_{1-20}$)-1-methyl]ethylbenzoic acid 4-[alkyl($C_{3-20}$)oxy]biphenylyl ester,
4-[2-alkoxyalkyloxy($C_{1-20}$)-1-methyl]ethylbenzoic acid 4-[alkyl($C_{3-20}$)oxycarbonyl]biphenylyl ester,
4-[2-alkoxyalkyloxy($C_{1-20}$)-1-methyl]ethylbenzoic acid [4-alkyl($C_{3-20}$)carbonyloxy]biphenylyl ester.
4-[2-alkoxyalkyloxy($C_{1-20}$)-1-methyl]ethyl-4′-biphenylcarboxylic acid 4-[alkyl($C_{3-20}$)]phenylester,
4-[2-alkoxyalkyloxy($C_{1-20}$)-1-methyl]ethyl-4′-biphenylcarboxylic acid 4-[alkyl($C_{3-20}$)oxy]phenylester,
4-[2-alkoxyalkyloxy($C_{1-20}$)-1-methyl]ethyl-4′-biphenylcarboxylic acid 4-[alkyl($C_{3-20}$)oxycarbonyl]-phenylester,
4-[2-alkoxyalkyloxy($C_{1-20}$)-1-methyl]ethyl-4′-biphenylcarboxylic acid 4-[alkyl($C_{3-20}$)carbonyloxy]-phenylester,
4-[2-alkoxyalkyloxy($C_{1-20}$)-1-methyl]ethyl-4′-biphenylcarboxylic acid 4-[alkyl($C_{3-20}$)]biphenylylester,
4-[2-alkoxyalkyloxy($C_{1-20}$)-1-methyl]ethyl-4′-biphenylcarboxylic acid 4-[alkyl($C_{3-20}$)oxy]biphenylylester,
4-[2-alkoxyalkyloxy($C_{1-20}$)-1-methyl]ethyl-4′-biphenylcarboxylic acid 4-[alkyl($C_{3-20}$)oxycarbonyl]-biphenylylester,
4-[2-alkoxyalkyloxy($C_{1-20}$)-1-methyl]ethyl-4′-biphenylcarboxylic acid 4-[alkyl($C_{3-20}$)carbonyloxy]-biphenylylester.

Furthermore, mention may be made of the above enumerated compounds where the substituent [2-alkoxyalkyloxy($C_{1-20}$)-1-methyl]ethyl is replaced with one of the following substituents.
[3-alkoxyalkyloxy($C_{1-20}$)-1-methyl]propyl group,

[4-alkoxyalkyloxy($C_{1-20}$)-1-methyl]butyl group,
[5-alkoxyalkyloxy($C_{1-20}$)-1-methyl]pentyl group,
[6-alkoxyalkyloxy($C_{1-20}$)-1-methyl]hexyl group,

(i-4) 4-[2-alkoxyalkylcarbonyloxy($C_{1-20}$)-1-methyl]ethylbenzoic acid 4-[alkyl($C_{3-20}$)]phenylester,
4-[2-alkoxyalkylcarbonyloxy($C_{1-20}$)-1-methyl]ethylbenzoic acid 4-[alkyl($C_{3-20}$)oxy]phenylester,
4-[2-alkoxyalkylcarbonyloxy($C_{1-20}$)-1-methyl]ethylbenzoic acid 4-[alkyl($C_{3-20}$)oxycarbonyl]phenylester,
4-[2-alkoxyalkylcarbonyloxy($C_{1-20}$)-1-methyl]ethylbenzoic acid 4-[alkyl($C_{3-20}$)carbonyloxy]phenylester,
4-[2-alkoxyalkylcarbonyloxy($C_{1-20}$)-1-methyl]ethylbenzoic acid 4-[alkyl($C_{3-20}$)]biphenylylester,
4-[2-alkoxyalkylcarbonyloxy($C_{1-20}$)-1-methyl]ethylbenzoic acid 4-[alkyl($C_{3-20}$)oxy)biphenylylester,
4-[2-alkoxyalkylcarbonyloxy($C_{1-20}$)-1-methyl]ethylbenzoic acid 4-[alkyl($C_{3-20}$)oxycarbonyl]biphenylester,
4-[2-alkoxyalkylcarbonyloxy($C_{1-20}$)-1-methyl]ethylbenzoic acid 4-[alkyl($C_{3-20}$)carbonyloxy[biphenylester.
4-[2-alkoxyalkylcarbonyloxy($C_{1-20}$)-1-methyl]ethyl-4′-biphenylcarboxylic acid 4-[alkyl($C_{3-20}$)]phenylester,
4-[2-alkoxyalkylcarbonyloxy($C_{1-20}$)-1-methyl]ethyl-4′-biphenylcarboxylic acid 4-[alkyl($C_{3-20}$)oxy]-phenylester,
4-[2-alkoxyalkylcarbonyloxy($C_{1-20}$)-1-methyl]ethyl-4′-biphenylcarboxylic acid 4-[alkyl($C_{3-20}$)oxycarbonyl]phenylester,
4-[2-alkoxyalkylcarbonyloxy($C_{1-20}$)-1-methyl]ethyl-4′-biphenylcarboxylic acid 4-[alkyl($C_{3-20}$)carbonyloxy]phenyleser,
4-[2-alkoxyalkylcarbonyloxy($C_{1-20}$)-1-methyl]ethyl-4′-biphenylcarboxylic acid 4-[alkyl($C_{3-20}$)]biphenylèlester,
4-[2-alkoxyalkylcarbonyloxy($C_{1-20}$)-1-methyl]ethyl-4′-biphenylcarboxylic acid 4-[alkyl($C_{3-20}$)oxy]-biphenylylester,
4-[2-alkoxyalkylcarbonyloxy($C_{1-20}$)-1-methyl]ethyl-4′-biphenylcarboxylic acid 4-[alkyl($C_{3-20}$)oxycarbonyl]biphenylylester,
4-[2-alkoxyalkylcarbonyloxy($C_{1-20}$)-1-methyl]ethyl-4′-biphenylcarboxylic acid 4-[alkyl($C_{3-20}$)carbonyloxy]biphenylylester,

Further, the compounds in which substituent [2-alkoxyalkylcarbonyloxy($C_{1-20}$)-1-methyl]ester in the above compounds is substituted with anyone of the following substituents are exemplified [3-alkoxyalkylcarbonyloxy($C_{1-20}$)-1-methyl]propyl group, [4-alkoxyalkylcarbonyloxy($C_{1-20}$)-1-methyl]-butyl group, [5-alkoxyalkylcarbonyloxy($C_{1-20}$)-1-methyl]pentyl group, [6-alioxyalkylcarbonyloxy-($C_{1-20}$)-1-methyl]hexyl group.

(i-5) 4-[2-Alkyl($C_{1-20}$)oxypropyl]benzoic acid 4-[alkyl($C_{3-20}$)]phenyl ester,
4-[2-alkyl($C_{1-20}$)oxypropyl]benzoic acid 4-[alkyl($C_{3-20}$)oxy]phenyl ester,
4-[2-alkyl($C_{1-20}$)oxypropyl]benzoic acid 4′-[alkyl($C_{3-20}$)]biphenyl ester,
4-[2-alkyl($C_{1-20}$)oxypropyl]benzoic acid 4′-[alkyl($C_{3-20}$)oxy]biphenyl ester,
4-[2-alkyl($C_{1-20}$)oxypropyl]benzoic acid 4-[alkyl($C_{3-20}$)oxycarbonyl]phenyl ester,
4-[2-alkyl($C_{1-20}$)oxypropyl]benzoic acid 4-[alkyl($C_{3-20}$)carbonyloxy]phenyl ester,
4-[2-alkyl($C_{1-20}$)oxypropyl]benzoic acid 4′-[alkyl($C_{3-20}$)oxycarbonyl]biphenyl ester,
4-[2-alkyl($C_{1-20}$)oxypropyl]benzoic acid 4′-[alkyl($C_{3-20}$)carbonyloxybiphenylyl ester,
4-[2-alkyl($C_{1-20}$)carbonyloxypropyl]benzoic acid 4-[alkyl($C_{3-20}$)]phenyl ester,
4-[2-alkyl($C_{1-20}$)carbonyloxypropyl]benzoic acid 4-[alkyl($C_{3-20}$)oxy]phenyl ester,
4-[2-alkyl($C_{1-20}$)carbonyloxypropyl]benzoic acid 4′-[alkyl($C_{3-20}$)biphenyl ester,
4-[3-alkyl($C_{1-20}$)carbonyloxypropyl]benzoic acid 4′-[alkyl($C_{3-20}$)oxy]biphenyl ester,
4-[2-alkyl($C_{1-20}$)carbonyloxypropyl]benzoic acid [4-alkyl($C_{3-20}$)carbonyloxy]phenyl ester,
4-[2-alkyl($C_{1-20}$)carbonyloxypropyl]benzoic acid [4-alkyl($C_{3-20}$)oxycarbonyl]phenyl ester,
4-[2-alkyl($C_{1-20}$)carbonyloxypropyl]benzoic acid 4′-[alkyl($C_{3-20}$)carbonyloxy]biphenylyl ester,
4-[2-alkyl($C_{1-20}$)carbonyloxypropyl]benzoic acid 4′-[alkyl($C_{3-20}$)oxycarbonyl]biphenylyl ester,
4-[2-alkyl($C_{1-20}$)oxypropyl]-4′-biphenylcarboxylic acid 4-[alkyl($C_{3-20}$)]phenylester,
4-[2-alkyl($C_{1-20}$)oxypropyl]-4′-biphenylcarboxylic acid 4-[alkyl($C_{3-20}$)oxy]phenylester,
4-[2-alkyl($C_{1-20}$)oxypropyl]-4′-biphenylcarboxylic acid 4′-[alkyl($C_{3-20}$)]biphenylylester,
4-[2-alkyl($C_{1-20}$)oxypropyl]-4′-biphenylcarboxylic acid 4′-[alkyl($C_{3-20}$)oxy]biphenylylester,
4-[2-alkyl($C_{1-20}$)oxypropyl]-4′-biphenylcarboxylic acid 4-[alkyl($C_{3-20}$)oxycarbonyl]phenylester,
4-[2-alkyl($C_{1-20}$)oxypropyl]-4′-biphenylcarboxylic acid 4-[alkyl($C_{3-20}$)carbonyloxy]phenylester,

4-[2-alkyl($C_{1-20}$)oxypropyl]-4'-biphenylcarboxylic acid 4'-[alkyl($C_{3-20}$)oxycarbonyl]biphenylylester,
4-[2-alkyl($C_{1-20}$)oxypropyl]-4'-biphenylcarboxylic acid 4'-[alkyl($C_{3-20}$)carbonyloxy]biphenylester,
4-[2-alkyl($C_{1-20}$)carbonyloxypropyl]-4'-biphenylcarboxylic acid 4-[alkyl($C_{3-20}$)]phenylester,
4-[2-alkyl($C_{1-20}$)carbonyloxypropyl]-4'-biphenylcarboxylic acid 4-[alkyl($C_{3-20}$)oxy]phenylester,
4-[2-alkyl($C_{1-20}$)carbonyloxypropyl]-4'-biphenylcarboxylic acid 4'-[alkyl($C_{3-20}$)]biphenylylester,
4-[3-alkyl($C_{1-20}$)carbonyloxypropyl]-4'-biphenylcarboxylic acid 4'-[alkyl($C_{3-20}$)oxy]biphenylylester,
4-[2-alkyl($C_{1-20}$)carbonyloxypropyl]-4'-biphenylcarboxylic acid [4-alkyl($C_{3-20}$)carbonyloxy]phenylester,
4-[2-alkyl($C_{1-20}$)carbonyloxypropyl]-4'-biphenylcarboxylic acid [4-alkyl($C_{3-20}$)oxycarbonyl]phenylester,
4-[2-alkyl($C_{1-20}$)carbonyloxypropyl]-4'-biphenylcarboxylic acid-[alkyl($C_{3-20}$)carbonyloxy]biphenylylester,
4-[2-alkyl($C_{1-20}$)carbonyloxypropyl]-4'-biphenylcarboxylic acid 4'-[alkyl($C_{3-20}$)oxycarbonyl]biphenylylester,
4-[2-alkoxyalkyl($C_{1-20}$)oxypropyl]benzoic acid 4-[alkyl($C_{3-20}$)]phenyl ester,
4-[2-alkoxyalkyl($C_{1-20}$)oxypropyl]benzoic acid 4-[alkyl($C_{3-20}$)oxy]phenyl ester,
4-[2-alkoxyalkyl($C_{1-20}$)oxypropyl]benzoic acid 4'-[alkyl($C_{3-20}$)]biphenylyl ester,
4-[2-alkoxyalkyl($C_{1-20}$)oxypropyl]benzoic acid 4'-[alkyl($C_{3-20}$)oxy]biphenylyl ester,
4-[2-alkoxyalkyl($C_{1-20}$)oxypropyl]benzoic acid 4-[alkyl($C_{3-20}$)carbonyloxy]phenyl ester,
4-[2-alkoxyalkyl($C_{1-20}$)oxypropyl]benzoic acid 4-(alkyl($C_{3-20}$)oxycarbonyl]phenyl ester,
4-[2-alkoxyalkyl($C_{1-20}$)oxypropyl]benzoic acid 4'-[alkyl($C_{3-20}$)carbonyloxy]biphenylyl ester,
4-[2-alkoxyalkyl($C_{1-20}$)oxypropyl]benzoic acid 4'-[alkyl($C_{3-20}$)oxycarbonyl]biphenylyl ester,
4-[2-alkoxyalkyl($C_{1-20}$)carbonyloxypropyl]benzoic acid 4-[alkyl($C_{3-20}$)phenyl ester,
4-[2-alkoxyalkyl($C_{1-20}$)carbonyloxypropyl]benzoic acid 4-[alkyl($C_{3-20}$)oxy]phenyl ester,
4-[2-alkoxyalkyl($C_{1-20}$)carbonyloxypropyl]benzoic acid 4'-[alkyl($C_{3-20}$)]biphenylyl ester,
4-[2-alkoxyalkyl($C_{1-20}$)carbonyloxypropyl]benzoic acid 4'-[alkyl($C_{3-20}$)oxy]biphenylyl ester,
4-[2-alkoxyalkyl($C_{1-20}$)carbonyloxypropyl]benzoic acid 4-[alkyl($C_{3-20}$)carbonyloxy]phenyl ester,
4-[2-alkoxyalkyl($C_{1-20}$)carbonyloxypropyl]benzoic acid 4-[alkyl($C_{3-20}$)oxycarbonyl]phenyl ester,
4-[2-alkoxyalkyl($C_{1-20}$)carbonyloxypropyl]benzoic acid 4'-[alkyl($C_{3-20}$)carbonyloxy]biphenylyl ester,
4-[2-alkoxyalkyl($C_{1-20}$)carbonyloxypropyl]benzoic acid 4'-[alkyl($C_{3-20}$)oxycarbonyl]biphenylyl ester.
4-[2-alkoxyalkyl($C_{1-20}$)oxypropyl]-4'-biphenylcarboxylic acid 4-[alkyl($C_{3-20}$)]phenylester,
4-[2-alkoxyalkyl($C_{1-20}$)oxypropyl]-4'-biphenylcarboxylic acid 4-[alkyl($C_{3-20}$)oxy]phenylester,
4-[2-alkoxyalkyl($C_{1-20}$)oxypropyl]-4'-biphenylcarboxylic acid 4'-[alkyl($C_{3-20}$)]biphenylylester,
4-[2-alkoxyalkyl($C_{1-20}$)oxypropyl]-4'-biphenylcarboxylic acid 4'-[alkyl($C_{3-20}$)oxy)biphenylylester,
4-[2-alkoxyalkyl($C_{1-20}$)oxypropyl]-4'-biphenylcarboxylic acid 4-[alkyl($C_{3-20}$)carbonyloxy]phenylester,
4-[2-alkoxyalkyl($C_{1-20}$)oxypropyl]-4'-biphenylcarboxylic acid 4-[alkyl($C_{3-20}$)oxycarbonyl]phenylester,
4-[2-alkoxyalkyl($C_{1-20}$)oxypropyl]-4'-biphenylcarboxylic acid 4'-[alkyl($C_{3-20}$)carbonyloxy]biphenylylester,
4-[2-alkoxyalkyl($C_{1-20}$)oxypropyl]-4'-biphenylcarboxylic acid 4'-[alkyl($C_{3-20}$)oxycarbonyl]biphenylylester,
4-[2-alkoxyalkyl($C_{1-20}$)carbonyloxypropyl]-4'-biphenylcarboxylic acid 4-[alkyl($C_{3-20}$)]phenylester,
4-[2-alkoxyalkyl($C_{1-20}$)carbonyloxypropyl]-4'-biphenylcarboxylic acid 4-[alkyl($C_{3-20}$)oxy]phenylester,
4-[2-alkoxyalkyl($C_{1-20}$)carbonyloxypropyl]-4'-biphenylcarbonylic acid 4'-[alkyl($C_{3-20}$)]biphenylylester,
4-[2-alkoxyalkyl($C_{1-20}$)carbonyloxypropyl]-4'-biphenylcarboxylic acid 4'-[alkyl($C_{3-20}$)oxy]biphenylester,
4-[2-alkoxyalkyl($C_{1-20}$)carbonyloxypropyl]-4'-biphenylcarboxylic acid 4-[alkyl($C_{3-20}$)carbonyloxy]-phenylester,
4-[2-alkoxyalkyl($C_{1-20}$)carbonyloxypropyl]-4'-biphenylcarboxylic acid 4-[alkyl($C_{3-20}$)oxycarbonyl]-phenylester,
4-[2-alkoxyalkyl($C_{1-20}$)carbonyloxypropyl]-4'-biphenylcarboxylic acid 4'-[alkyl($C_{3-20}$)carbonyloxy]-biphenylylester,
4-[2-alkoxyalkyl($C_{1-20}$)carbonyloxypropyl]-4'-biphenylcarboxylic acid 4'-[alkyl($C_{3-20}$)oxycarbonyl]-

biphenylylester.
(i-6) 4-[3-alkyl($C_{1-20}$)oxybutyl]benzoic acid 4-[alkyl($C_{3-20}$)]phenyl ester,
4-[3-alkyl($C_{1-20}$)oxybutyl]benzoic acid 4-[alkyl($C_{3-20}$)oxyphenyl ester,
4-[3-alkyl($C_{1-20}$)oxybutyl]benzoic acid 4′-[alkyl($C_{3-20}$)]biphenylyl ester,
4-[3-alkyl($C_{1-20}$)oxybutyl]benzoic acid 4′-[alkyl($C_{3-20}$)oxy]biphenylyl ester,
4-[3-alkyl($C_{1-20}$)oxybutyl]benzoic acid 4-[alkyl($C_{3-20}$)oxycarbonyl]phenyl ester,
4-[3-alkyl($C_{1-20}$)oxybutyl]benzoic acid 4-[alkyl($C_{3-20}$)carbonyloxy]phenyl ester,
4-[3-alkyl($C_{1-20}$)oxybutyl]benzoic acid 4′-[alkyl($C_{3-20}$)oxycarbonyl]biphenylyl ester,
4-[3-alkyl($C_{1-20}$)oxybutyl]benzoic acid 4′-[alkyl($C_{3-20}$)carbonyloxy]biphenylyl ester,
4-[3-alkyl($C_{1-20}$)carbonyloxybutyl]benzoic acid 4-[alkyl($C_{3-20}$)]phenyl ester,
4-[3-alkyl($C_{1-20}$)carbonyloxybutyl]benzoic acid 4-[alkyl($C_{3-20}$)oxy]phenyl ester,
4-[3-alkyl($C_{1-20}$)carbonyloxybutyl]benzoic acid 4′-[alkyl($C_{3-20}$)]biphenyl ester,
4-[3-alkyl($C_{1-20}$)carbonyloxybutyl]benzoic acid 4′-[alkyl($C_{3-20}$)oxyl]biphenyl ester,
4-[3-alkyl($C_{1-20}$)carbonyloxybutyl]benzoic acid [4-alkyl($C_{3-20}$)carbonyloxy]phenyl ester,
4-[3-alkyl($C_{1-20}$)carbonyloxybutyl]benzoic acid [4-alkyl($C_{3-20}$)]oxycarbonyl]phenyl ester,
4-[3-alkyl($C_{1-20}$)carbonyloxybutyl]benzoic acid 4′-[alkyl($C_{3-20}$)carbonyloxy]biphenylyl ester,
4-[3-alkyl($C_{1-20}$)carbonyloxybutyl]benzoic acid 4′-[alkyl($C_{3-20}$)oxycarbonyl]biphenylyl ester,
4-[3-alkyl($C_{1-20}$)oxybutyl]-4′-biphenylcarboxylic acid 4-[alkyl($C_{3-20}$]phenylester,
4-[3-alkyl($C_{1-20}$)oxybutyl]-4′-biphenylcarboxylic acid 4-[alkyl($C_{3-20}$)oxy]phenylester,
4-[3-alkyl($C_{1-20}$)oxybutyl]-4′-biphenylcarboxylic acid 4′-[alkyl($C_{3-20}$)]biphenylylester,
4-[3-alkyl($C_{1-20}$)oxybutyl]-4′-biphenylcarboxylic acid 4′-[alkyl($C_{3-20}$)oxy]biphenylylester,
4-[3-alkyl($C_{1-20}$)oxybutyl]-4′-biphenylcarboxylic acid 4-[alkyl($C_{3-20}$)oxycarbonyl]phenylester,
4-[3-alkyl($C_{1-20}$)oxybutyl]-4′-biphenylcarboxylic acid 4-[alkyl($C_{3-20}$)carbonyloxy]phenylester,
4-[3-alkyl($C_{1-20}$)oxybutyl]-4′-biphenylcarboxylic acid 4′-[alkyl($C_{3-20}$)oxycarbonyl]biphenylester,
4-[3-alkyl($C_{1-20}$)oxybutyl]-4′-biphenylcarboxylic acid 4′-[alkyl($C_{3-20}$)carbonyloxy]biphenylylester,
4-[3-alkyl($C_{1-20}$)carbonyloxybutyl]-4′-biphenylcarboxylic acid 4-[alkyl($C_{3-20}$)]phenylester,
4-[3-alkyl($C_{1-20}$)carbonyloxybutyl]-4′-biphenylcarboxylic acid 4-[alkyl($C_{3-20}$)oxy]phenylester,
4-[3-alkyl($C_{1-20}$)carbonyloxybutyl-4′-biphenylcarboxylic acid 4′-[alkyl($C_{3-20}$)]biphenylylester,
4-[3-alkyl($C_{1-20}$)carbonyloxybutyl]-4′-biphenylcarboxylic acid 4′-[alkyl($C_{3-20}$)oxy]biphenylylester,
4-[3-alkyl($C_{1-20}$)carbonyloxybutyl]-4′-biphenylcarboxylic acid [4-alkyl($C_{3-20}$)carbonyloxy]phenylester,
4-[3-alkyl($C_{1-20}$)carbonyloxybutyl]-4′-biphenylcarboxylic acid [4-alkyl($C_{3-20}$)oxycarbonyl]phenylester,
4-[3-alkyl($C_{1-20}$)carbonyloxybutyl]-4′-biphenylcarboxylic acid 4′-[alkyl($C_{3-20}$)carbonyloxy]biphenylylester,
4-[3-alkyl($C_{1-20}$)carbonyloxybutyl]-4′-biphenylcarboxylic acid 4′-[alkyl($C_{3-20}$)oxycarbonyl]biphenylester.
4-[3-alkoxyalkyl($C_{1-20}$)oxybutyl]benzoic acid 4-[alkyl($C_{3-20}$)]phenyl ester,
4-[3-alkoxyalkyl($C_{1-20}$)oxybutyl]benzoic acid 4-[alkyl($C_{3-20}$)oxy]phenyl ester,
4-[3-alkoxyalkyl($C_{1-20}$)oxybutyl]benzoic acid 4′-[alkyl($C_{3-20}$)]biphenylyl ester,
4-[3-alkoxyalkyl($C_{1-20}$)oxybutyl]benozic acid 4′-[alkyl($C_{3-20}$)oxy]biphenylyl ester,
4-[3-alkoxyalkyl($C_{1-20}$)oxybutyl]benzoic acid 4-[alkyl($C_{3-20}$)carbonyloxy]phenyl ester,
4-[3-alkoxyalkyl($C_{1-20}$)oxybutyl]benzoic acid 4-[alkyl(C3020)oxycarbonyl]phenyl ester,
4-[3-alkoxyalkyl($C_{1-20}$)oxybutyl]benzoic acid 4′-[alkyl($C_{3-20}$)carbonyloxy]biphenylyl ester,
4-[3-alkoxyalkyl($C_{1-20}$)oxybutyl]benzoic acid 4′-[alkyl($C_{3-20}$)oxycarbonyl]biphenylyl ester,
4-[3-alkoxyalkyl($C_{1-20}$)carbonyloxybutyl]benzoic acid 4-[alkyl($C_{3-20}$)]phenyl ester,
4-[3-alkoxyalkyl($C_{1-20}$)carbonyloxybutyl]benzoic acid 4-[alkyl($C_{3-20}$)oxy]phenyl ester,
4-[3-alkoxyalkyl($C_{1-20}$)carbonyloxybutyl]benzoic acid 4′-[alkyl($C_{3-20}$)]biphenylyl ester,
4-[3-alkoxyalkyl($C_{1-20}$)carbonyloxybutyl]benzoic acid 4′-[alkyl($C_{3-20}$)oxy]biphenylyl ester,
4-[3-alkoxyalkyl($C_{1-20}$)carbonyloxybutyl]benzoic acid 4-[alkyl($C_{3-20}$)carbonyloxy]phenyl ester,
4-[3-alkoxyalkyl($C_{1-20}$)carbonyloxybutyl]benzoic acid 4-[alkyl($C_{3-20}$)oxycarbonyl]phenyl ester,
4-[3-alkoxyalkyl($C_{1-20}$)carbonyloxybutyl]benzoic acid 4′-[alkyl($C_{3-20}$)carbonyloxy]biphenylyl ester,
4-[3-alkoxyalkyl($C_{1-20}$)carbonyloxybutyl]benzoic acid 4′-[alkyl($C_{3-20}$)oxycarbonyl]biphenylyl ester.
4-[3-alkoxyalkyl($C_{1-20}$)oxybutyl]-4′-biphenylcarboxylic acid 4-[alkyl($C_{3-20}$)phenylester,
4-[3-alkoxyalkyl($C_{1-20}$oxybutyl]-4′-biphenylcarboxylic acid 4-[alkyl($C_{3-20}$)oxy]phenylester,
4-[3-alkoxyalkyl($C_{1-20}$)oxybutyl]-4′-biphenylcarboxylic acid 4′-[alkyl($C_{3-20}$)]biphenylylester,
4-[3-alkoxyalkyl($C_{1-20}$)oxybutyl]-4′-biphenylcarboxylic acid 4′-[alkyl($C_{3-20}$)oxy]biphenylylester,
4-[3-alkoxyalkyl($C_{1-20}$)oxybutyl]-4′-biphenylcarboxylic acid 4-[alkyl($C_{3-20}$)carbonyloxy]phenyles-

ter,

4-[3-alkoxyalkyl($C_{1-20}$)oxybutyl]-4'-biphenylcarboxylic acid 4-[alkyl($C_{3-20}$)oxycarbonyl]phenylester,

4-[3-alkoxyalkyl($C_{1-20}$)oxybutyl]-4-biphenylcarboxylic acid 4'-[alkyl($C_{3-20}$)carbonyloxy]biphenylester,

4-[3-alkoxyalkyl($C_{1-20}$)oxybutyl]-4'-biphenylcarboxylic acid 4'-[alkyl($C_{3-20}$)oxycarbonyl]-biphenylylester,

4-[3-alkoxyalkyl($C_{1-20}$)carbonyloxybutyl]-4'-biphenylcarboxylic acid 4-[alkyl($C_{3-20}$)phenylester,

4-[3-alkoxyalkyl($C_{1-20}$)carbonyloxybutyl]-4'-biphenylcarboxylic acid 4-[alkyl($C_{3-20}$)oxy]phenylester,

4-[3-alkoxyalkyl($C_{1-20}$)carbonyloxybutyl]-4'-biphenylcarboxylic acid 4'-[alkyl($C_{3-20}$)]biphenylylester,

4-[3-alkoxyalkyl($C_{1-20}$)carbonyloxybutyl]-4'-biphenylcarboxylic acid 4'-[alkyl($C_{3-20}$)oxy]biphenylylester,

4-[3-alkoxyalkyl($C_{1-20}$)carbonyloxybutyl]-4'-biphenylcarboxylic acid 4-[alkyl($C_{3-20}$)carbonyloxy]-phenylester,

4-[3-alkoxyalkyl($C_{1-20}$)carbonyloxybutyl]-4'-biphenylcarboxylic acid 4-[allyl($C_{3-20}$)oxycarbonyl]-phenylester,

4-[3-alkoxyalkyl($C_{1-20}$)carbonyloxybutyl]-4'-biphenylcarboxylic acid 4'-[alkyl($C_{3-20}$)carbonyloxy]biphenylylester,

4-[3-alkoxyalkyl($C_{1-20}$)carbonyloxybutyl]-4'-biphenylcarboxylic acid 4'-[alkyl($C_{3-20}$)oxycarbonyl]biphenylylester.

(i-7) 4-[3-alkyl($C_{1-20}$)oxypentyl]benzoic acid 4-]alkyl($C_{3-20}$)]phenyl ester,

4-[4-alkyl($C_{1-20}$)oxypentyl]benzoic acid 4-[alkyl($C_{3-20}$)oxy]phenyl ester,

4-[4-alkyl($C_{1-20}$)oxypentyl]benzoic acid 4'-[alkyl($C_{3-20}$)]biphenylyl ester,

4-[4-alkyl($C_{1-20}$)oxypentyl]benzoic acid 4'-[alkyl($C_{3-20}$)oxy]biphenylyl ester,

4-[4-alkyl($C_{1-20}$)oxypentyl]benzoic acid 4-[alkyl($C_{3-20}$)oxycarbonyl]phenyl ester,

4-[4-alkyl($C_{1-20}$)oxypentyl]benzoic acid 4-[alkyl($C_{3-20}$)carbonyloxy]phenyl ester,

4-[4-alkyl($C_{1-20}$)oxypentyl]benzoic acid 4'-[alkyl($C_{3-20}$)oxycarbonyl]biphenylyl ester,

4-[4-alkyl($C_{1-20}$)oxypentyl]benzoic acid 4'-[alkyl($C_{3-20}$)carbonyloxy]biphenylyl ester,

4-[4-alkyl($C_{1-20}$)carbonyloxypentyl]benzoic acid 4-[alkyl($C_{3-20}$)]phenyl ester,

4-[4-alkyl($C_{1-20}$)carbonyloxypentyl]benzoic acid 4-[alkyl($C_{3-20}$)oxy]phenyl ester,

4-[4-alkyl($C_{1-20}$)carbonyloxypentyl]benzoic acid 4'-alkyl($C_{3-20}$)]biphenyl ester,

4-[4-alkyl($C_{1-20}$)carbonyloxypentyl]benzoic acid 4'-[alkyl($C_{3-20}$)oxy]biphenyl ester,

4-[4-alkyl($C_{1-20}$)carbonyloxypentyl]benzoic acid [4-alkyl($C_{3-20}$)carbonyloxy]phenyl ester,

4-[4-alkyl($C_{1-20}$)carbonyloxypentyl]benzoic acid [4-alkyl($C_{3-20}$)oxycarbonyl]phenyl ester,

4-[4-alkyl($C_{1-20}$)carbonyloxypentyl]benzoic acid 4'-[alkyl($C_{3-20}$)carbonyloxy]biphenylyl ester,

4-[4-alkyl($C_{1-20}$)carbonyloxypentyl]benzoic acid 4'-[alkyl($C_{3-20}$)oxycarbonyl]biphenylyl ester.

4-[4-alkyl($C_{1-20}$)oxypentyl]-4'-biphenylcarboxylic acid 4-[alkyl($C_{3-20}$)]phenylester,

4-[4-alkyl($C_{1-20}$)oxypentyl]-4'-biphenylcarboxylic acid 4-[alkyl($C_{3-20}$)oxy]phenylester,

4-[4-alkyl($C_{1-20}$)oxypentyl]-4'-biphenylcarboxylic acid 4'-[alkyl($C_{3-20}$)]biphenylylester,

4-[4-alkyl($C_{1-20}$)oxypentyl]-4'-biphenylcarboxylic acid 4'-[alkyl($C_{3-20}$)oxy]biphenylylester,

4-[4-alkyl($C_{1-20}$)oxypentyl]-4'-biphenylcarboxylic acid 4-[alkyl ($C_{3-20}$)oxycarbonyl]phenylester,

4-[4-alkyl($C_{1-20}$)oxypentyl]-4'-biphenylcarboxylic acid 4-[alkyl($C_{3-20}$)carbonyloxy]phenylester,

4-[4-alkyl($C_{1-20}$)oxypentyl]-4'-biphenylcarboxylic acid 4'-[alkyl($C_{3-20}$)oxycarbonyl]biphenylylester,

4-[4-alkyl($C_{1-20}$)oxypentyl]-4'-biphenylcarboxylic acid 4'-[alkyl($C_{3-20}$)carbonyloxy]biphenylylester,

4-[4-alkyl($C_{1-20}$)carbonyloxypentyl]-4'-biphenylcarboxylic acid 4-[alkyl($C_{3-20}$)]phenylester,

4-[4-alkyl($C_{1-20}$)carbonyloxypentyl]-4'-biphenylcarboxylic acid 4-[alkyl($C_{3-20}$)oxy]phenylester,

4-[4-alkyl($C_{1-20}$)carbonyloxypentyl]-4'-biphenylcarboxylic acid 4'-[alkyl($C_{3-20}$)]biphenylylester,

4-[4-alkyl($C_{1-20}$)carbonyloxypentyl]-4'-biphenylcarboxylic acid 4'-[alkyl($C_{3-20}$)oxy]biphenylylester,

4-[4-alkyl($C_{1-20}$)carbonyloxypentyl]-4'-biphenylcarboxylic acid [4-alkyl($C_{3-20}$)carbonyloxy]phenylester,

4-[4-alkyl($C_{1-20}$)carbonyloxypentyl]-4'-biphenylcarboxylic acid [4-alkyl($C_{3-20}$)oxycarbonyl]phenylester,

4-[4-alkyl($C_{1-20}$)carbonyloxypentyl]-4'-biphenylcarboxylic acid 4'-[alkyl($C_{3-20}$)carbonyloxy]biphenylylester,

4-[4-alkyl($C_{1-20}$)carbonyloxypentyl]-4'-biphenylcarboxylic acid 4'-[alkyl($C_{3-20}$)oxycarbonyl]biphenylylester.

4-[4-alkoxyalkyl($C_{1-20}$)oxypentyl]benzoic acid 4-[alkyl($C_{3-20}$)]phenyl ester,
4-[4-alkoxyalkyl($C_{1-20}$)oxypentyl]benzoic acid 4-[alkyl($C_{3-20}$)oxy]phenyl ester,
4-[alkoxyalkyl($C_{1-20}$)oxypentyl]benzoic acid 4′-[alkyl($C_{3-20}$)]biphenylyl ester,
4-[4-alkoxyalkyl($C_{1-20}$)oxypentyl]benzoic acid 4′-[alkyl($C_{3-20}$)oxy]biphenyl ester,
4-[4-alkoxyalkyl($C_{1-20}$)oxypentyl]benzoic acid 4-[alkyl($C_{3-20}$)carbonyloxy]phenyl ester,
4-[4-alkoxyalkyl($C_{1-20}$)oxypentyl]benzoic acid 4-[alkyl($C_{3-20}$)oxycarbonyl]phenyl ester,
4-[4-alkoxyalkyl($C_{1-20}$)oxypentyl]benzoic acid 4′-[alkyl($C_{3-20}$)carbonyloxy]biphenylyl ester,
4-[4-alkoxyalkyl($C_{1-20}$)oxypentyl]benzoic acid 4′-[alkyl($C_{3-20}$)oxycarbonyl]biphenylyl ester,
4-[4-alkoxyalkyl($C_{1-20}$)carbonyloxypentyl]benzoic acid 4-[alkyl($C_{3-20}$)phenyl ester,
4-[4-alkoxyalkyl($C_{1-20}$)carbonyloxypentyl]benzoic acid 4-[alkyl($C_{3-20}$)oxy]phenyl ester,
4-[4-alkoxyalkyl($C_{1-20}$)carbonyloxypentyl]benzoic acid 4′-[alkyl($C_{3-20}$)oxy]biphenylyl ester,
4-[4-alkoxyalkyl($C_{1-20}$)carbonyloxypentyl]benzoic acid 4′-[alkyl($C_{3-20}$)loxy]biphenylyl ester,
4-[4-alkoxyalkyl($C_{1-20}$)carbonyloxypentyl]benzoic acid 4-[alkyl($C_{3-20}$)carbonyloxy]phenyl ester,
4-[4-alkoxyalkyl($C_{1-20}$)carbonyloxypentyl]benzoic acid 4-[alkyl($C_{3-20}$)oxycarbonyl]phenyl ester,
4-[4-alkoxyalkyl($C_{1-20}$)carbonyloxypentyl]benzoic acid 4′-[alkyl($C_{3-20}$)carbonyloxy]biphenylyl ester.
4-[4-alkoxyalkyl($C_{1-20}$)carbonyloxypentyl]benzoic acid 4′-[alkyl($C_{3-20}$)oxycarbonyl]biphenylyl ester,
4-[4-alkoxyalkyl($C_{1-20}$)oxypentyl]-4′-biphenylcarboxylic acid 4-[alkyl($C_{3-20}$)]phenylester,
4-[4-alkoxyalkyl($C_{1-20}$)oxypentyl]-4′-biphenylcarboxylic acid 4-[alkyl($C_{3-20}$)oxy]phenylester,
4-[4-alkoxyalkyl($C_{1-20}$)oxypentyl]-4′-biphenylcarboxylic acid 4′-[alkyl($C_{3-20}$)biphenylylester,
4-[4-alkoxyalkyl($C_{1-20}$)oxypentyl]-4′-biphenylcarboxylic acid 4′-[alkyl($C_{3-20}$)oxy]biphenylylester,
4-[4-alkoxyalkyl($C_{1-20}$)oxypentyl]-4′-biphenylcarboxylic acid, 4-[alkyl($C_{3-20}$)carbonyloxy]phenylester,
4-[4-alkoxyalkyl($C_{1-20}$)oxypentyl]-4′-biphenylcarboxylic acid 4-[alkyl($C_{3-20}$)oxycarbonyl]phenylester,
4-[4-alkoxyalkyl($C_{1-20}$)oxypentyl]-4′-biphenylcarboxylic acid 4′-[alkyl($C_{3-20}$)carbonyloxy]biphenylylester,
4-[4-alkoxyalkyl($C_{1-20}$)oxypentyl]-4′-biphenylcarboxylic acid 4′-[alkyl($C_{3-20}$)oxycarbonyl]biphenylylester,
4-[4-alkoxyalkyl($C_{1-20}$)carbonyloxypentyl]-4′-biphenylcarboxylic acid 4-[alkyl($C_{3-20}$)]phenylester,
4-[4-alkoxyalkyl($C_{1-20}$)carbonyloxypentyl]-4′-biphenylcarboxylic acid 4-[alkyl($C_{3-20}$)oxy]phenylester,
4-[4-alkoxyalkyl($C_{1-20}$)carbonyloxypentyl]-4′-biphenylcarboxylic acid 4′-[alkyl($C_{3-20}$)]biphenylylester,
4-[4-alkoxyalkyl($C_{1-20}$)carbonyloxypentyl]-4′-biphenylcarboxylic acid 4′-[alkyl($C_{3-20}$)oxy]biphenylylester,
4-[4-alkoxyalkyl($C_{1-20}$)carbonyloxypentyl]-4′-biphenylcarboxylic acid 4-[alkyl($C_{3-20}$)carbonyloxy]-phenylester,
4-[4-alkoxyalkyl($C_{1-20}$)carbonyloxypentyl]-4′-biphenylcarboxylic acid 4-[alkyl($C_{3-20}$)oxycarbonyl]-phenylester,
4-[4-alkoxyalkyl($C_{1-20}$)carbonyloxypentyl]-4′-biphenylcarboxylic acid 4′-[alkyl($C_{3-20}$)carbonyloxy]-biphenylylester,
4-[4-alkoxyalkyl($C_{1-20}$)carbonyloxypentyl]-4′-biphenylcarboxylic acid 4′-[alkyl($C_{3-20}$)oxycarbonyl]-biphenylylester.

In addition to the above exemplified compounds, there can be exemplified those compounds where 4-[4-alkyloxy($C_{1-20}$)pentyl], 4-[4-alkylcarbonyloxy($C_{1-20}$)pentyl], 4-[4-alkoxyalkyloxy($C_{1-20}$)pentyl], or 4-[4-alkoxyalkylcarbonyloxy($C_{1-20}$)pentyl] is replaced with 4-[5-alkyloxy($C_{1-20}$)hexyl], 4-[5-alkylcarbonyloxy-($C_{1-20}$)hexyl], 4-[5-alkoxyalkyloxy($C_{1-20}$)hexyl], 4-[5-alkoxyalkylcarbonyloxy($C_{1-20}$)hexyl], 4-[6-alkyloxy-($C_{1-20}$)heptyl], 4-[6-alkylcarbonyloxy($C_{1-20}$)heptyl], 4-[6-alkoxyalkyloxy($C_{1-20}$)heptyl], or 4-[6-alkoxyalkylcarbonyloxy($C_{1-20}$)heptyl].

The above exemplified alkoxyalkyl and alkyl may be substituted with halogen atom and these alkoxyalkyl and alkyl may be branched alkoxyalkyl and alkyl.

Further, these alkoxyalkyl and alkyl may be optically active alkoxyalkyl and alkyl.

Examples of these alkyl and alkoxyalkyl are those as exemplified herebefore (substituent $R_2$).

(ii) X = -COO-

(ii-1) 4-[2-alkyl($C_{1-20}$)oxypropyl]phenyl 4-[alkyl($C_{3-20}$)]benzoate,
4-[2-alkyl($C_{1-20}$)oxypropylphenyl 4-[alkyl($C_{3-20}$)oxy]benzoate,

4-[2-alkyl($C_{1-20}$)oxypropyl]phenyl 4′-[alkyl($C_{3-20}$)-4-biphenylcarboxylate,
4-[2-alkoxy($C_{1-20}$)-1-methyl]ethylphenyl 4-[alkyl($C_{3-20}$)]benzoic acid ester,
4-[2-alkoxy($C_{1-20}$)-1-methyl]ethylphenyl 4-[alkyl($C_{3-20}$)oxy]benzoic acid ester,
4-[2-alkoxy($C_{1-20}$)-1-methyl]ethylphenyl 4-[alkyl($C_{3-20}$)oxycarbonyl]benzoic acid ester,
4-[2-alkoxy($C_{1-20}$)-1-methyl]ethylphenyl 4-[alkyl($C_{3-20}$)carbonyloxy]benzoic acid ester,
4-[2-alkoxy($C_{1-20}$)-1-methyl]ethylphenyl 4-[alkyl($C_{3-20}$)]-4′-biphenylcarboxylic acid ester,
4-[2-alkoxy($C_{1-20}$)-1-methyl]ethylphenyl 4-[alkyl($C_{3-20}$)oxy]-4′-biphenylcarboxylic acid ester,
4-[2-alkoxy($C_{1-20}$)-1-methyl]ethylphenyl 4-[alkyl($C_{3-20}$)oxycarbonyl]-4′-biphenylcarboxylic acid ester,
4-[2-alkoxy($C_{1-20}$)-1-methyl]ethylphenyl 4-[alkyl($C_{3-20}$)carbonyloxy]-4′-biphenylcarboxylic acid ester,
4-[2-alkoxy($C_{1-20}$)-1-methyl]ethyl-4′-biphenylyl 4-[alkyl($C_{3-20}$)]benzoic acid ester,
4-[2-alkoxy($C_{1-20}$)-1-methyl]ethyl-4′-biphenylyl 4-[alkyl($C_{3-20}$)oxy]benzoic acid ester,
4-[2-alkoxy($C_{1-20}$)-1-methyl]ethyl-4′-biphenylyl 4-[alkyl($C_{3-20}$)oxycarbonyl]benzoic acid ester,
4-[alkoxy($C_{1-20}$)-1-methyl]ethyl-4′-biphenylyl 4-[alkyl($C_{3-20}$)carbonyloxy]benzoic acid ester,
4-[2-alkoxy($C_{1-20}$)-1-methyl]ethyl-4′-biphenylyl 4-[alkyl($C_{3-20}$)]-4′-biphenylcarboxylic acid ester,
4-[2-alkoxy($C_{1-20}$)-1-methyl]ethyl-4′-biphenylyl 4-[alkyl($C_{3-20}$)oxy]-4′-biphenylcarboxylic acid ester,
4-[2-alkoxy($C_{1-20}$)-1-methyl]ethyl-4-biphenylyl 4-[alkyl($C_{3-20}$)oxycarbonyl]-4′-biphenylcarboxylic acid ester,
4-[2-alkoxy($C_{1-20}$)-1-methyl]ethyl-4′-biphenylyl 4-[alkyl($C_{3-20}$)carbonyloxy]-4′-biphenylcarboxylic acid ester.

It is also possible to use such above mentioned compounds in which substituted [2-alkoxy($C_{1-20}$)-1-methyl]ethyl is substituted with any one of the following substituents:

[3-alkoxy($C_{1-20}$)-1-methyl]propyl group,
[4-alkoxy($C_{1-20}$)-1-methyl]butyl group,
[5-alkoxy($C_{1-20}$)-1-methyl]pentyl group,
[5-alkoxy($C_{1-20}$)-1-methyl]hexyl group.
4-[2-alkyl($C_{1-20}$)carbonyloxy-1-methyl]ethylphenyl4-[alkyl($C_{3-20}$)]benzoic acid ester,
(ii-2) 4-[2-alkyl($C_{1-20}$)carbonyloxy-1-methyl]ethylphenyl 4-[alkyl($C_{3-20}$)oxy]benzoic acid ester,
4-[2-alkyl($C_{1-20}$)carbonyloxy-1-methyl]ethylphenyl4-[alkyl($C_{3-20}$)oxycarbonyl]benzoic acid ester,
4-[2-alkyl($C_{1-20}$)carbonyloxy-1-methyl]ethylphenyl4-[alkyl($C_{3-20}$)carbonyloxy]benzoic acid ester,
4-[2-alkyl($C_{1-20}$)carbonyloxy-1-methyl]ethylphenyl4-[alkyl($C_{3-20}$)]-4′-biphenylcarboxylic acid ester,
4-[2-alkyl($C_{1-20}$)carbonyloxy-1-methyl]ethylphenyl4-[alkyl($C_{3-20}$)oxy]-4′-biphenylcarboxylic acid ester,
4-[2-alkyl($C_{1-20}$)carbonyloxy-1-methyl]ethylphenyl 4-[alkyl($C_{3-20}$)oxycarbonyl]-4′-biphenylcarboxylic acid ester,
4-[2-alkyl($C_{1-20}$)carbonyloxy-1-mrthyl]ethylphenyl 4-[alkyl($C_{3-20}$)carbonyloxy]-4′-biphenylcarboxylic acid ester
4-[2-alkyl($C_{1-20}$)carbonyloxy-1-methyl]ethyl-4′-biphenylyl 4-[alkyl($C_{3-20}$)]benzoic acid ester,
4-[2-alkyl($C_{1-20}$)carbonyloxy-1-methyl]ethyl-4′-biphenylyl 4-[alkyl($C_{3-20}$)oxy]benzoic acid ester,
4-[2-alkyl($C_{1-20}$)carbonyloxy-1-methyl]ethyl-4′-biphenylyl 4-[alkyl($C_{3-20}$)oxycarbonyl]benzoic acid ester,
4-[2-alkyl($C_{1-20}$)carbonyloxy-1-methyl]ethyl-4′-biphenylyl 4-[alkyl($C_{3-20}$)carbonyloxy]benzoic acid ester,
4-[2-alkyl($C_{1-20}$)carbonyloxy-1-methyl]ethyl-4′-biphenylyl 4-[alkyl($C_{3-20}$)]-4′-biphenylcarboxylic acid ester,
4-[2-alkyl($C_{1-20}$)carbonyloxy-1-methyl]ethyl-4′-biphenylyl 4-[alkyl($C_{3-20}$)-oxy]-4′-biphenylcarboxylic acid ester,
4-[2-alkyl($C_{1-20}$)carbonyloxy-1-methyl]ethyl-4′-biphenylyl 4-[alkyl($C_{3-20}$)oxycarbonyl]-4′biphenylcarboxylic acid ester,
4-[2-alkyl($C_{1-20}$)carbonyloxy-1-methyl]ethyl-4′-biphenylyl 4-[alkyl($C_{3-20}$)carbonyloxy]-4′-biphenylcarboxylic acid ester.

It is also possible to use such above mentioned compounds in which substituent [2-alkyl($C_{1-20}$)-carbonyloxy-1-methyl]ethyl is substituted by any one of the following substituents:

[3-alkyl($C_{1-20}$)carbonyloxy-1-methyl]propyl group,
[4-alkyl($C_{1-20}$)carbonyloxy-1-methyl]butyl group,

[5-alkyl($C_{1-20}$)carbonyloxy-1-methyl]pentyl group,
[5-alkyl($C_{1-20}$)carbonyloxy-1-methyl]hexyl group.

(ii-3) 4-[2-alkoxyalkyloxy($C_{1-20}$)-1-methyl]ethylphenyl 4-[alkyl($C_{3-20}$)]benzoic acid ester,
4-[2-alkoxyalkyloxy($C_{1-20}$)-1-methyl]ethylphenyl 4-[alkyl($C_{3-20}$)oxy]benzoic acid ester,
4-[2-alkoxyalkyloxy($C_{1-20}$)-1-methyl]ethylphenyl 4-[alkyl($C_{3-20}$)oxycarbonyl]benzoic acid ester,
4-[2-alkoxyalkyloxy($C_{1-20}$)-1-methyl]ethylphenyl 4-[alkyl($C_{3-20}$)carbonyloxy]benzoic acid ester,
4-[2-alkoxyalkyloxy($C_{1-20}$)-1-methyl]ethylphenyl 4-[alkyl($C_{3-20}$)]-4′-biphenylcarboxylic acid ester,
4-[2-alkoxyalkyloxy($C_{1-20}$)-1-methyl]ethylphenyl 4-[alkyl($C_{3-20}$)oxy]-4′-biphenylcarboxylic acid ester,
4-[2-alkoxyalkyloxy($C_{1-20}$)-1-methyl]ethylphenyl 4-[alkyl($C_{3-20}$)oxycarbonyl]-4′-biphenylcarboxylic acid ester,
4-[2-alkoxyalkyloxy($C_{1-20}$)-1-methyl]ethylphenyl 4-[alkyl($C_{3-20}$)carbonyloxy]-4′-biphenylcarboxylic acid ester,
4-[2-alkoxyalkyloxy($C_{1-20}$)-1-methyl]ethyl-4′-biphenylyl 4-[alkyl($C_{3-20}$)]benzoic acid ester,
4-[2-alkoxyalkyloxy($C_{1-20}$)-1-methyl]ethyl-4′-biphenylyl 4-[alkyl($C_{3-20}$)oxy]benzoic acid ester,
4-[2-alkoxyalkyloxy($C_{1-20}$)-1-methyl]ethyl-4′-biphenylyl 4-[alkyl($C_{3-20}$)oxycarbonyl]benzoic acid ester,
4-[2-alkoxyalkyloxy($C_{1-20}$)-1-methyl]ethyl-4′-biphenylyl 4-[alkyl($C_{3-20}$)carbonyloxy]benzoic acid ester,
4-[2-alkoxyalkyloxy($C_{1-20}$)-1-methyl]ethyl-4′-biphenylyl 4-[alkyl($C_{3-20}$)]-4′-biphenylcarboxylic acid ester,
4-[2-alkoxyalkyloxy($C_{1-20}$)-1-methyl]ethyl-4′-biphenylyl 4-[alkyl($C_{3-20}$)oxy]-4′biphenylcarboxylic acid ester,
4-[2-alkoxyalkyloxy($C_{1-20}$)-1-methyl]ethyl-4′-biphenylyl 4-[alkyl($C_{3-20}$)oxycarbonyl]-4-biphenylcarboxilic acid ester,
4-[2-alkoxyalkyloxy($C_{1-20}$)-1-methyl]ethyl-4′-biphenylyl 4-[alkyl($C_{3-20}$)carbonyloxy]-4′biphenylcarboxylic acid ester.

It is also possible to use such above mentioned compounds in which substituent [2-alkoxyalkyloxy($C_{1-20}$)-1-methyl]ethyl is substituted with any one of the following substituents:
[3-alkoxyalkyloxy($C_{1-20}$)-1-methyl]propyl group,
[4-alkoxyalkyloxy($C_{1-20}$)-1-methyl]butyl group,
[5-alkoxyalkyloxy($C_{1-20}$)-1-methyl]pentyl group,
[5-alkoxyalkyloxy($C_{1-20}$)-1-methyl]hexyl group.

(ii-4) 4-[2-Alkoxyalkylcarbonyloxy($C_{1-20}$)-1-methyl]ethylphenyl 4-[alkyl($C_{3-20}$)]benzoates,
4-[2-alkoxyalkylcarbonyloxy($C_{1-20}$)-1-methyl]-ethylphenyl 4-[alkyl($C_{3-20}$)oxy]benzoate,
4-[2-alkoxyalkylcarbonyloxy($C_{1-20}$)-1-methyl]ethylphenyl 4-[alkyl($C_{3-20}$)oxycarbonyl]benzoates,
4-[2-alkoxyalkylcarbonyloxy($C_{1-20}$)-1-methyl]ethylphenyl 4-[alkyl($C_{3-20}$)carbonyloxy]benzoates,
4-[2-alkoxyalkylcarbonyloxy($C_{1-20}$)-1-methyl]ethylphenyl 4-[alkyl($C_{3-20}$)]-4′-biphenylcarboxylate,
4-[2-alkoxyalkylcarbonyloxy($C_{1-20}$)-1-methyl]ethylphenyl 4-[alkyl($C_{3-20}$)oxy]-4′-biphenylcarboxylate,
4-[2-alkoxyalkylcarbonyloxy($C_{1-20}$)-1-methyl]ethylphenyl 4-[alkyl($C_{3-20}$)oxycarbonyl]-4′-biphenylcarboxylates and
4-[2-alkoxyalkylcarbonyloxy($C_{1-20}$)-1-methyl]ethylphenyl 4-[alkyl($C_{3-20}$)carbonyloxy]-4′-biphenylcarboxylates.
4-[2-Alkoxyalkylcarbonyloxy($C_{1-20}$)-1-methyl]ethyl-4′-biphenylyl 4-[alkyl($C_{3-20}$)]benzoate,
4-[2-alkoxyalkylcarbonyloxy($C_{1-20}$)-1-methyl]ethyl-4′-biphenylyl 4-[alkyl($C_{3-20}$)oxy]benzoates,
4-[2-alkoxyalkylcarbonyloxy($C_{1-20}$)-1-methyl]ethyl-4′-biphenylyl 4-[alkyl($C_{3-20}$)oxycarbonyl]-benzoates,
4-[2-alkoxyalkylcarbonyloxy($C_{1-20}$)-1-methyl]ethyl-4′-biphenyl 4-[alkyl($C_{3-20}$)carbonyloxy]benzoate,
4-[2-alkoxyalkylcarbonyloxy($C_{1-20}$)-1-methyl]ethyl-4′biphenylyl 4-[alkyl($C_{3-20}$)]-4′-biphenylcarboxylate,
4-[2-alkoxyalkylcarbonyloxy($C_{1-20}$)-1-methyl]ethyl-4′-biphenylyl 4-[alkyl($C_{3-20}$)oxy]-4′-biphenylcarboxylates,
4-[2-alkoxyalkylcarbonyloxy($C_{1-20}$)-1-methyl]ethyl-4′biphenylyl 4-[alkyl($C_{3-20}$)oxycarbonyl]-4′-biphenylcarboxylates and
4-[2-alkoxyalkylcarbonyloxy($C_{1-20}$)-1-methyl]ethyl-4′-biphenylyl 4-[alkyl($C_{3-20}$)carbonyloxy]-4′-biphenylcarboxylates.

In the above-mentioned compound groups, compounds, wherein substituent groups [2-alkoxyalkylcarbonyloxy-($C_{1-20}$)-1-methyl]ethyl are replaced by any of the following substituent groups:

[3-alkoxyalkylcarbonyloxy($C_{1-20}$)-1-methyl]propyl group, [4-alkoxyalkylcarbonyloxy($C_{1-20}$)-1-methyl]butyl groups, [5-alkoxyalkylcarbonyloxy($C_{1-20}$)-1-methyl]pentyl groups and [5-alkoxyalkylcarbonyloxy($C_{1-20}$)-1-methyl]hexyl groups.

(ii-5) 4-[2-Alkyl($C_{1-20}$)oxypropyl]phenyl 4-[alkyl($C_{3-20}$)]benzoates,

4-[2-alkyl($C_{1-20}$)oxypropyl]phenyl 4-[alkyl($C_{3-20}$)]oxy]benzoates,

4-[2-Alkyl($C_{1-20}$)oxypropyl]phenyl 4′-[alkyl($C_{3-20}$)] 4-biphenylcarboxylates,

4-[2-alkyl($C_{1-20}$)oxypropyl]phenyl 4′-[alkyl($C_{3-20}$)oxy] 4-biphenylcarboxylates,

4-[2-alkyl($C_{1-20}$)oxypropyl]phenyl 4-[alkyl($C_{3-20}$)oxycarbonyl]benzoates,

4-[2-alkyl($C_{1-20}$)oxypropyl]phenyl 4-[alkyl($C_{3-20}$)carbonyloxy]benzoates,

4-[2-alkyl($C_{1-20}$)oxypropyl]phenyl 4′-[alkyl($C_{3-20}$)oxycarbonyl] 4-biphenylcarboxylate,

4-[2-alkyl($C_{1-20}$)oxypropyl]phenyl 4′-[alkyl($C_{3-20}$)carbonyloxy] 4-biphenylcarboxylates,

4-[2-alkyl($C_{1-20}$)carbonyloxypropyl]phenyl 4-[alkyl($C_{3-20}$)]benzoates,

4-[2-alkyl($C_{1-20}$)carbonyloxypropyl]phenyl 4-[alkyl($C_{3-20}$)oxy]benzoates,

4-[2-alkyl($C_{1-20}$)carbonyloxypropyl]phenyl 4′-[alkyl($C_{3-20}$)] 4-biphenylcarboxylates,

4-[2-alkyl($C_{1-20}$)carbonyloxypropyl]phenyl 4′-[alkyl($C_{3-20}$)oxy] 4-biphenylcarboxylates,

4-[2-Alkyl($C_{1-20}$)carbonyloxypropyl]phenyl 4-[alkyl($C_{3-20}$)carbonyloxy]benzoates,

4-[2-alkyl($C_{1-20}$)carbonyloxypropyl]phenyl 4-[alkyl($C_{3-20}$)oxycarbonyl]benzoates,

4-[2-alkyl($C_{1-20}$)carbonyloxypropyl]phenyl 4′-[alkyl($C_{3-20}$)carbonyloxy] 4-biphenylcarboxylates,

4-[2-alkyl($C_{1-20}$)carbonyloxypropyl]phenyl 4′-[alkyl($C_{3-20}$)oxycarbonyl]-4-biphenylcarboxylate,

4-[2-alkyl($C_{1-20}$)oxypropyl]phenyl-4′-biphenylyl 4-[alkyl($C_{3-20}$)benzoates,

4-[2-alkyl($C_{1-20}$)oxypropyl]-4′-biphenylyl 4-[alkyl($C_{3-20}$)oxy]benzoates,

4-[2-alkyl($C_{1-20}$)oxypropyl]-4′-biphenylyl 4′-4-[alkyl($C_{3-20}$)] 4-biphenylcarboxylates,

4-[2-alkyl($C_{1-20}$)oxypropyl]-4′-biphenylyl 4-[alkyl($C_{3-20}$)oxy] 4-biphenylcarboxylates,

4-[2-alkyl($C_{1-20}$)oxypropyl]-4′-biphenylyl [alkyl($C_{3-20}$)oxycarbonyl]benzoates,

4-[2-alkyl($C_{1-20}$)oxypropyl]-4′-biphenylyl 4-[alkyl($C_{3-20}$)carbonyloxy]benzoates,

4-[2-alkyl($C_{1-20}$)oxypropyl]-4′-biphenylyl 4′-[alkyl($C_{3-20}$)oxycarbonyl] 4-biphenylcarboxylates,

4-[2-alkyl($C_{1-20}$)oxypropyl]-4′-biphenylyl 4′-[alkyl($C_{3-20}$)carbonyloxy] 4-biphenylcarboxylates,

4-[2-alkyl($C_{1-20}$)carbonyloxypropyl]-4′-biphenylyl 4-[alkyl($C_{3-20}$)benzoates,

4-[2-alkyl($C_{1-20}$)carbonyloxypropyl]-4′-biphenylyl 4-[alkyl($C_{3-20}$)oxy]benzoates,

4-[2-alkyl($C_{1-20}$)carbonyloxypropyl]-4′-biphenylyl 4′-[alkyl($C_{3-20}$)] 4-biphenylcarboxylates,

4-[2-alkyl($C_{1-20}$)carbonyloxypropyl]-4′-biphenylyl 4′-[alkyl($C_{3-20}$)oxy] 4-biphenylcarboxylates,

4-[2-alkyl($C_{1-20}$)carbonyloxypropyl]-4′-biphenylyl 4-[alkyl($C_{3-20}$)carbonyloxy]benzoates,

4-[2-alkyl($C_{1-20}$)carbonyloxypropyl]-4′-biphenylyl 4-[alkyl($C_{3-20}$)oxycarbonyl]benzoates,

4-[2-alkyl($C_{1-20}$)carbonyloxypropyl]-4′-biphenylyl 4′-[alkyl($C_{3-20}$)carbonyloxy] 4-biphenylcarboxylates,

4-[2-alkyl($C_{1-20}$)carbonyloxypropyl]-4′-biphenyl 4′-[alkyl($C_{3-20}$)oxycarbonyl] 4-biphenylcarboxylates,

4-[2-alkoxyalkyl($C_{1-20}$)oxypropyl]phenyl 4-[alkyl($C_{3-20}$)benzoates,

4-[2-alkoxyalkyl($C_{1-20}$)oxypropyl]phenyl 4-[alkyl($C_{3-20}$)oxy]benzoates,

4-[2-alkoxyalkyl($C_{1-20}$)oxypropyl]phenyl 4′-[alkyl($C_{3-20}$)] 4-biphenylcarboxylates,

4-[2-alkoxyalkyl($C_{1-20}$)oxypropyl]phenyl 4′-[alkyl($C_{3-20}$)oxy] 4-biphenylcarboxylates,

4-[2-alkoxyalkyl($C_{1-20}$)oxypropyl]phenyl 4-[alkyl($C_{3-20}$)carbonyloxy]benzoates,

4-[2-alkoxyalkyl($C_{1-20}$)oxypropyl]phenyl 4-[alkyl($C_{3-20}$)oxycarbonyl]benzoates,

4-[2-alkoxyalkyl($C_{1-20}$)oxypropyl]phenyl 4′-[alkyl($C_{3-20}$)carbonyloxy] 4-biphenylcarboxylates,

4-[2-alkoxyalkyl($C_{1-20}$)oxypropyl]phenyl 4′-[alkyl($C_{3-20}$)oxycarbonyl] 4-biphenylcarboxylates,

4-[2-alkoxyalkyl($C_{1-20}$)carbonyloxypropyl]phenyl 4-[alkyl($C_{3-20}$)benzoates,

4-[2-alkoxyalkyl($C_{1-20}$)carbonyloxypropyl]phenyl 4-[alkyl($C_{3-20}$)oxy]benzoates,

4-[2-alkoxyalkyl($C_{1-20}$)carbonyloxypropyl]phenyl 4′-[alkyl($C_{3-20}$)]-4-biphenylcarboxylates,

4-[2-alkoxyalkyl($C_{1-20}$)carbonyloxy]phenyl 4′-[alkyl($C_{3-20}$)oxy]-4-biphenylcarboxylates,

4-[2-alkoxyalkyl($C_{1-20}$)carbonyloxypropyl]phenyl 4-[alkyl($C_{3-20}$)carbonyloxy]benzoates,

4-[2-alkoxyalkyl($C_{1-20}$)carbonyloxypropyl]phenyl 4-[alkyl($C_{3-20}$)oxycarbonyl]benzoates,

4-[a′-alkoxyalkyl($C_{1-20}$)carbonyloxypropyl]phenyl 4′-[alkyl($C_{3-20}$)carbonyloxy]-4-biphenylcarboxylates, and

4-[2-alkoxyalkyl($C_{1-20}$)carbonyloxypropyl]phenyl 4′-[alkyl($C_{3-20}$)oxycarbonyl]-4-biphenylcarboxylates.

4-[2-Alkoxyalkyl($C_{1-20}$)oxypropyl]-4′-biphenylyl 4-[alkyl($C_{3-20}$)]benzoates,

4-[2-alkoxyalkyl($C_{1-20}$)oxypropyl]-4'-biphenylyl 4-[alkyl($C_{3-20}$)oxy]benzoates,
4-[2-alkoxyalkyl($C_{1-20}$)oxypropyl]-4'-biphenylyl 4'-[alkyl($C_{3-20}$)] 4-biphenylcarboxylates,
4-[2-alkoxyalkyl($C_{1-20}$)oxypropyl]-4'-biphenylyl 4'-[alkyl($C_{3-20}$)oxy] 4-biphenylcarboxylates,
4-[2-alkoxyalkyl($C_{1-20}$)oxypropyl]-4'-biphenylyl 4-[alkyl($C_{3-20}$)carbonyloxy]benzoates,
4-[2-alkoxyalkyl($C_{1-20}$)oxypropyl]-4'-biphenylyl 4-[alkyl($C_{3-20}$)oxycarbonyl]benzoates,
4-[2-alkoxyalkyl($C_{1-20}$)oxypropyl]-4'-biphenylyl 4'-[alkyl($C_{3-20}$)carbonyloxy] 4-biphenylcarboxylates,
4-[2-alkoxyalkyl($C_{1-20}$)oxypropyl]-4'-biphenylyl 4'-[alkyl($C_{3-20}$)oxycarbonyl] 4-biphenylcarboxylates,
4-[2-alkoxyalkyl($C_{1-20}$)carbonyloxypropyl]-4'-biphenylyl 4-[alkyl($C_{3-20}$)]benzoates,
4-[2-alkoxyalkyl($C_{1-20}$)carbonyloxypropyl]-4'-biphenylyl 4-[alkyl($C_{3-20}$)oxy]benzoates,
4-[2-alkoxyalkyl($C_{1-20}$)carbonyloxypropyl]-4'-biphenylyl 4'-[alkyl($C_{3-20}$)]-4-biphenylcarboxylates,
4-[2-alkoxyalkyl($C_{1-20}$)carbonyloxy]-4'-biphenylyl 4'-[alkyl($C_{3-20}$)oxy]-4-biphenylcarboxylates,
4-[2-alkoxyalkyl($C_{1-20}$)carbonyloxypropyl]-4'-biphenyl 4-[alkyl($C_{3-20}$)carbonyloxy]benzoates,
4-[2-alkoxyalkyl($C_{1-20}$)carbonyloxypropyl]-4'-biphenylyl 4-[alkyl($C_{3-20}$)oxycarbonyl]benzoates,
4-[2-alkoxyalkyl($C_{1-20}$)carbonyloxypropyl]-4'-biphenylyl 4'-[alkyl($C_{3-20}$)carbonyloxy]-4-biphenylcarboxylates, and
4-[2-alkoxyalkyl($C_{1-20}$)carbonyloxypropyl]-4'-biphenylyl 4'-[alkyl($C_{3-20}$)oxycarbonyl]-4-biphenylcarboxylates.

(ii-6) 4-[3-Alkyl($C_{1-20}$)oxybutyl]phenyl 4-[alkyl($C_{3-20}$)]benzoates,
4-[3-alkyl($C_{1-20}$)oxybutyl]phenyl 4-[alkyl($C_{3-20}$)oxy]benzoates,
4-[3-alkyl($C_{1-20}$)oxybutyl]phenyl 4'-[alkyl($C_{3-20}$)]-4-biphenylcarboxylates,
4-[3-alkyl($C_{1-20}$)oxybutyl]phenyl 4'-[alkyl($C_{3-20}$)oxy]-4-biphenylcarboxylates,
4-[3-alkyl($C_{1-20}$)oxybutyl]phenyl 4-[alkyl($C_{3-20}$)oxycarbonyl]benzoates,
4-[3-alkyl($C_{1-20}$)oxybutyl]phenyl 4-[alkyl($C_{3-20}$)carbonyloxy]benzoates,
4-[3-alkyl($C_{1-20}$)oxybutyl]phenyl 4'-[alkyl($C_{3-20}$)oxycarbonyl]-4-biphenylcarboxylates,
4-[3-alkyl($C_{1-20}$)oxybutyl]phenyl 4'-[alkyl($C_{3-20}$)carbonyloxy]-4-biphenylcarboxylates,
4-[3-alkyl($C_{1-20}$)carbonyloxybutyl]phenyl 4-[alkyl($C_{3-20}$)]benzoates,
4-[3-alkyl($C_{1-20}$)carbonyloxybutyl]phenyl 4-[alkyl($C_{3-20}$)oxy]benzoates,
4-[3-alkyl($C_{1-20}$)carbonyloxybutyl]phenyl 4'-[alkyl($C_{3-20}$)]-4-biphenylcarboxylates,
4-[3-alkyl($C_{1-20}$)carbonyloxybutyl]phenyl 4'-[alkyl($C_{3-20}$)oxy]-4-biphenylcarboxylates,
4-[3-alkyl($C_{1-20}$)carbonyloxybutyl]phenyl 4-[alkyl($C_{3-20}$)carbonyloxy]benzoates,
4-[3-alkyl($C_{1-20}$)carbonyloxybutyl]phenyl 4-[alkyl($C_{3-20}$)oxycarbonyl]benzoates,
4-[3-alkyl($C_{1-20}$)carbonyloxybutyl]phenyl 4'-[alkyl($C_{3-20}$)carbonyloxy]-4-biphenylcarboxylates,
4-[3-alkyl($C_{1-20}$)carbonyloxybutyl]phenyl 4'-[alkyl($C_{3-20}$)oxycarbonyl-4'-biphenylcarboxylates,
4-[3-alkyl($C_{1-20}$)oxybutyl]-4'-biphenylyl 4-[alkyl($C_{3-20}$)]benzoates,
4-[3-alkyl($C_{1-20}$)oxybutyl]-4'-biphenylyl 4-[alkyl($C_{3-20}$)oxy]benzoates,
4-[3-alkyl($C_{1-20}$)oxybutyl]-4'-biphenylyl 4'-[alkyl($C_{3-20}$)]-4-biphenylcarboxylates,
4-[3-alkyl($C_{1-20}$)oxybutyl]-4'-biphenylyl 4'-[alkyl($C_{3-20}$)oxy]-4-biphenylcarboxylates,
4-[3-alkyl($C_{1-20}$)oxybutyl]-4'-biphenylyl 4-[alkyl($C_{3-20}$)oxycarbonyl]benzoates,
4-[3-alkyl($C_{1-20}$)oxybutyl]-4'-biphenylyl 4-[alkyl($C_{3-20}$)carbonyloxy]benzoates,
4-[3-alkyl($C_{1-20}$)oxybutyl]-4'-biphenylyl 4'-[alkyl($C_{3-20}$)oxycarbonyl]-4-biphenylcarboxylates,
4-[3-alkyl($C_{1-20}$)oxybutyl]-4'-biphenylyl 4'-[alkyl($C_{3-20}$)carbonyloxy]-4-biphenylcarboxylates,
4-[3-alkyl($C_{1-20}$)carbonyloxybutyl]-4'-biphenylyl 4-[alkyl($C_{3-20}$)]benzoates,
4-[3-alkyl($C_{1-20}$)carbonyloxybutyl]-4'-biphenylyl 4-[alkyl($C_{3-20}$)oxy]benzoates,
4-[3-alkyl($C_{1-20}$)carbonyloxybutyl]-4'-biphenylyl 4'-[alkyl($C_{3-20}$)]-4-biphenylcarboxylates,
4-[3-alkyl($C_{1-20}$)carbonyloxybutyl]-4'-biphenylyl 4'-[alkyl($C_{3-20}$)oxy]-4-biphenylcarboxylates,
4-[3-alkyl($C_{1-20}$)carbonyloxybutyl]-4'-biphenylyl [4-alkyl($C_{3-20}$)carbonyloxy]benzoates,
4-[3-alkyl($C_{1-20}$)carbonyloxybutyl]-4'-biphenylyl [4-alkyl($C_{3-20}$)oxycarbonyl]benzoates,
4-[3-alkyl($C_{1-20}$)carbonyloxybutyl]-4'-biphenylyl 4-[alkyl($C_{3-20}$)carbonyloxy] 4-biphenylcarboxylates, and
4-[3-alkyl($C_{1-20}$)carbonyloxybutyl]-4'-biphenylyl 4'-[alkyl($C_{3-20}$)oxycarbonyl]-4-biphenylcarboxylates.
4-[3-Alkoxyalkyl($C_{1-20}$)oxybutyl]phenyl 4-[alkyl($C_{3-20}$)]benzoates,
4-[3-alkoxyalkyl($C_{1-20}$)oxybutyl]phenyl 4-[alkyl($C_{3-20}$)oxy]benzoates,
4-[3-alkoxyalkyl($C_{1-20}$)oxybutyl]phenyl 4'-[alkyl($C_{3-20}$)]-4-biphenylcarboxylates,
4-[3-alkoxyalkyl($C_{1-20}$)oxybutyl]phenyl 4'-[alkyl($C_{3-20}$)oxy]-4-biphenylcarboxylates,
4-[3-alkoxyalkyl($C_{1-20}$)oxybutyl]phenyl 4-[alkyl($C_{3-20}$)carbonyloxy]benzoates,

4-[3-alkoxyalkyl($C_{1-20}$)oxybutyl]phenyl 4-[alkyl($C_{3-20}$)oxycarbonyl]benzoates,
4-[3-alkoxyalkyl($C_{1-20}$)oxybutyl]phenyl 4′-[alkyl($C_{3-20}$)carbonyloxy]-4-biphenylcarboxylate,
4-[3-alkoxyalkyl($C_{1-20}$)oxybutyl]phenyl 4′-[alkyl($C_{3-20}$)oxycarbonyl]-4-biphenylcarboxylates,
4-[3-alkoxyalkyl($C_{1-20}$)carbonyloxybutyl]phenyl 4-[alkyl($C_{3-20}$)]benzoates,
4-[3-alkoxyalkyl($C_{1-20}$)carbonyloxybutyl]phenyl 4-[alkyl($C_{3-20}$)oxy]benzoates,
4-[3-alkoxyalkyl($C_{1-20}$)carbonyloxybutyl]phenyl 4′-[alkyl($C_{3-20}$)]-4-biphenylcarboxylates,
4-[3-alkoxyalkyl($C_{1-20}$)carbonyloxybutyl]phenyl 4′-[alkyl($C_{3-20}$)oxy]-4-biphenylcarboxylates,
4-[3-alkoxyalkyl($C_{1-20}$)carbonyloxybutyl]phenyl 4-[alkyl($C_{3-20}$)carbonyloxy]benzoates,
4-[3-alkoxyalkyl($C_{1-20}$)carbonyloxybutyl]phenyl 4-[alkyl($C_{3-20}$)oxycarbonyl]benzoates,
4-[3-alkoxyalkyl($C_{1-20}$)carbonyloxybutyl]phenyl 4′-[alkyl($C_{3-20}$)carbonyloxy]-4-biphenylcarboxylates,
4-[3-alkoxyalkyl($C_{1-20}$)carbonyloxybutyl]phenyl 4′-[alkyl($C_{3-20}$)oxycarbonyl]-4-biphenylcarboxylates,
4-[3-alkoxyalkyl($C_{1-20}$)oxybutyl]-4′-biphenylyl 4-[alkyl($C_{3-20}$)]benzoates,
4-[3-alkoxyalkyl($C_{1-20}$)oxybutyl]-4′-biphenylyl 4-[alkyl($C_{3-20}$)oxy]benzoates,
4-[3-alkoxyalkyl($C_{1-20}$)oxybutyl]-4′-biphenylyl 4′-[alkyl($C_{3-20}$)]-4-biphenylcarboxylates,
4-[3-alkoxyalkyl($C_{1-20}$)oxybutyl]-4′-biphenylyl 4′-[alkyl($C_{3-20}$)oxy]-4-biphenylcarboxylates,
4-[3-alkoxyalkyl($C_{1-20}$)oxybutyl]-4′-biphenylyl 4-[alkyl($C_{3-20}$)carbonyloxy]benzoates,
4-[3-alkoxyalkyl($C_{1-20}$)oxybutyl]-4′-biphenylyl 4-[alkyl($C_{3-20}$)oxycarbonyl]benzoates,
4-[3-alkoxyalkyl($C_{1-20}$)oxybutyl]-4′-biphenylyl 4′-[alkyl($C_{3-20}$)carbonyloxy]-4-biphenylcarboxylates,
4-[3-alkoxyalkyl($C_{1-20}$)oxybutyl]-4′-biphenylyl 4′-[alkyl($C_{3-20}$)oxycarbonyl]-4-biphenylcarboxylates,
4-[3-alkoxyalkyl($C_{1-20}$)carbonyloxybutyl]-4′-biphenylyl 4-[alkyl($C_{3-20}$)]benzoates,
4-[3-alkoxyalkyl($C_{1-20}$)carbonyloxybutyl]-4′-biphenylyl 4-[alkyl($C_{3-20}$)oxy]benzoates,
4-[3-alkoxyalkyl($C_{1-20}$)carbonyloxybutyl]-4′-biphenylyl 4′-[alkyl($C_{3-20}$)]-4-biphenylcarboxylates,
4-[3-alkoxyalkyl($C_{1-20}$)carbonyloxybutyl]-4′-biphenylyl 4′-[alkyl($C_{3-20}$)oxy]-4-biphenylcarboxylates,
4-[3-alkoxyalkyl($C_{1-20}$)carbonyloxybutyl]-4′-biphenylyl 4-[alkyl($C_{3-20}$)carbonyloxy]benzoates,
4-[3-alkoxyalkyl($C_{1-20}$)carbonyloxybutyl]-4′-biphenylyl 4-[alkyl($C_{3-20}$)oxycarbonyl]benzoates,
4-[3-alkoxyalkyl($C_{1-20}$)carbonyloxybutyl]-4′-biphenylyl 4′-[alkyl($C_{3-20}$)carbonyloxy]-4-biphenylcarboxylates, and
4-[3-alkoxyalkyl($C_{1-20}$)carbonyloxybutyl]-4′-biphenylyl 4′-[alkyl($C_{3-20}$)oxycarbonyl]-4-biphenylcarboxylates.

(ii-7) 4-[Alkyl($C_{1-20}$)oxypentyl]phenyl 4-[alkyl($C_{3-20}$)]benzoates,
4-[4-alkyl($C_{1-20}$)oxypentyl]phenyl 4-[alkyl($C_{3-20}$)oxy]benzoates,
4-[4-alkyl($C_{1-20}$)oxypentyl]phenyl 4′-[alkyl($C_{3-20}$)]-4-biphenylcarboxylates,
4-[4-alkyl($C_{1-20}$)oxypentyl]phenyl 4′-[alkyl($C_{3-20}$)oxy]-4-biphenylcarboxylates,
4-[4-alkyl($C_{1-20}$)oxypentyl]phenyl 4-[alkyl($C_{3-20}$)oxycarbonyl]benzoates,
4-[4-alkyl($C_{1-20}$)oxypentyl]phenyl 4-[alkyl($C_{3-20}$)carbonyloxy]benzoates,
4-[4-alkyl($C_{1-20}$)oxypentyl]phenyl 4′-[alkyl($C_{3-20}$)oxycarbonyl]-4-biphenylcarboxylates,
4-[4-alkyl($C_{1-20}$)oxypentyl]phenyl 4′-[alkyl($C_{3-20}$)carbonyloxy]-4-biphenylcarboxylates,
4-[4-alkyl($C_{1-20}$)carbonyloxypentyl]phenyl 4-[alkyl($C_{3-20}$)]benzoates,
4-[4-alkyl($C_{1-20}$)carbonyloxypentyl]phenyl 4-[alkyl($C_{3-20}$)oxy]benzoates,
4-[4-alkyl($C_{1-20}$)carbonyloxypentyl]phenyl 4′-[alkyl($C_{3-20}$)]-4-biphenylcarboxylates,
4-[4-alkyl($C_{1-20}$)carbonyloxypentyl]phenyl 4′-[alkyl($C_{3-20}$)oxy]-4-biphenylcarboxylates,
4-[4-alkyl($C_{1-20}$)carbonyloxypentyl]phenyl 4-[alkyl($C_{3-20}$)carbonyloxy]benzoates,
4-[4-alkyl($C_{1-20}$)carbonyloxypentyl]phenyl [4-alkyl($C_{3-20}$)oxycarbonyl]benzoates,
4-[4-alkyl($C_{1-20}$)carbonyloxypentyl]phenyl 4′-[alkyl($C_{3-20}$)carbonyloxy]-4-biphenylcarboxylates and,
4-[4-alkyl($C_{1-20}$)carbonyloxypentyl]phenyl 4′-[alkyl($C_{3-20}$)oxycarbonyl]-4-biphenylcarboxylate,
4-[4-alkyl($C_{1-20}$)oxypentyl]-4′-biphenylyl 4-[alkyl($C_{3-20}$)]benzoates,
4-[4-alkyl($C_{1-20}$)oxypentyl]-4′-biphenylyl 4-[alkyl($C_{3-20}$)oxy]benzoates,
4-[4-alkyl($C_{1-20}$)oxypentyl]-4′-biphenylyl 4′-[alkyl($C_{3-20}$)]-4-biphenylcarboxylates,
4-[4-alkyl($C_{1-20}$)oxypentyl]-4′-biphenylyl 4′-[alkyl($C_{3-20}$)oxy]-4-biphenylcarboxylates,
4-[4-alkyl($C_{1-20}$)oxypentyl]-4′-biphenylyl 4-[alkyl($C_{3-20}$)oxycarbonyl]benzoates,
4-[4-alkyl($C_{1-20}$)oxypentyl]-4′-biphenylyl 4-[alkyl($C_{3-20}$)carbonyloxy]benzoates,
4-[4-alkyl($C_{1-20}$)oxypentyl]-4′-biphenylyl 4′-[alkyl($C_{3-20}$)oxycarbonyl]-4-biphenylcarboxylates,
4-[4-alkyl($C_{1-20}$)oxypentyl]-4′-biphenylyl 4′-[alkyl($C_{3-20}$)carbonyloxy]-4-biphenylcarboxylates,
4-[4-alkyl($C_{1-20}$)carbonyloxypentyl]-4′-biphenylyl 4-[alkyl($C_{3-20}$)]benzoates,
4-[4-alkyl($C_{1-20}$)carbonyloxypentyl]-4′-biphenylyl 4-[alkyl($C_{3-20}$)oxy]benzoates,

4-[4-alkyl($C_{1-20}$)carbonyloxypentyl]-4′-biphenylyl 4′-[alkyl($C_{3-20}$)]-4-biphenylcarboxylates,
4-[4-alkyl($C_{1-20}$)carbonyloxypentyl]-4′-biphenylyl 4′-[alkyl($C_{3-20}$)oxy]-4-biphenylcarboxylates,
4-[4-alkyl($C_{1-20}$)carbonyloxypentyl]-4′-biphenylyl 4-[alkyl($C_{3-20}$)carbonyloxy]benzoates,
4-[4-alkyl($C_{1-20}$)carbonyloxypentyl]-4′-biphenylyl 4-[alkyl($C_{3-20}$)oxycarbonyl]benzoates,
4-[4-alkyl($C_{1-20}$)carbonyloxypentyl]-4′-biphenylyl 4′-[alkyl($C_{3-20}$)carbonyloxy]-4-biphenylcarboxylate, and
4-[4-alkyl($C_{1-20}$)carbonyloxypentyl]-4′-biphenylyl 4′-[alkyl($C_{3-20}$)oxycarbonyl]-4-biphenylcarboxylates,
4-[4-alkoxyalkyl($C_{1-20}$)oxypentyl]phenyl 4-[alkyl($C_{3-20}$)]benzoates,
4-[4-alkoxyalkyl($C_{1-20}$)oxypentyl]phenyl 4-[alkyl($C_{3-20}$)oxy]benzoates,
4-[4-alkoxyalkyl($C_{1-20}$)oxypentyl]phenyl 4′-[alkyl($C_{3-20}$)]-4-biphenylcarboxylates,
4-[4-alkoxyalkyl($C_{1-20}$)oxypentyl]phenyl 4′-[alkyl($C_{3-20}$)oxy]-4-biphenylcarboxylates,
4-[4-alkoxyalkyl($C_{1-20}$)oxypentyl]phenyl 4-[alkyl($C_{3-20}$)carbonyloxy]benzoates,
4-[4-alkoxyalkyl($C_{1-20}$)oxypentyl]phenyl 4-[alkyl($C_{3-20}$)oxycarbonyl]benzoates,
4-[4-alkoxyalkyl($C_{1-20}$)oxypentyl]phenyl 4′-[alkyl($C_{3-20}$)carbonyloxy]-4-biphenylcarboxylates,
4-[4-alkoxyalkyl($C_{1-20}$)oxypentyl]phenyl 4′-[alkyl($C_{3-20}$)oxycarbonyl]-4-biphenylcarboxylates,
4-[4-alkoxyalkyl($C_{1-20}$)carbonyloxypentyl]phenyl 4-[alkyl($C_{3-20}$)]benzoates,
4-[4-alkoxyalkyl($C_{1-20}$)carbonyloxypentyl]phenyl 4-[alkyl($C_{3-20}$)oxy]benzoates,
4-[4-alkoxyalkyl($C_{1-20}$)carbonyloxypentyl]phenyl 4′-[alkyl($C_{3-20}$)]-4-biphenylcarboxylates,
4-[4-alkoxyalkyl($C_{1-20}$)carbonyloxypentyl]phenyl 4′-[alkyl($C_{3-20}$)oxy]-4-biphenylcarboxylates,
4-[4-alkoxyalkyl($C_{1-20}$)carbonyloxypentyl]phenyl 4-[alkyl($C_{3-20}$)carbonyloxy]benzoates,
4-[4-alkoxyalkyl($C_{1-20}$)carbonyloxypentyl]phenyl 4-[alkyl($C_{3-20}$)oxycarbonyl]benzoates,
4-[4-alkoxyalkyl($C_{1-20}$)carbonyloxypentyl]phenyl 4′-[alkyl($C_{3-20}$)carbonyloxy]-4-biphenylcarboxylates, and
4-[4-alkoxyalkyl($C_{1-20}$)carbonyloxypentyl]phenyl 4′-[alkyl($C_{3-20}$)oxycarbonyl]-4-biphenylcarboxylates,
4-[4-alkoxyalkyl($C_{1-20}$)oxypentyl]-4′-biphenylyl 4-[alkyl($C_{3-20}$)]benzoates,
4-[4-akkoxyalkyl($C_{1-20}$)oxypentyl]-4′-biphenylyl 4-[alkyl($C_{3-20}$)oxy]benzoates,
4-[4-alkoxyalkyl($C_{1-20}$)oxypentyl]-4′-biphenylyl 4′-[alkyl($C_{3-20}$)]-4-biphenylcarboxylates,
4-[4-alkoxyalkyl($C_{1-20}$)oxypentyl]-4′-biphenylyl 4′-[alkyl($C_{3-20}$)oxy]-4-biphenylcarboxylates,
4-[4-alkoxyalkyl($C_{1-20}$)oxypentyl]-4′-biphenylyl 4-[alkyl($C_{3-20}$)carbonyloxy]benzoates,
4-[4-alkoxyalkyl($C_{1-20}$)oxypentyl]-4′-biphenylyl 4-[alkyl($C_{3-20}$)oxycarbonyl]benzoates,
4-[4-alkoxyalkyl($C_{1-20}$)oxypentyl]-4′-biphenylyl 4′-[alkyl($C_{3-20}$)carbonyloxy]-4-biphenylcarboxylates,
4-[4-alkoxyalkyl($C_{1-20}$)oxypentyl]-4′-biphenylyl 4′-[alkyl($C_{3-20}$)oxycarbonyl]-4-biphenylcarboxylates,
4-[4-alkoxyalkyl($C_{1-20}$)carbonyloxypentyl]-4′-biphenylyl 4-[alkyl($C_{3-20}$)]benzoates,
4-[4-alkoxyalkyl($C_{1-20}$)carbonyloxypentyl]-4′-biphenylyl 4-[alkyl($C_{3-20}$)oxy]benzoates,
4-[4-alkoxyalkyl($C_{1-20}$)carbonyloxypentyl]-4′-biphenylyl 4′-[alkyl($C_{3-20}$)]-4-biphenylcarboxylates,
4-[4-alkoxyalkyl($C_{1-20}$)carbonyloxypentyl]-4′-biphenylyl 4′-[alkyl($C_{3-20}$)oxy]-4-biphenylcarboxylates,
4-[4-alkoxyalkyl($C_{1-20}$)carbonyloxypentyl]-4′-biphenylyl 4-[alkyl($C_{3-20}$)carbonyloxy]benzoates,
4-[4-alkoxyalkyl($C_{1-20}$)carbonyloxypentyl]-4′-biphenylyl 4-[alkyl($C_{3-20}$)oxycarbonyl]benzoates,
4-[4-alkoxyalkyl($C_{1-20}$)carbonyloxypentyl]-4′-biphenylyl 4′-[alkyl($C_{3-20}$)carbonyloxy]-4-biphenylcarboxylates,
4-[4-alkoxyalkyl($C_{1-20}$)carbonyloxypentyl]-4′-biphenylyl 4′-[alkyl($C_{3-20}$)oxycarbonyl]-4-biphenylcarboxylates.

In addition to the above exemplified compounds, examples further includes compounds, wherein 4-[4-alkyl($C_{1-20}$)oxypentyl, 4-[4-alkyl($C_{1-20}$)carbonyloxypentyl, 4-[4-alkoxyalkyl($C_{1-20}$)oxypentyl and 4-[4-alkoxyalkyl($C_{1-20}$)carbonyloxypentyl] are replaced by 4-[5-alkyl($C_{1-20}$)oxyhexyl], 4-[5-alkyl($C_{1-20}$)-carbonyloxyhexyl], 4-[5-alkoxyalkyl($C_{1-20}$)oxyhexyl] and 4-[5-alkoxyalkyl($C_{1-20}$)carbonyloxyhexyl]. Furthermore, examples include compounds, wherein the above-mentioned groups are replaced by 4-[6-alkyl-($C_{1-20}$)oxyheptyl], 4-[6-alkyl($C_{1-20}$)carbonyloxyheptyl], 4-[6-alkoxyalkyl($C_{1-20}$)oxyheptyl] and 4-[6-alkoxyalkyl($C_{1-20}$)carbonyloxyheptyl].

The optically active aromatic compound (I) including such compounds as enumerated as above is variable for liquid crystal materials.

In case the aromatic compound (I) is utilized as a constituent element of liquid crystals, especially of ferroelectric liquid crystals, the substituent group $R_2$ of the general formula (I) is preferably an alkyl or

alkoxyalkyl group in view of practical optical stability and the like. Compounds, wherein the carbon number of the substituent group $R_2$ is 1 to 10, are cited as those exhibiting more favorable various physical properties in practical application. In particular, compounds, wherein the substituent group $R_2$ having a carbon number of 1 to 10 is an alkoxyalkyl group, are more effective in lowering the temperature range of liquid crystals.

As for the substituent group $R_1$, an alkyl group having a carbon number of 8 to 16 is more preferred for practical use, but is not restricted thereto as one component of liquid crystal compositions.

Compounds, wherein S is 1, have better effects on enhancement of spontaneous polarization values in a ferroelectric liquid crystal phase or in a liquid crystal composition comprising the compounds used as an active component than those of the corresponding compounds, wherein S is 0.

In order to exhibit high-speed responsiveness which is a feature of ferroelectric liquid crystal, the liquid crystal compounds preferably have a low viscosity coefficient and in case of compounds of the formula (I), those of $\ell$ = k = 1 are especially preferred.

In use as a liquid crystal material, said optically active aromatic compounds (I) are usually mixed with one or more other types of liquid crystal compounds although said compounds (I) may be used singly.

The other types of liquid crystal compounds to be mixed and their mixing ratio are properly selected according to the purpose of use and not specified.

Such liquid crystal material can be effectively utilized for producing a light switching element by a known method.

As described above, in accordance with this invention, the novel optically active aromatic compounds represented by the formula (I) can be easily obtained in a high yield. These optically active aromatic compounds have very excellent properties as liquid crystal compounds, so that they can be effectively utilized for preparing the liquid crystal materials and the light switching elements can be produced by utilizing such liquid crystal materials.

## PREFERRED EMBODIMENTS OF THE INVENTION

The present invention will hereinafter be described in accordance with the examples of the invention.

### Example 1

Into a four-necked flask equipped with a thermometer and a stirrer were charged 1.11 g (5 mmols) of (+)-4-(1-methyl-2-propoxyethyl)benzoic acid, 1.33 g (6 mmols) of 4-octyloxyphenol and 30 ml of anhydrous dichloromethane. Thereto were added 1.22 g (6 mmols) of N,N-dicyclohexylcarbodiimide and 0.1 g of 4-pyrrolidinopyridine and the mixture was stirred at room temperature for a whole day and night.

After completion of a reaction, the resulting precipitate was collected by filtration and diluted with 200 ml of toluene. The organic layer was washed with water, 5% aqueous acetic acid, water, 5% aqueous sodium hydrogencarbonate, and water in succession, then dried over anhydrous magnesium sulfate and thereafter concentrated under reduced pressure. The residue was purified by silica gel column chromatography (eluent: toluene-ethyl acetate) to obtain 1.90 g (yield 89%) of (+)-4-octyloxyphenyl 4-(1-methyl-2-propoxyethyl)benzoate.

### Examples 2-14

Reaction and after-treatment were carried out in the same manner as in Example 1 except that starting materials shown in Table 1 were used. The results are shown in Table 1.

Table 1

$Z = -\overset{CH_3}{\overset{|}{C}}H(CH_2)_p-$ (* at C)

| Example | Starting materials | | | | | | | | | | |
|---|---|---|---|---|---|---|---|---|---|---|---|
| | Phenol (II) | | | | Carboxylic acid (III) | | | | | | |
| | $R_1$ | Y | ℓ | m | k | p | s | $R_2$ | $R_1$ | m | Y |
| 1 | $n-C_8H_{17}$ | -O- | 1 | 1 | 1 | 1 | 0 | $n-C_3H_7$ | $n-C_8H_{17}$ | 1 | -O- |
| 2 | " | " | " | " | " | " | " | $n-C_5H_{11}$ | " | " | " |
| 3 | " | -COO- | " | " | " | " | " | $n-C_3H_7$ | " | " | -COO- |
| 4 | " | -OCO- | " | " | " | " | " | " | " | " | -OCO- |
| 5 | " | -O- | 2 | " | " | " | " | $n-C_5H_{11}$ | " | " | -O- |
| 6 | $n-C_{10}H_{21}$ | - | " | 0 | " | " | " | " | $n-C_{10}H_{21}$ | 0 | - |

- cont'd -

Table 1 (cont'd)

| Optically active aromatic compound (I) | | | | | | Yield (%) | $[\alpha]_D^{20}$ (C=1, $CHCl_3$) | Phase-transition temperature (°C) |
|---|---|---|---|---|---|---|---|---|
| ℓ | X | k | s | p | $R_2$ | | | |
| 1 | -OCO- | 1 | 0 | 1 | $n-C_3H_7$ | 89 | +2.8° | $K \xrightarrow{29} I$ |
| " | " | " | " | " | $n-C_5H_{11}$ | 86 | -3° | $K \xrightarrow{23} I$ |
| " | " | " | " | " | $n-C_3H_7$ | 84 | +3° | K — I |
| " | " | " | " | " | " | 80 | +2.7° | K — I |
| 2 | " | " | " | " | $n-C_5H_{11}$ | 88 | +2° | $K \xrightarrow{72} Sc^{*} \xrightarrow{90} Ch \xrightarrow{105} I$ |
| " | " | " | " | " | " | 88 | +3° | |

Table 1 (cont'd)

| Example | Starting materials | | | | | | | | | | |
|---|---|---|---|---|---|---|---|---|---|---|---|
| | Phenyl (II) | | | | Carboxylic acid (III) | | | | | | |
| | $R_1$ | Y | ℓ | m | k | p | s | $R_2$ | $R_1$ | m | Y |
| 7 | $n\text{-}C_{10}H_{21}$ | -O- | 1 | 1 | 1 | 2 | 0 | $n\text{-}C_5H_{11}$ | $n\text{-}C_{10}H_{21}$ | 1 | -O- |
| 8 | $n\text{-}C_{16}H_{33}$ | " | " | " | 1 | 2 | 1 | $CH_3$ | $n\text{-}C_{16}H_{33}$ | " | " |
| 9 | $n\text{-}C_{10}H_{21}$ | " | " | " | 2 | 2 | 0 | $n\text{-}C_3H_7$ | $n\text{-}C_{10}H_{21}$ | " | " |
| 10 | $n\text{-}C_{12}H_{25}$ | " | " | " | 1 | 1 | 1 | $n\text{-}C_{12}H_{25}$ | $n\text{-}C_{12}H_{25}$ | " | " |
| 11 | $n\text{-}C_{10}H_{21}$ | " | " | " | 1 | 2 | 0 | $-(CH_2)_3OC_2H_5$ | $n\text{-}C_{10}H_{21}$ | " | " |
| 12 | $n\text{-}C_{12}H_{25}$ | " | " | " | 1 | 1 | 0 | $CH_2\overset{F}{\underset{*(S)}{C}}HC_5H_{11}$ | $n\text{-}C_{12}H_{25}$ | " | " |
| 13 | $n\text{-}C_{12}H_{25}$ | " | 2 | " | 1 | 3 | 0 | $CH_3$ | $n\text{-}C_{12}H_{25}$ | " | " |
| 14 | $n\text{-}C_{12}H_{25}$ | " | 2 | " | 1 | 4 | 0 | $CH_3$ | $n\text{-}C_{12}H_{25}$ | " | " |

- cont'd -

Table 1 (cont'd)

| Optically active aromatic compound (I) | | | | | | Yield | $[\alpha]_D^{20}$ | Phase system |
|---|---|---|---|---|---|---|---|---|
| ℓ | X | k | s | p | $R_2$ | (%) | (C=1, $CHCl_3$) | |
| 1 | -OCO- | 1 | 0 | 2 | $n-C_5H_{11}$ | 83 | +6.5° | K 3 I |
| 1 | " | 1 | 1 | 2 | $CH_3$ | 84 | -0.5° | K I |
| 1 | " | 2 | 0 | 2 | $n-C_3H_7$ | 88 | +3.8° | |
| 1 | " | 1 | 1 | 1 | $n-C_{12}H_{25}$ | 83 | -1.0° | K I |
| 1 | " | 1 | 0 | 2 | $-(CH_2)_3OC_2H_5$ | 85 | +6.8° | K I |
| 1 | " | 1 | 0 | 1 | $CH_2CH(F)C_5H_{11}$ *(S) | 91 | +3.0° | K I |
| 2 | " | 1 | 0 | 3 | $CH_3$ | 89 | +3.0° | |
| 2 | " | 1 | 0 | 4 | $CH_3$ | 91 | +4.1° | |

Example 15

Into a four-necked flask equipped with a thermometer and a stirrer were charged 1.11 g (5 mmols) of (-)-4-(1-methyl-2-pentyloxyethyl)phenol and 20 ml of pyridine. Thereto was added 1.78 g (6 mmols) of 4-

decyloxybenzoic acid chloride at 20-25 °C, followed by stirring for 1 hour at that temperature and then for 4 hours at 40 °C.

After completion of reaction, the reaction mixture was poured into 4N hydrochloric acid and extracted with 200 ml of toluene. The organic layer was washed with water, 5% aqueous sodium hydrogencarbonate and water in succession, then dried over anhydrous magnesium sulfate and thereafter concentrated under reduced pressure. The residue was purified by silica gel column chromatography (eluent: toluene-ethyl acetate) to obtain 2.32 g (yield 96%) of (-)-4-decyloxybenzoic acid 4-(1-methyl-2-pentyloxyethyl)phenyl ester.

$$[\alpha]_D^{20°} -3°$$

(c = 1, $CHCl_3$) phase transition temperature

$$K \overset{25}{\longrightarrow} I.$$

$$S_A \; 23$$

Examples 16-26

Reaction and after-treatment were carried out in the same manner as in Example 15 except that starting materials shown in Table 2 were used. The results obtained are shown in Table 2.

Table 2

$$Z = -\overset{CH_3}{\underset{*}{C}}H(CH_2)_p-$$

| Example | Starting materials | | | | | | | | | | |
|---|---|---|---|---|---|---|---|---|---|---|---|
| | Carboxylic acid chloride (IV) | | | | Optically active phenol (V) | | | | | | |
| | $R_1$ | Y | ℓ | m | k | p | s | $R_2$ | $R_1$ | m | Y |
| 16 | n-$C_{18}H_{37}$ | -O- | 1 | 1 | 1 | 1 | 0 | n-$C_5H_{11}$ | n-$C_{18}H_{37}$ | 1 | -O- |
| 17 | n-$C_{10}H_{21}$ | " | 2 | " | " | " | " | n-$C_5H_{11}$ | n-$C_{10}H_{21}$ | " | " |
| 18 | n-$C_{10}H_{21}$ | " | 1 | " | " | " | 1 | n-$C_5H_{11}$ | n-$C_{10}H_{21}$ | " | " |
| 19 | " | " | 1 | " | " | " | 1 | n-$C_{12}H_{25}$ | " | " | " |

- cont'd -

Table 2 (cont'd)

| Optically active aromatic compound (I) | | | | | | Yield (%) | $[\alpha]_D^{20}$ (C=1, $CHCl_3$) | Phase system |
|---|---|---|---|---|---|---|---|---|
| ℓ | X | k | s | p | $R_2$ | | | |
| 1 | -COO- | 1 | 0 | 1 | $n-C_5H_{11}$ | 98 | -2.5° | K—I |
| 2 | " | " | " | " | $n-C_5H_{11}$ | 96 | -2.7° | $K\xrightarrow{37}S_1\xrightarrow{56}S_C^*\xrightarrow{104}SA\xrightarrow{131}I$ |
| 1 | " | " | 1 | " | $n-C_5H_{11}$ | 98 | -3° | K—I |
| " | " | " | " | " | $n-C_{12}H_{25}$ | 98 | -3° | K—I |

Table 2 (cont'd)

| Example | Starting materials | | | | | | | | | | |
|---|---|---|---|---|---|---|---|---|---|---|---|
| | Carboxylic acid (IV) | | | | Optically active phenol (V) | | | | | | |
| | $R_1$ | Y | ℓ | m | k | p | s | $R_2$ | $R_1$ | m | Y |
| 20 | $n-C_{10}H_{21}$ | -O- | 1 | 1 | 1 | 1 | 0 | $-(CH_2)_3OC_2H_5$ | $n-C_{10}H_{21}$ | 1 | -O- |
| 21 | $n-C_{10}H_{21}$ | " | 1 | " | " | 2 | " | $-CH_2\overset{F}{\underset{(S)}{C}}HC_4H_9$ | $n-C_{10}H_{21}$ | 1 | " |
| 22 | " | " | 1 | " | " | " | " | $n-C_5H_{11}$ | " | " | " |

- cont'd -

Table 2 (cont'd)

| Optically active aromatic compound (I) | | | | | | Yield (%) | $[\alpha]_D^{20}$ (C=1, $CHCl_3$) | Phase transition temperature (C°) |
|---|---|---|---|---|---|---|---|---|
| ℓ | X | k | s | p | $R_2$ | | | |
| 1 | -COO- | 1 | 0 | 1 | $(CH_2)_3-OC_2H_5$ | 70 | -4.0° | K → I |
| 1 | " | " | " | 2 | $CH_2CHFC_4H_9$ (s) | 96 | -7.2° | " |
| 1 | " | " | " | " | $n-C_5H_{11}$ | 92 | -7.0° | K —11— I; K \ -22 Sc* -14 / I |

Table 2 (cont'd)

| Example | Starting materials | | | | | | | | | | |
|---|---|---|---|---|---|---|---|---|---|---|---|
| | Carboxylic acid chloride (IV) | | | | | Optically active phenol (V) | | | | | |
| | $R_1$ | Y | ℓ | m | k | p | s | $R_2$ | $R_1$ | m | Y |
| 23 | $n-C_{10}H_{21}$ | -O- | 1 | 1 | 2 | 2 | 0 | $n-C_5H_{11}$ | $n-C_{10}H_{21}$ | 1 | -O- |
| 24 | $n-C_{12}H_{25}$ | - | " | 0 | 1 | 3 | " | $CH_3$ | $n-C_{12}H_{25}$ | 0 | - |
| 25 | " | -O- | 2 | 1 | " | 4 | 1 | " | " | 1 | -O- |
| 26 | " | " | " | 1 | " | 4 | " | " | " | " | " |

- cont'd -

Table 2'(cont'd)

| Optically active aromatic compound (I) | | | | | | Yield (%) | $[\alpha]^{20}_{D}$ (C=1, $CHCl_3$) | Phase system |
|---|---|---|---|---|---|---|---|---|
| ℓ | X | k | s | p | $R_2$ | | | |
| 1 | -COO- | 2 | 0 | 2 | n-$C_5H_{11}$ | 89 | -4.0° | |
| 1 | " | 1 | " | 3 | $CH_3$ | 88 | -5.0° | K - I |
| 2 | " | " | 1 | 4 | " | 90 | +1.8° | |
| " | " | " | " | " | " | 92 | +1.5° | |

Examples 27-30

The liquid crystal compositions shown in Table 3 were prepared using the liquid crystal compounds. The preparation procedure was that a given compound weighed in a given amount was mixed in a sample

bottle, while being heated and molten.

Compound exhibiting $S_c^*$ phase by itself is also shown in Table 3, in addition to the above Examples.

[Process for the preparation of liquid crystal element]

On a glass substrate provided with an indium oxid transparent electrode, a polyimide polymeric membrane is further provided. This is rubbed using a gauze in a certain direction and then a liquid crystal cell is assembled by using glass fibers (a diameter of 5 μm) as a spacer, so as to allow two substrates to be parallel in the rubbing direction. The above liquid crystal composition(s) or compound(s) is sealed in vacuo into the liquid crystal cell to obtain a liquid crystal element.

To the thus-obtained liquid crystal element combined with a polarizer, 20 V of electric voltage were applied, and then change in transmitted light strength was observed. At that time, spontaneous polarization values (determined by Sawyer-Tower method) is shown in Table 3.

As clear from the results, when the liquid crystal materials of the present invention is used, ferroelectric liquid crystals driven at room temperature can be made when such liquid crystal materials are formed into liquid crystal compositions, even if such materials per se do not exhibit any liquid crystal phase. This ferroelectric liquid crystals have been found to posses spontaneous polarization values ($P_s$) necessary to a high speed response and further to be able to become compound(s) (compositions) having $S_c^*$ phase at a low temperature region.

Table 3

| Example | Composition component (wt%) or Compd. No. | Phase system | $P_S$ ($nc/cm^2$) |
|---|---|---|---|
| 27 | 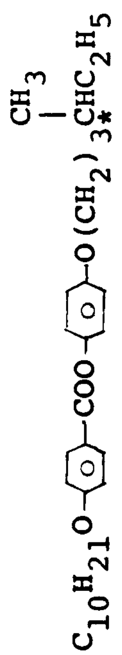 (80%) (known compd.) | K 11 $S_C^*$ 48 $S_A$ 50 N 53 I | 7 |
| | Compd. of Example 1 (20%) | | |
| 28 | 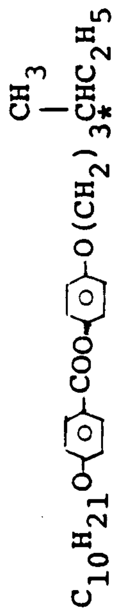 (80%) | K 8 $S_C^*$ 41 $S_A$ 49 N 51 J | 12 |
| | Compd. of Example 18 (20%) | | |
| 29 | Compd. of Example 5 | | 10 |
| 30 | Compd. of Example 17 | | 20 |
| (Cf) | 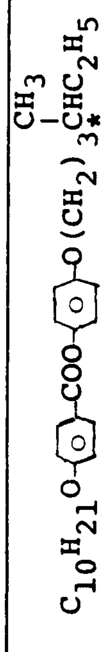 (known compd.) K 35 $S_C^*$ 70 $S_A$ 74 I $P_s \doteqdot 0$ | | |

Example 31

Into a four-necked flask equipped with a thermometer and a stirrer were charged 0.97 g (5 mmols) of (-)-4-(2-propoxypropyl)phenol, 1.67 g (6 mmols) of 4-decyloxybenzoic acid and 30 ml of anhydrous dichloromethane. Thereto were added 1.22 g (6 mmols) of N,N'-dicyclohexylcarbodiimide and 0.1 g of 4-pyrrolidinopyridine and the mixture was stirred at room temperature for a whole day and night.

After completion of reaction, the resulting precipitates was collected by filtration and diluted with 200 ml of toluene. The organic layer was washed with water, 5% aqueous acetic acid, water, 5% aqueous sodium hydrogencarbonate, and water in succession, then dried over anhydrous magnesium sulfate and thereafter concentrated under reduced pressure. The residue was purified by silica gel column chromatography (eluent: toluene-ethyl acetate) to obtain 1.95 g (yield 86%) of (-)-4-decyloxybenzoic acid 4-(2-propoxypropyl)phenyl ester.

Example 32

Into a four-necked flask equipped with a thermometer and a stirrer were charged 1.11 g (5 mmols) of (+)-4-(2-butyryloxypropyl)phenol and 20 ml of pyridine. Thereto was added 1.78 g (6 mmols) of 4-decyloxybenzoic acid chloride at 20-25 °C, followed by stirring for 1 hour at that temperature and then for 4 hours at 40 °C.

After completion of reaction, the reaction mixture was poured into 4N hydrochloric acid and extracted with 200 ml of toluene. The organic layer was washed with water, 5% aqueous sodium hydrogencarbonate and water in succession, then dried over anhydrous magnesium sulfate and thereafter concentrated under reduced pressure. The residue was purified by silica gel column chromatography (eluent: toluene-ethyl acetate) to obtain 2.29 g (yield 95%) of (+)-4-decyloxybenzoic acid 4-(2-butyryloxypropyl) phenyl ester.

Examples 33 - 49

Reaction and after-treatment were carried out in the same manner as in Example 31 except that starting carboxylic acids and starting phenols as shown in Table 4 were used. The results obtained are shown in Table 4.

Table 4

$Z = \leftarrow (CH_2)_p - \underset{*}{C}H(CH_3)$ (p=1); m=1, k=1

| Example | Compound (II) or (IV) | | | Optically active Compound (V) or (III) | | Optically active aromatic compound (I) | | |
|---|---|---|---|---|---|---|---|---|
| | $R_1$ | Y | ℓ | s | $R_2$ | $R_1$ | Y | ℓ |
| 31 | $n-C_{10}H_{21}$ | -O- | 1 | 0 | $n-C_3H_7$ | $n-C_{10}H_{21}$ | -O- | 1 |
| 32 | $n-C_{10}H_{21}$ | -O- | 1 | 1 | $n-C_3H_7$ | $n-C_{10}H_{21}$ | -O- | 1 |
| 33 | $n-C_{10}H_{21}$ | -O- | 1 | 0 | $n-C_5H_{11}$ | $n-C_{10}H_{21}$ | -O- | 1 |
| 34 | $n-C_8H_{17}$ | -COO- | 1 | 0 | $n-C_3H_7$ | $n-C_8H_{17}$ | -COO- | 1 |
| 35 | $n-C_8H_{17}$ | -O- | 1 | 0 | $-(CH_2)_3OC_2H_5$ | $n-C_8H_{17}$ | -O- | 1 |
| 36 | $n-C_8H_{17}$ | -O- | 1 | 0 | $-CH_2\underset{*}{C}H(CH_3)C_2H_5$ (S) | $n-C_8H_{17}$ | -O- | 1 |
| 37 | $n-C_8H_{17}$ | -O- | 1 | 0 | $-CH_2\underset{*}{C}H(F)C_5H_{11}$ (S) | $n-C_8H_{17}$ | -O- | 1 |

- cont'd -

Table 4 (cont'd)

| X | s | $R_2$ | Yield (%) | $[\alpha]_D^{20}$, (c=1, $CHCl_3$) | Phase transition temperature (°C) |
|---|---|---|---|---|---|
| -COO- | 0 | $n-C_3H_7$ | 86 | -6° | $K\xrightarrow{31}I$ |
| -COO- | 1 | $n-C_3H_7$ | 95 | +0.8° | $K\xrightarrow{30}I$ |
| -COO- | 0 | $n-C_5H_{11}$ | 88 | -5.3° | $K\xrightarrow{20}I$<br>$S_A$ 5 |
| -COO- | 0 | $n-C_3H_7$ | 87 | -5.8° | K—I |
| -COO- | 0 | $-(CH_2)_3OC_2H_5$ | 85 | -5.3° | " |
| -COO- | 0 | $CH_3$<br>$-CH_2\underset{*}{C}HC_2H_5$<br>(S) | 88 | -6.0° | " |
| -COO- | 0 | F<br>$-CH_2\underset{*}{C}HC_5H_{11}$<br>(S) | 86 | -6.2° | " |

Table 4 (cont'd)

$Z = -(CH_2)_P-CH(CH_3)-$ (*) (P=1);k=1

| Example | Compound (II) or (IV) | | | Optically active compound (V) or (III) | | Optically active phenyl propanol derivative (I) | | |
|---|---|---|---|---|---|---|---|---|
| | $R_1$ | Y | ℓ | s | $R_2$ | $R_1$ | Y | ℓ |
| 38 | n-$C_{10}H_{21}$ | -O- | 1 | 0 | n-$C_5H_{11}$ | n-$C_{10}H_{21}$ | -O- | 1 |
| 39 | n-$C_9H_{19}$ | -(**) | 2 | 0 | n-$C_5H_{11}$ | n-$C_9H_{19}$ | -(**) | 2 |
| 40 | n-$C_{10}H_{21}$ | -O- | 2 | 0 | n-$C_5H_{11}$ | n-$C_{10}H_{21}$ | -O- | 2 |
| 41 | n-$C_{10}H_{21}$ | -O- | 2 | 0 | n-$C_5H_{11}$ | n-$C_{10}H_{21}$ | -O- | 2 |
| 42 | n-$C_{10}H_{21}$ | -O- | 1 | 0 | n-$C_8H_{17}$ | n-$C_{10}H_{21}$ | -O- | 1 |
| 43 | n-$C_{16}H_{33}$ | -O- | 1 | 0 | n-$C_5H_{11}$ | n-$C_{16}H_{33}$ | -O- | 1 |

- cont'd -

Table 4 (cont'd)

| X | s | $R_2$ | Yield (%) | $[\alpha]_D^{20}$, (c=1, $CHCl_3$) | Phase transition temperature (°C) |
|---|---|---|---|---|---|
| -OCO- | 0 | $n-C_5H_{11}$ | 89 | -5.3° | $K \xrightarrow{5} I$ |
| -COO- | 0 | $n-C_5H_{11}$ | 85 | -5° | |
| -COO- | 0 | $n-C_5H_{11}$ | 84 | -5° | $K \xrightarrow{53} S_C^* \xrightarrow{90} S_A \xrightarrow{125} I$ |
| -OCO- | 0 | $n-C_5H_{11}$ | 81 | -5.2° | $K \xrightarrow{53} S_C^* \xrightarrow[89]{} Ch \xrightarrow{110} I$ |
| -COO- | 0 | $n-C_8H_{17}$ | 85 | -4.8° | $K \longrightarrow I$ |
| -COO- | 0 | $n-C_5H_{11}$ | 84 | -4.2° | |

** m = 0

Table 4 (cont'd) $Z=\leftarrow(CH_2)_p\overset{CH_3}{C^*H}-$ (p=1)

| Example | Starting material compound {(IV) or (II)} | | | | Optically active compd. {(V) or (III)} | | | Optically active aromatic compound (I) | | | |
|---|---|---|---|---|---|---|---|---|---|---|---|
| | $R_1$ | Y | m | ℓ | k | s | $R_2$ | $R_1$ | Y | m | ℓ |
| 44 | $n-C_8H_{17}$ | -OCO- | 1 | 1 | 1 | 1 | $n-C_5H_{11}$ | $n-C_8H_{17}$ | -OCO- | 1 | 1 |
| 45 | $n-C_{10}H_{21}$ | -O- | 1 | 1 | 1 | 0 | $n-C_{12}H_{25}$ | $n-C_{10}H_{21}$ | -O- | 1 | 1 |
| 46 | $n-C_8H_{17}$ | -O- | 1 | 1 | 2 | 0 | $n-C_3H_7$ | $n-C_8H_{17}$ | -O- | 1 | 1 |
| 47 | $n-C_8H_{17}$ | -O- | 1 | 1 | 2 | 0 | $n-C_3H_7$ | $n-C_8H_{17}$ | -O- | 1 | 1 |
| 48 | $n-C_{12}H_{25}$ | -O- | 1 | 1 | 2 | 0 | $(CH_2)_3OC_2H_5$ | $n-C_{12}H_{25}$ | -O- | 1 | 1 |
| 49 | $n-C_{12}H_{25}$ | - (**) | 0 | 1 | 2 | 1 | $n-C_5H_{11}$ | $n-C_{12}H_{25}$ | - (**) | 0 | 1 |

- cont'd -

Table 4 (cont'd)

| k | X | s | $R_2$ | Yield (%) | $[\alpha]_D^{20}$ (c=1 $CHCl_3$) | Phase transition temperature (°C) |
|---|---|---|---|---|---|---|
| 1 | -OCO- | 1 | $n-C_5H_{11}$ | 91 | +1.1° | K—I |
| 1 | -COO- | 0 | $n-C_{12}H_{25}$ | 73 | -4.2° | K—I |
| 2 | -COO- | 0 | $n-C_3H_7$ | 88 | -4.5° | $K \xrightarrow{66} S_1 \xrightarrow{71} S_c^* \xrightarrow{107} Ch \xrightarrow{126} I$ |
| 2 | -OCO- | 0 | $n-C_3H_7$ | 82 | -4.6° | |
| 2 | -COO- | 0 | $(CH_2)_3OC_2H_5$ | 87 | -5.1° | |
| 2 | -COO- | 1 | $n-C_5H_{11}$ | 88 | +2.0° | |

** m=0

Examples 50 - 53

The liquid crystal compositions shown in Table 5 were prepared using the liquid crystal compounds the preparation procedure was that a given compound weighed in a given amount was mixed in a sample bottle, while being heated and molten.

Compound exhibiting $S_c^*$ phase by itself is also shown in Table 5, in addition to the above Examples.

[Process for the preparation of liquid crystal element]

On a glass substrate provided with an indium oxide transparent electrode, a polyimide polymeric membrane is further provided. This is rubbed using a gauze in a certain direction and then a liquid crystal cell is assembled by using glass fibers (a diameter of 5 μm) as a spacer, so as to allow two substrates to be parallel in the rubbing direction. The above liquid crystal composition(s) or compound(s) is sealed in vacuo into the liquid crystal cell to obtain a liquid crystal element.

To the thus-obtained liquid crystal element combined with a polarizer, 20 V of electric voltage were applied, and then change in transmitted light strength was observed. At that time, spontaneous polarization values (determined by Soya-Toya method) is shown in Table 5.

As clear from the results, when the liquid crystal materials of the present invention is used, ferroelectric liquid crystals driven at room temperature can be made when such liquid crystal materials are formed into liquid crystal compositions, even if such materials per se do not exhibit any liquid crystal phase. This ferroelectric liquid crystals have been found to posses spontaneous polarization values ($P_S$) necessary to a high speed response and further to be able to become compounds(s) (compositions) having $S_c^*$ phase at a low temperature region.

Table 5

| Example | Composition component (wt%) or Compd. No. | Phase transition temperature (°C) | Ps (nc/cm²) |
|---|---|---|---|
| 50 | 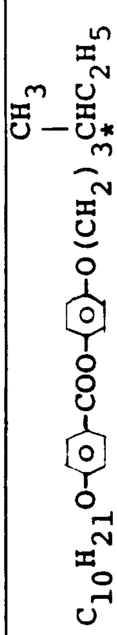 (80%)<br>(known compd.)<br>Compd. of Example 38 (20%) | K —8— $S_C^*$ —47— $S_A$ —51— N —58— I | 8 |
| 51 | 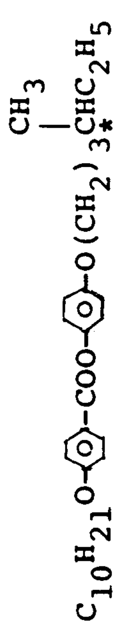 (80%)<br>Compd. of Example 32 (20%) | K —5— $S_C^*$ —42— $S_A$ —47— N —51— J | 16 |
| 52 | Compd. of Example 41 | | 30 |
| 53 | Compd. of Example 46 | | 20 |
| (Cf) | 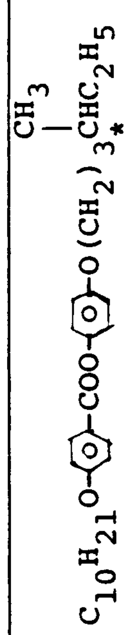<br>K —35— $S_C^*$ —70— $S_A$ —74— I | (known compd.)<br>$P_S \doteqdot 0$ | |

Example 54

Into a four-necked flask equipped with a thermometer and a stirrer were charged 1.04 g (5 mmols) of (-)-4-(3-propoxybutyl)phenol, 1.67 g (6 mmols) of 4-decyloxybenzoic acid and 30 ml of anhydrous dichloromethane. Thereto were added 1.22 g (6 mmols) of N,N′-dicyclohexylcarbodiimide and 0.1 g of 4-pyrrolidinopyridine and the mixture was stirred at room temperature for a whole day and night.

After completion of reaction, the resulting precipitate was collected by filtration and diluted with 200 ml of toluene. The organic layer was washed with water, 5% aqueous acetic acid, water, 5% aqueous sodium

hydrogencarbonate, and water in succession, then dried over anhydrous magnesium sulfate and thereafter concentrated under reduced pressure. The residue was purified by silica gel column chromatography (eluent: toluene-ethyl acetate) to obtain 2.08 g (yield 89%) of (-)-4-decyloxybenzoic acid 4-(2-propoxybutyl)-phenyl ester.

Example 55

Into a four-necked flask equipped with a thermometer and a stirrer were charged 1.18 g (5 mmols) of (+)-4-(3-butyryloxybutyl)phenol and 20 ml of pyridine. Thereto was added 1.78 g (6 mmols) of 4-decyloxybenzoic acid chloride at 20-25 °C, followed by stirring for 1 hour at that temperature and then for 4 hours at 40 °C.

After completion of reaction, the reaction mixture was poured into 4N hydrochloric acid and extracted with 200 ml of toluene. The organic layer was washed with water, 5% aqueous sodium hydrogencarbonate and water in succession, then dried over anhydrous magnesium sulfate and thereafter concentrated under reduced pressure. The residue was purified by silica gel column chromatography (eluent: toluene-ethyl acetate) to obtain 2.38 g (yield 96%) of (+)-4-decyloxybenzoic acid 4-(3-butyryloxybutyl)phenyl ester.

Examples 56 - 88

Reaction and after-treatment were carried out in the same manner as in Example 54 except that starting carboxylic acids and starting phenols as shown in Table 6 were used. The results obtained are shown in Table 6. (For reference, yields and properties of the compounds obtained in Examples 54-55 are also shown in Table 6.)

Table 6

$$Z = -(CH_2)_2-\underset{*}{\overset{CH_3}{\overset{|}{C}H}}-$$

| Example | Carboxylic acid (IV) | | | | Optically active phenol (V) | | | Optically active aromatic compound (I) | | |
|---|---|---|---|---|---|---|---|---|---|---|
| | $R_1$ | Y | ℓ | m | k | s | $R_2$ | $R_1$ | Y | m |
| 54 | $n-C_{10}H_{21}$ | -O- | 1 | 1 | 1 | 0 | $n-C_3H_7$ | $n-C_{10}H_{21}$ | -O- | 1 |
| 55 | $n-C_{10}H_{21}$ | -O- | 1 | 1 | 1 | 1 | $n-C_3H_7$ | $n-C_{10}H_{21}$ | -O- | 1 |
| 56 | $n-C_7H_{15}$ | -O- | 1 | 1 | 1 | 0 | $n-C_3H_7$ | $n-C_7H_{15}$ | -O- | 1 |
| 57 | $n-C_{10}H_{21}$ | -O- | 1 | 1 | 1 | 0 | $n-C_5H_{11}$ | $n-C_{10}H_{21}$ | -O- | 1 |
| 58 | $n-C_7H_{15}$ | -O- | 1 | 1 | 1 | 0 | $n-C_{16}H_{33}$ | $n-C_7H_{15}$ | -O- | 1 |
| 59 | $n-C_{10}H_{21}$ | -O- | 1 | 1 | 1 | 0 | $n-C_5H_{11}$ | $n-C_{16}H_{33}$ | -O- | 1 |
| 60 | $n-C_{10}H_{21}$ | -O- | 1 | 0 | 1 | 0 | $n-C_3H_7$ | $n-C_{10}H_{21}$ | - | 0 |
| 61 | $n-C_8H_{17}$ | -COO- | 1 | 1 | 1 | 0 | $n-C_5H_{11}$ | $n-C_8H_{17}$ | -COO- | 1 |
| 62 | $n-C_8H_{17}$ | -COO- | 1 | 1 | 1 | 1 | $n-C_5H_{11}$ | $n-C_8H_{17}$ | -COO- | 1 |
| 63 | $n-C_{10}H_{21}$ | -O- | 1 | 1 | 1 | 0 | $-(CH_2)_3O-C_2H_5$ | $n-C_{10}H_{11}$ | -O- | 1 |

- cont'd -

Table 6 (cont'd)

| $\ell$ | k | X | s | $R_2$ | Yield (%) | $[\alpha]_D^{20}$, (c=1, $CHCl_3$) | Phase transition temperature (°C) |
|---|---|---|---|---|---|---|---|
| 1 | 1 | -COO- | 0 | n-$C_3H_7$ | 89 | -6° | K $\xrightarrow{15.5}$ I; $-11.5$ $S_C^*$ $\overset{9}{-}$ $S_A$ 15 |
| 1 | 1 | -COO- | 1 | n-$C_3H_7$ | 96 | +2° | K $\xrightarrow{33}$ I; 4.9 $S_A$ 5.8 |
| 1 | 1 | -COO- | 0 | n-$C_3H_7$ | 90 | -6.1° | K $\xrightarrow{36}$ I; -7.5 $S_A$ 3.3 |
| 1 | 1 | -COO- | 0 | n-$C_5H_{11}$ | 85 | -6° | K $\xleftarrow[0]{}$ $S_C^*$ $\xleftarrow[8]{}$ I |
| 1 | 1 | -COO- | 0 | n-$C_{16}H_{33}$ | 88 | -4° | |
| 1 | 1 | -COO- | 0 | n-$C_5H_{11}$ | 85 | -5.2° | |
| 1 | 1 | -COO- | 0 | n-$C_3H_7$ | 84 | -5° | K $\xrightarrow{14.5}$ I |
| 1 | 1 | -COO- | 0 | n-$C_5H_{11}$ | 88 | -5.8° | |
| 1 | 1 | -COO- | 1 | n-$C_5H_{11}$ | 94 | +1.9° | K $\xleftarrow[-4]{}$ $S_A$ $\xleftarrow[-2]{}$ I |
| 1 | 1 | -COO- | 0 | $-(CH_2)_3OC_2H_5$ | 90 | -6° | K $\xleftarrow[-26]{}$ $S_C^*$ $\xleftarrow[-3]{}$ $S_A$ $\xleftarrow[4]{}$ I |

Table 6 (cont'd)

| Example | Carboxylic acid (IV) | | | | Optically active phenol (V) | | | Optically active aromatic compound (I) | | |
|---|---|---|---|---|---|---|---|---|---|---|
| | $R_1$ | Y | ℓ | m | k | s | $R_2$ | $R_1$ | Y | m |
| 64 | $n-C_{10}H_{21}$ | -O- | 1 | 1 | 1 | 0 | $-CH_2\overset{*}{C}H(Cl)CH_3$ (S) | $n-C_{10}H_{21}$ | -O- | 1 |
| 65 | $n-C_{10}H_{21}$ | -O- | 1 | 1 | 1 | 0 | $n-C_8H_{17}$ | $n-C_{10}H_{21}$ | -O- | 1 |
| 66 | $n-C_{10}H_{21}$ | -O- | 2 | 1 | 1 | 0 | $n-C_3H_7$ | $n-C_{10}H_{21}$ | -O- | 1 |
| 67 | $n-C_9H_{19}$ | -(**) | 2 | 0 | 1 | 0 | $n-C_3H_7$ | $n-C_9H_{19}$ | -(**) | 0 |
| 68 | $n-C_{10}H_{21}$ | -O- | 2 | 1 | 1 | 1 | $n-C_3H_7$ | $n-C_{10}H_{21}$ | -O- | 1 |
| 69 | $n-C_8H_{17}$ | -O- | 1 | 1 | 2 | 0 | $n-C_3H_7$ | $n-C_8H_{17}$ | -O- | 1 |
| 70 | $n-C_{10}H_{21}$ | -O- | 1 | 1 | 2 | 1 | $n-C_5H_{11}$ | $n-C_{10}H_{21}$ | -O- | 1 |
| 71 | $n-C_{12}H_{25}$ | -O- | 1 | 1 | 1 | 0 | $n-C_2H_5$ | $n-C_{12}H_{25}$ | -O- | 1 |
| 72 | $n-C_{10}H_{21}$ | -O- | 1 | 1 | 1 | 0 | $-CH_2\overset{*}{C}H(F)C_5H_{11}$ (S) | $n-C_{10}H_{21}$ | -O- | 1 |

- cont'd -

Table 6 (Cont'd)

| ℓ | X | s | $R_2$ | Yield (%) | $[\alpha]_D^{20}$, (c=1, $CHCl_3$) | Phase transition temperature (°C) |
|---|---|---|---|---|---|---|
| 1 | -COO- | 0 | $-CH_2\overset{Cl}{\overset{\mid}{C}}HCH_3$ * (S) | 89 | -6.4° | |
| 1 | -COO- | 0 | $n-C_8H_{17}$ | 88 | -5.3° | $K \xleftarrow{-16} S_C^* \xleftarrow{10} I$ |
| 2 | -COO- | 0 | $n-C_3H_7$ | 86 | -5° | $K \overset{40}{-} S_1 \overset{132}{-} S_C^* \overset{141.5}{-} S_A - I$ |
| 2 | -COO- | 0 | $n-C_3H_7$ | 85 | -5.1° | $K \overset{44}{-} S_1 \overset{65.5}{-} S_C^* \overset{86}{-} S_A \overset{113}{-} I$ |
| 2 | -COO- | 1 | $n-C_3H_7$ | 81 | +1.9° | |
| 1 | -COO- | | $n-C_3H_7$ | 84 | -5° | $K \xrightarrow{30} S_1 \xrightarrow{72} S_C^* \xrightarrow{110} C_h \xrightarrow{129} I$ |
| 1 | -COO- | 1 | $C_5H_{11}$ | 82 | +2.1° | |
| 1 | -COO- | 0 | $n-C_2H_5$ | 86 | -5° | $K \xrightarrow{26} S_C^* \xrightarrow{30} S_A \xrightarrow{31} I$ |
| 1 | -COO- | 0 | $-CH_2\overset{F}{\overset{\mid}{C}}HC_5H_{11}$ (s) | 89 | -6.3° | |

Table 6 (cont'd)

| Example | Carboxylic acid (IV) | | | | Optically active phenol (V) | | | Optically active aromatic compound (I) | | |
|---|---|---|---|---|---|---|---|---|---|---|
| | $R_1$ | Y | ℓ | m | k | s | $R_2$ | $R_1$ | Y | m |
| 73 | n-$C_{10}H_{21}$ | -O- | 1 | 1 | 1 | 1 | $CH_3$ | n-$C_{10}H_{21}$ | -O- | 1 |
| 74 | n-$C_{10}H_{21}$ | -O- | 1 | 1 | 1 | 1 | $C_5H_{11}$ | n-$C_{10}H_{21}$ | -O- | 1 |
| 75 | n-$C_{10}H_{21}$ | -O- | 1 | 1 | 1 | 1 | $C_8H_{17}$ | n-$C_{10}H_{21}$ | -O- | 1 |

- cont'd -

Table 6 (cont'd)

| ℓ | k | X | s | $R_2$ | Yield (%) | $[\alpha]_D^{20}$, (c=1 $CHCl_3$) | Phase transition temperature |
|---|---|---|---|---|---|---|---|
| 1 | 1 | -COO- | 1 | $CH_3$ | 82 | +3.1° | $K \leftarrow S_C^* \xleftarrow{11} S_A \xleftarrow{20} I$ |
| 1 | 1 | -COO- | 1 | $C_5H_{11}$ | 81 | +1.9° | $K \xleftarrow{-2} S_A \xleftarrow{5} I$ |
| 1 | 1 | -COO- | 1 | $C_8H_{17}$ | 84 | +2.0° | $K \xrightarrow{6.9} S_A \xrightarrow{25} I$ |

Table 6 (cont'd)

| Example | Starting compound II | | | | Starting compound (III) | | | | | |
|---|---|---|---|---|---|---|---|---|---|---|
| | $R_1$ | Y | ℓ | m | k | s | $R_2$ | $R_1$ | Y | m |
| 76 | $n-C_{10}H_{21}$ | -O- | 1 | 1 | 1 | 0 | $n-C_5H_{11}$ | $n-C_{10}H_{21}$ | -O- | 1 |
| 77 | $n-C_{16}H$ | -O- | 1 | 1 | 1 | 0 | $n-C_5H_{11}$ | $n-C_{16}H_{33}$ | -O- | 1 |
| 78 | $n-C_{10}H_{21}$ | -O- | 1 | 1 | 1 | 1 | $n-C_3H_7$ | $n-C_{10}H_{21}$ | -O- | 1 |
| 79 | $n-C_{10}H_{21}$ | -O- | 1 | 1 | 1 | 0 | $CH_2\overset{F}{C}HC_5H_{11}$ (S) | $n-C_{10}H_{21}$ | -O- | 1 |
| 80 | $n-C_8H_{17}$ | -O- | 1 | 1 | 2 | 0 | $n-C_3H_7$ | $n-C_8H_{17}$ | -O- | 1 |
| 81 | $n-C_{10}H_{21}$ | -O- | 2 | 1 | 1 | 0 | $n-C_5H_{11}$ | $n-C_{10}H_{21}$ | -O- | 1 |
| 82 | $n-C_9H_{19}$ | - | 1 | 0 | 1 | 0 | $n-C_5H_{11}$ | $n-C_9H_{19}$ | - | 0 |
| 83 | $n-C_{10}H_{21}$ | -O- | 1 | 1 | 1 | 0 | $n-C_8H_{17}$ | $n-C_{10}H_{21}$ | -O- | 1 |
| 84 | $n-C_8H_{17}$ | -O- | 1 | 1 | 2 | 1 | $n-C_5H_{11}$ | $n-C_8H_{17}$ | -O- | 1 |

- cont'd -

Table 6 (cont'd)

| Optically active aromatic compound (I) | | | | | Yield (%) | $[\alpha]_D^{20}$, (c=1, $CHCl_3$) | Phase transition temperature (°C) |
|---|---|---|---|---|---|---|---|
| ℓ | k | X | s | $R_2$ | | | |
| 1 | 1 | -OCO- | 0 | $n-C_5H_{11}$ | 84 | -5.1° | $K \xrightarrow{28} I$ |
| 1 | 1 | -OCO- | 0 | $n-C_5H_{11}$ | 84 | -4.9° | $K — I$ |
| 1 | 1 | -OCO- | 1 | $n-C_3H_7$ | 88 | +1.5° | $K — I$ |
| 1 | 1 | -OCO- | 0 | $CH_2\overset{\overset{F}{\vert}}{C}HC_5H_{11}$ (S) | 81 | -5.5° | $K — I$ |
| 1 | 2 | -OCO- | 0 | $n-C_3H_7$ | 34 | -3.8° | $K \xrightarrow{35} S_1 \xrightarrow{48} S_C^* \xrightarrow{73} S_A \xrightarrow{77} Ch \xrightarrow{114} I$ |
| 2 | 1 | -OCO- | 0 | $n-C_5H_{11}$ | 86 | -5.0° | $K \xrightarrow{82} S_C^* \xrightarrow{111} I$ |
| 1 | 1 | -OCO- | 0 | $n-C_5H_{11}$ | 85 | -5.1° | $K — I$ |
| 1 | 1 | -OCO- | 0 | $n-C_8H_{17}$ | 84 | -4.3° | $K — I$ |
| 1 | 2 | -OCO- | 1 | $n-C_5H_{11}$ | 81 | +1.8° | |

Table 6 (cont'd)

| Example | Starting compound II | | | | Optically active compound (III) | | | | | |
|---|---|---|---|---|---|---|---|---|---|---|
| | $R_1$ | Y | ℓ | m | k | s | $R_2$ | $R_1$ | Y | m |
| 85 | $n-C_{10}H_{21}$ | -O- | 1 | 1 | 1 | 0 | $-(CH_2)_6OC_2H_5$ | $n-C_{10}H_{21}$ | -O- | 1 |
| 86 | $n-C_8H_{17}$ | -COO- | 1 | 1 | 1 | 0 | $n-C_5H_{11}$ | $n-C_8H_{17}$ | -COO- | 1 |
| 87 | $n-C_8H_{17}$ | -OCO- | 1 | 1 | 1 | 0 | $n-C_5H_{11}$ | $n-C_8H_{17}$ | -OCO- | 1 |
| 88 | $n-C_{10}H_{21}$ | -O- | 1 | 1 | 1 | 0 | $CH_3$<br>$-CH_2CHOC_3H_7$<br>(S) | $n-C_{10}H_{21}$ | -O- | 1 |

- cont'd -

Table 6 (cont'd)

| Optically active aromatic compound (I) | | | | | Yiled (%) | $[\alpha]_D^{20}$, (c=1, $CHCl_3$) | Phase transition temperature (°C) |
|---|---|---|---|---|---|---|---|
| ℓ | k | X | S | $R_2$ | | | |
| 1 | 1 | -OCO- | 0 | $-(CH_2)_6OC_2H_5$ | 81 | -4.0 | K—I |
| 1 | 1 | -OCO- | 0 | $n-C_5H_{11}$ | 85 | -4.1 | K—I |
| 1 | 1 | -OCO- | 0 | $n-C_5H_{11}$ | 84 | -3.9 | K—I |
| 1 | 1 | -OCO- | 0 | $-CH_2CH(CH_3)OC_3H_7$ (S) | 85 | -4.2 | K—I |

Examples 89 - 92

The liquid crystal compositions shown in Table 7 were prepared using the liquid crystal compounds. The preparation procedure was that a given compound weighed in a given amount was mixed in a sample bottle, while being heated and molten.

[Process for the preparation of liquid crystal element]

On a glass substrate provided with an indium oxid transparent electrode, a polyimide polymeric membrane is further provided. This is rubbed using a gauze in a certain direction and then a liquid crystal cell is assembled by using glass fibers (a diameter of 5 μm) as a spacer, so as to allow two substrates to be parallel in the rubbing direction. The above liquid crystal composition(s) or compound(s) is sealed in vacuo into the liquid crystal cell to obtain a liquid crystal element.

To the thus-obtained liquid crystal element combined with a polarizer, 20 V of electric voltage were applied, and then change in transmitted light strength was observed. At that time, spontaneous polarization values (determined by Soya-Toya method) is shown in Table 7.

As clear from the results, when the liquid crystal materials of the present invention is used, ferroelectric liquid crystals driven at room temperature can be made when such liquid crystal materials are formed into liquid crystal compositions, even if such materials per se do not exhibit any liquid crystal phase. This ferroelectric liquid crystals have been found to posses spontaneous polarization values ($P_s$) necessary to a high speed response and further to be able to become compound(s) (compositions) having $S_c^*$ phase at a low temperature region.

Examples 93 - 97

The liquid materials shown in Table 8 are sealed in the liquid crystal elements prepared in Example 89 and are measured respectively in the spontaneous polarization. The results are given in Table 8.

Table 7

| Example | Composition component (wt%) or Compd. No. | | Phase transition temperature (°C) | Ps (nc/cm²) |
|---|---|---|---|---|
| 89 | 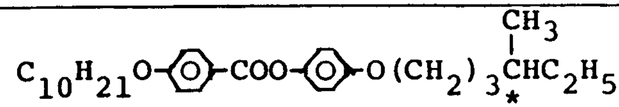 (known compound) | (80%) | $K \xrightarrow{6} S_1 \xrightarrow{13} S_C^* \xrightarrow{53} N^* \xrightarrow{57} I$ | 9 |
| | Compd. of Example 76 | (20%) | | |
| 90 | Example 54 | (50%) | $K\text{-}S_1 \xrightarrow{19} S_C^* \xrightarrow{78} S_A \xrightarrow{83} I$ | 20 |
| | Example 66 | (50%) | | |
| 91 | 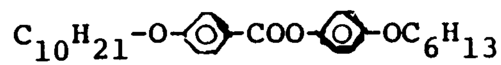 | (70%) | $K \xrightarrow{10} S_C^* \xrightarrow{55} N^* \xrightarrow{61} I$ | 11 |
| | Compd. of Example 76 | (30%) | | |
| 92 | 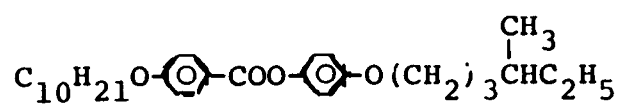 | (80%) | $K \xrightarrow{12} S_C^* \xrightarrow{55} N^* \xrightarrow{60} I$ | 29 |
| | Compd. of Example 55 | (20%) | | |
| (Cf) | 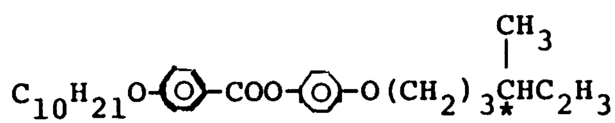 | | (known compound) | |
| | $K \xrightarrow{35} S_C^* \xrightarrow{70} S_A \xrightarrow{74} I$ | | $P_S \fallingdotseq 0$ | |

Table 8

| Example | Number of compound | Spontaneous polarization (hc/$cm^2$) |
|---|---|---|
| 93 | 57 | 12 |
| 94 | 65 | 30 |
| 95 | 69 | 23 |
| 96 | 71 | 15 |
| 97 | 81 | 20 |

Table 8

| Example | Number of compound | Spontaneous polarization ($hc/cm^2$) |
|---|---|---|
| 93 | Example 57 | 12 |
| 94 | " 65 | 30 |
| 95 | " 69 | 23 |
| 96 | " 71 | 15 |
| 97 | " 81 | 20 |

Example 98

Into a four-necked flask equipped with a thermometer and a stirrer were charged 1.11 g (5 mmols) of (-)-4-(4-propoxypentyl)phenol, 1.67 g (6 mmols) of 4-decyloxybenzoic acid and 30 ml of anhydrous dichloromethane. Thereto were added 1.22 g (6 mmols) of N,N'-dicyclohexylcarbodiimide and 0.1 g 4-pyrrolidinopyridine and the mixture was stirred at room temperature for a whole day and night.

After completion of reaction, the resulting precipitate was collected by filtration and diluted with 200 ml of toluene. The organic layer was washed with water, 5% aqueous acetic acid, water, 5% aqueous sodium hydrogencarbonate, and water in succession, then dried over anhydrous magnesium sulfate and thereafter concentrated under reduced pressure. The residue was purified by silica gel column chromatography (eluent: tolueneethyl acetate) to obtain 2.03 g (yield 84%) of (-)-4-decyloxybenzoic acid 4-(4-propoxypentyl)-phenyl ester.

Example 99

Into a four-necked flask equipped with a thermometer and a stirrer were charged 1.25 (5 mmols) of (+)-4-(4-butyloxypentyl)phenyl and 20 ml of pyridine. Thereto was added 1.78 g (6 mmols) of 4-decyloxybenzoic acid chloride at 20-25 °C, followed by stirring for 1 hour at that temperature and then for 4 hours at 40 °C.

After completion of reaction, the reaction mixture was poured into 4N hydrochloric acid and extracted with 200 ml of toluene. The organic layer was washed with water, 5% aqueous sodium hydrogencarbonate and water in succession, then dried over anhydrous magnesium sulfate and thereafter concentrated under reduced pressure. The residue was purified by silica gel column chromatography (eluent: toluene-ethyl acetate) to obtain 2.45 g (yield 96%) of (+)-4-decyloxybenzoic acid 4-(4-butyryloxypentyl)phenyl ester.

Examples 100 - 129

Reaction and after-treatment were carried out in the same manner as in Example 98 except that starting carboxylic acids and starting phenols as shown in Table 9 were used. The results obtained are shown in Table 9. (For reference, yields and properties of the compounds obtained in Examples 98-99 are also shown in Table 9.)

Table 9

$$Z = -(CH)_p-\overset{CH_3}{\underset{*}{C}H}-$$

| Example | Starting compound (IV) or (II) | | | | Optically active starting compound (V) or (III) | | | | | |
|---|---|---|---|---|---|---|---|---|---|---|
| | $R_1$ | Y | ℓ | m | $R_2$ | k | p | s | $R_1$ | Y |
| 98 | $n-C_{10}H_{21}$ | -O- | 1 | 1 | $n-C_3H_7$ | 1 | 3 | 0 | $n-C_{10}H_{21}$ | -O- |
| 99 | " | " | " | " | " | 1 | " | 1 | " | " |
| 100 | " | " | " | " | $n-C_5H_{11}$ | 1 | " | 0 | " | " |
| 101 | $n-C_8H_{17}$ | -COO- | " | " | $n-C_3H_7$ | 1 | " | " | $n-C_8H_{17}$ | -COO- |
| 102 | " | -O- | " | " | $-(CH_2)_3OC_2H_5$ | 1 | " | " | " | -O- |
| 103 | " | " | " | " | $-CH_2\underset{*}{C}(CH_3)HC_2H_5$ (S) | 1 | " | " | " | " |
| 104 | " | " | " | " | $-CH_2\underset{*}{C}(F)HC_5H_{11}$ (S) | 1 | " | " | " | " |

- cont'd -

Table 9 (cont'd)

| Optically active aromatic compound (I) | | | | | | | Yield (%) | $[\alpha]_D^{20}$, (c=1, $CHCl_3$) |
|---|---|---|---|---|---|---|---|---|
| X | $R_2$ | ℓ | k | m | s | p | | |
| -COO- | $n-C_3H_7$ | 1 | 1 | 1 | 0 | 3 | 84 | -2.3° |
| " | " | " | " | " | 1 | " | 96 | +0.6° |
| " | $n-C_5H_{11}$ | " | " | " | 0 | " | 85 | -2.2° |
| " | $n-C_3H_7$ | " | " | " | " | " | 86 | -2.5° |
| " | $-(CH_2)_3OC_2H_5$ | " | " | " | " | " | 84 | -2.3° |
| " | $CH_3$<br>\|<br>$-CH_2\underset{*}{C}HC_2H_5$<br>(S) | " | " | " | " | " | 83 | -3.0° |
| " | F<br>\|<br>$-CH_2\underset{*}{C}HC_5H_{11}$<br>(S) | " | " | " | " | " | 82.5 | -3.2° |

Table 9 (cont'd)

| Example | Starting material of dl-compd. side (IV) or (II) | | | | Optically active starting material (V) or (III) | | | | | |
|---|---|---|---|---|---|---|---|---|---|---|
| | $R_1$ | Y | ℓ | m | $R_2$ | k | p | s | $R_1$ | Y |
| 105 | n-$C_{10}H_{21}$ | -O- | 1 | 1 | n-$C_5H_{11}$ | 1 | 3 | 0 | n-$C_{10}H_{21}$ | -O- |
| 106 | n-$C_9H_{19}$ | -(**) | 2 | 0 | " | " | " | " | n-$C_9H_{19}$ | -(**) |
| 107 | n-$C_{10}H_{21}$ | -O- | " | 1 | " | " | " | " | n-$C_{10}H_{21}$ | -O- |
| 108 | " | " | " | " | " | " | " | " | " | " |
| 109 | " | " | " | " | n-$C_8H_{17}$ | " | " | " | " | " |
| 110 | n-$C_{16}H_{33}$ | " | 1 | " | n-$C_5H_{11}$ | " | " | " | n-$C_{16}H_{33}$ | " |
| 111 | n-$C_8H_{17}$ | -OCO- | " | " | n-$C_{16}H_{33}$ | " | " | " | n-$C_8H_{17}$ | -OCO- |

- cont'd -

Table 9 (cont'd)

| Optically active aromatic compound (I) | | | | | | | Yield (%) | $[\alpha]_D^{20}$, (c=1, $CHCl_3$) |
|---|---|---|---|---|---|---|---|---|
| X | $R_2$ | ℓ | k | m | s | p | | |
| -OCO- | $n-C_5H_{11}$ | 1 | 1 | 1 | 0 | 3 | 89 | -2.2° |
| -COO- | $n-C_5H_{11}$ | 2 | " | 0 | " | " | 88 | -1.9° |
| " | " | " | " | 1 | " | " | 90 | -1.9° |
| -OCO- | " | " | " | " | " | " | " | -2.0° |
| -COO- | $n-C_8H_{17}$ | " | " | " | " | " | 89 | -1.8° |
| " | $n-C_5H_{11}$ | 1 | " | " | " | " | 87 | -1.6° |
| " | $n-C_{16}H_{33}$ | " | " | " | " | " | 85 | -1.8° |

** m=0

Table 9 (cont'd)

| Example | Starting compound (IV) or (II) | | | | Optically active compound (V) or (III) | | | | | |
|---|---|---|---|---|---|---|---|---|---|---|
| | $R_1$ | Y | ℓ | m | $R_2$ | k | p | s | $R_1$ | Y |
| 112 | n-$C_8H_7$ | -O- | 1 | 1 | n-$C_3H_7$ | 2 | 3 | 0 | n-$C_8H_{17}$ | -O- |
| 113 | " | -O- | 1 | 1 | " | 2 | 3 | 0 | n-$C_8H_{17}$ | -O- |
| 114 | n-$C_{10}H_{21}$ | -O- | 1 | 1 | " | 1 | 4 | 0 | n-$C_{10}H_{21}$ | -O- |
| 115 | " | -O- | 1 | 1 | n-$C_5H_{11}$ | 1 | 4 | 0 | " | -O- |
| 116 | " | -O- | 1 | 1 | n-$C_4H_9$ | 1 | 4 | 1 | " | -O- |
| 117 | n-$C_{16}H_{33}$ | - | 1 | 0 | n-$C_5H_{11}$ | 1 | 4 | 0 | n-$C_{16}H_{33}$ | - |
| 118 | n-$C_{10}H_{21}$ | -O- | 2 | 1 | n-$C_3H_7$ | 1 | 4 | 0 | n-$C_{10}H_{21}$ | -O- |

- cont'd -

Table 9 (cont'd)

| Optically active aromatic compound | | | | | | | Yield (%) | $[\alpha]_D^{20}$, (c=1 $CHCl_3$) |
|---|---|---|---|---|---|---|---|---|
| X | $R_2$ | ℓ | k | m | n | p | | |
| -COO- | $n-C_3H_7$ | 1 | 2 | 1 | 0 | 3 | 85 | -2.0° |
| -OCO- | $n-C_3H_7$ | 1 | 2 | 1 | 0 | 3 | 88 | -2.1° |
| -COO- | $n-C_3H_7$ | 1 | 1 | 1 | 0 | 4 | 84 | -2.5° |
| -COO- | $n-C_5H_{11}$ | 1 | 1 | 1 | 0 | 4 | 81 | -3.0° |
| -COO- | $n-C_4H_9$ | 1 | 1 | 1 | 1 | 4 | 89 | +1.5° |
| -COO- | $n-C_5H_{11}$ | 1 | 1 | 0 | 0 | 4 | 87 | -1.9° |
| -COO- | $n-C_3H_7$ | 2 | 1 | 1 | 0 | 4 | 86 | -2.1° |

Table 9 (cont'd)

| Example | Starting compound (IV) or (II) | | | | Optically active compound (V) or (III) | | | | | |
|---|---|---|---|---|---|---|---|---|---|---|
| | $R_1$ | Y | ℓ | m | $R_2$ | k | p | s | $R_1$ | Y |
| 119 | $n-C_{10}H_{21}$ | -O- | 1 | 1 | $n-C_3H_7$ | 2 | 4 | 0 | $n-C_{10}H_{21}$ | -O- |
| 120 | " | -O- | 1 | 1 | $-CH_2\overset{CH_3}{\underset{(S)}{C}}HOC_3H_7$ | 1 | 4 | 0 | " | -O- |
| 121 | " | -O- | 1 | 1 | $-(CH_2)_3OC_2H_5$ | 1 | 4 | 0 | " | -O- |
| 122 | " | -COO- | 1 | 1 | $n-C_4H_9$ | 1 | 4 | 1 | " | -COO- |
| 123 | $C_{10}H_{21}$ | -O- | 1 | 1 | $n-C_3H_7$ | 1 | 5 | 0 | $C_{10}H_{21}$ | -O- |
| 124 | $C_{12}H_{25}$ | -O- | 1 | 1 | $n-C_3H_7$ | 1 | 5 | 0 | $C_{12}H_{25}$ | -O- |
| 125 | $C_{12}H_{25}$ | -O- | 1 | 1 | $-(CH_2)_3OC_2H_5$ | 1 | 5 | 0 | $C_{12}H_{25}$ | -O- |

- cont'd -

Table 9 (cont'd)

| Optically active aromatic compound | | | | | | | Yield (%) | $[\alpha]_D^{20}$, (c=1, $CHCl_3$) |
|---|---|---|---|---|---|---|---|---|
| X | $R_2$ | ℓ | k | m | n | p | | |
| -OCO- | $n-C_3H_7$ | 1 | 2 | 1 | 0 | 4 | 89 | -2.8° |
| -COO- | $-CH_2\overset{CH_3}{\overset{\vert}{C}}HOC_3H_7$ (S) | 1 | 1 | 1 | 0 | 4 | 91 | -5° |
| -COO- | $-(CH_2)_3OC_2H_5$ | 1 | 1 | 1 | 0 | 4 | 81 | -4° |
| -COO- | $n-C_4H_9$ | 1 | 1 | 1 | 1 | 4 | 85 | +2.3° |
| -COO- | $n-C_3H_7$ | 1 | 1 | 1 | 0 | 5 | 85 | -1.1° |
| -COO- | $n-C_3H_7$ | 1 | 1 | 1 | 0 | 5 | 88 | -1.5° |
| -COO- | $-(CH_2)_3OC_2H_5$ | 1 | 1 | 1 | 0 | 5 | 78 | -2° |

Table 9 (cont'd)

| Example | Starting compound (IV) or (II) | | | | Optically active compound (V) or (III) | | | | | |
|---|---|---|---|---|---|---|---|---|---|---|
| | $R_1$ | Y | ℓ | m | $R_2$ | k | p | s | $R_1$ | Y |
| 126 | $C_{16}H_{33}$ | -OCO- | 1 | 1 | n-$C_9H_{19}$ | 1 | 5 | 1 | $C_{16}H_{33}$ | -OCO- |
| 127 | $C_{12}H_{25}$ | -O- | 2 | 1 | n-$C_3H_7$ | 1 | 5 | 0 | $C_{12}H_{25}$ | -O- |
| 128 | $C_{12}H_{25}$ | -O- | 2 | 1 | n-$C_3H_7$ | 1 | 5 | 0 | $C_{12}H_{25}$ | -O- |
| 129 | $C_8H_{17}$ | -O- | 1 | 1 | n-$C_3H_7$ | 2 | 5 | 0 | $C_8H_{17}$ | -O- |

- cont'd -

Table 9 (cont'd)

| Optically active aromatic compound | | | | | | | Yield (%) | $[\alpha]_D^{20}$, (c=1 $CHCl_3$) |
|---|---|---|---|---|---|---|---|---|
| X | $R_2$ | ℓ | k | m | n | p | | |
| -OCO- | n-$C_9H_{19}$ | 1 | 1 | 1 | 1 | 5 | 81 | +0.9° |
| -COO- | n-$C_3H_7$ | 2 | 1 | 1 | 0 | 5 | 85 | -2° |
| -OCO- | n-$C_3H_7$ | 2 | 1 | 1 | 0 | 5 | 90 | -2.5° |
| -COO- | n-$C_3H_7$ | 1 | 2 | 1 | 0 | 5 | 86 | -3° |

Phase transition temperature and value of spontaneous polarization of the compounds obtained in Table 9 are shown in Table 10 (The values of spontaneous polarization are those measured by using liquid crystal element prepared by the method of preparation of liquid crystal elements hereinafter stated.).

Table 10

| Compound No. | Phase transition temperature (°C) | Spontaneous Polarization (nc/$cm^2$) (T-Tc=-10°C) |
|---|---|---|
| 100 | $K \xrightarrow{13} I$; $I \rightarrow S_A \xrightarrow{-4} S_C^* \xrightarrow{-14} K$ | 12 |
| 107 | $K \xrightarrow{28} S_1 \xrightarrow{54} S_C^* \xrightarrow{112} Ch \xrightarrow{131} I$ | 5 |
| 112 | $K \xrightarrow{51} S_1 \xrightarrow{62} S_C^* \xrightarrow{95} Ch \xrightarrow{129} I$ | 15 |
| 113 | $K — S_1 \xrightarrow{62} S_C^* \xrightarrow{67} Ch \xrightarrow{102} I$ | 26 |

Thus, the compound which shows it self $S_C^*$ phase, shows value of practical spontaneous polarization.

Examples 130 - 132

The liquid crystal compositions shown in Table 11 were prepared using the liquid crystal compounds. The preparation procedure was that a given compound weighed in a given amount was mixed in a sample bottle, while being heated and molten.

[Process for the preparation of liquid crystal element]

On a glass substrate provided with an indium oxid transparent electrode, a polyimide polymeric membrane is further provided. This is rubbed using a gauze in a certain direction and then a liquid crystal cell is assembled by using glass fibers (a dimeter of 5 μm) as a spacer, so as to allow two substrates to be parallel in the rubbing direction. The above liquid crystal composition(s) or compound(s) is sealed in vacuo into the liquid crystal cell to obtain a liquid crystal element.

To the thus-obtained liquid crystal element combined with a polarizer, 20 V of electric voltage were applied, and then change in transmitted light strength was observed. At that time, spontaneous polarization values (determined by Soya-Toya method) is shown in Table 11.

As clear from the results, when the liquid crystal materials of the present invention is used, ferroelectric liquid crystals can be made when such liquid crystal materials are formed into liquid crystal compositions, even if such materials per se do not exhibit any liquid crystal phase.

Table 11

| Example | Composition component (wt%) or Compd. No. | | Ps (nc/cm²) |
|---|---|---|---|
| 130 | 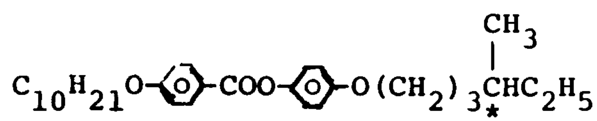 (80%) (known compd.) (Compound of Example 99) (20%) | | 9 |
| 131 | 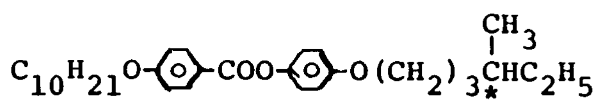 (80%) (Compound of Example 101 exhibiting K-I phase) (20%) | | 4 |
| 132 | 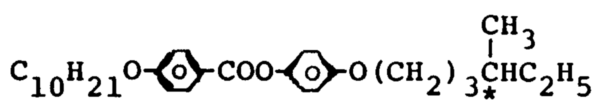 (80%) (Compound of Example 122 exhibiting K-I phase) (20%) | | 8 |
| (Cf) | 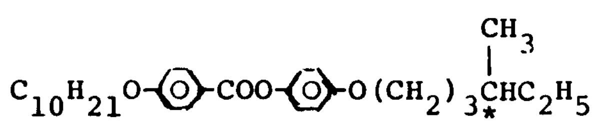 $K \xrightarrow{35} S_C^* \xrightarrow{70} S_A \xrightarrow{74} I$ | (known compound) $P_S \fallingdotseq 0$ ($n^C/Cm^2$) | |

Examples 133 - 136

The liquid crystal materials shown in Table 12 are sealed in the liquid crystal elements prepared by the method of preparation of liquid crystal elements in Example 130 and are measured respectively in the spontaneous polarization. The results are given in Table 12.

Table 12

| Example | Compound No. | Spontaneous polarization (hc/cm$^2$) |
|---|---|---|
| 133 | 98 | 12 |
| 134 | 114 | 9 |
| 135 | 121 | 8 |
| 136 | 123 | 13 |

## Claims

1. An optically active aromatic compound represented by the formula (I):

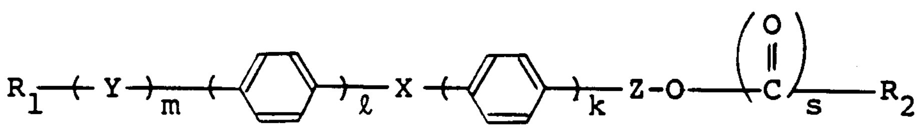

(I)

wherein X represents -COO- or -OCO-; Y represents -COO-, -OCO- or -O-; $R_2$ represents an alkyl or alkoxyalkyl group having 1 to 20 carbon atoms optionally substituted by halogen atoms; $R_1$ represents an alkyl group having 3 to 20 carbon atoms;
Z represents

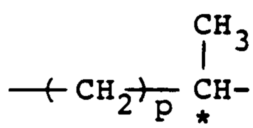

or

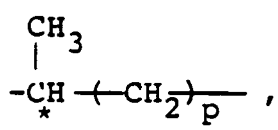

wherein p represents a number of 1 to 5 and * indicates asymmetric carbon atom; ℓ and k each represents a number of 1 or 2; m and s each represents a number of 0 or 1.

2. An optically active aromatic compound according to claim 1, wherein Z is

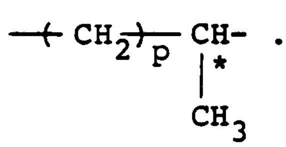

**3.** An optically active aromatic compound according to claim 1, wherein Z is

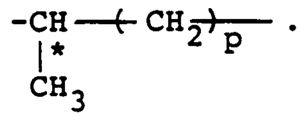

**4.** An optically active aromatic compound according to claim 2, wherein X is -OCO-.

**5.** An optically active aromatic compound according to claim 2, wherein X is -COO-.

**6.** An optically active aromatic compound according to claim 3, wherein X is -OCO-.

**7.** An optically active aromatic compound according to claim 3, wherein X is -COO-.

**8.** An optically active aromatic compound according to claim 5, wherein s represents 0.

**9.** An optically active aromatic compound according to claim 8, wherein $R_2$ represents an alkyl group having 1 to 20 carbon atoms optionally substituted by halogen atoms.

**10.** An optically active aromatic compound according to claim 9, wherein ℓ and k each represents 1.

**11.** An optically active aromatic compound according to claim 6 or 7, wherein $R_2$ represents an alkyl group having 1 to 20 carbon atoms optionally substituted by halogen atoms.

**12.** An optically active aromatic compound according to claim 11, wherein ℓ represents 1.

**13.** A process for preparing optically active aromatic compounds represented by the formula (I-a):

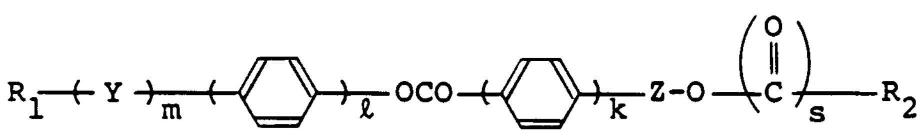 (I-a)

(wherein Y represents -COO-, -OCO- or -O-; $R_2$ represents an alkyl or alkoxyalkyl group having 1 to 20 carbon atoms optionally substituted by halogen atoms; $R_1$ represents an alkyl group having 3 to 20 carbon atoms;
Z represents

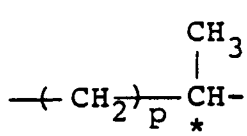

or

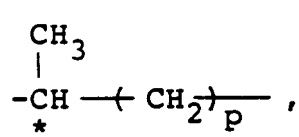

wherein p represents a number of 1 to 5 and * indicates asymmetric carbon atom; ℓ and k each represents a number of 1 or 2; m and s each represents a number of 0 or 1), which comprises reacting

phenols represented by the formula (II);

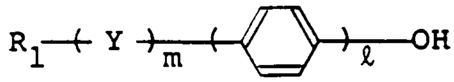

(II)

(wherein $R_1$, Y, ℓ and m have the meanings given above) with optically active carboxylic acids represented by the formula (III):

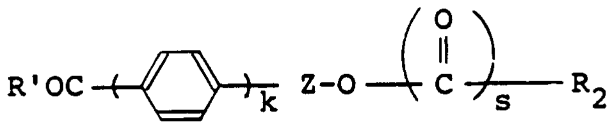

(III)

wherein $R_2$, s, k and Z have the meanings given above and R′ represents a hydroxyl group or a halogen atom.

**14.** A process for preparing optically active aromatic compounds represented by the formula (I-b):

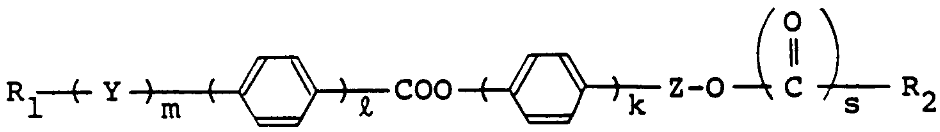

(I-b)

(wherein Y represents -COO-, -OCO- or -O-; $R_2$ represents an alkyl or alkoxyalkyl group having 1 to 20 carbon atoms optionally substituted by halogen atoms; $R_1$ represents an alkyl group having 3 to 20 carbon atoms;
Z represents

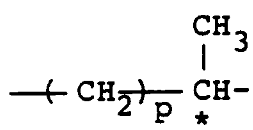

or

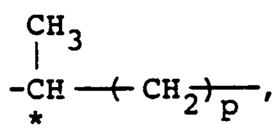

wherein p represents a number of 1 to 5 and * indicates asymmetric carbon atom; ℓ and k each represents a number of 1 or 2; m and s each represents a number of 0 or 1), which comprises reacting carboxylic acid compounds represented by the formula (IV);

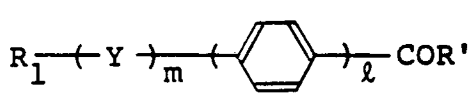

(IV)

(wherein $R_1$, Y, ℓ and m have the meanings given above and R′ represents a hydroxyl group or a halogen atom) with optically active phenols represented by the formula (V):

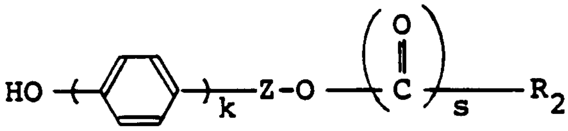 (V)

wherein $R_2$, Z, k and s have the meanings given above.

**15.** The process according to claim 13 or 14, wherein the reaction is carried out in the presence of a catalyst.

**16.** The process according to claim 15, wherein the catalyst is organic amines.

**17.** The process according to claim 13 or 14, wherein when optically active carboxylic acids are free acids or carboxylic acid compounds are free acids, the reaction is conducted in the presence of a condensing reagent.

**18.** The process according to claim 17, wherein an organic base is co-used.

**19.** A smectic or chiral smectic liquid crystal composition having at least two components at least one of which is an optically active aromatic compound represented by the formula:

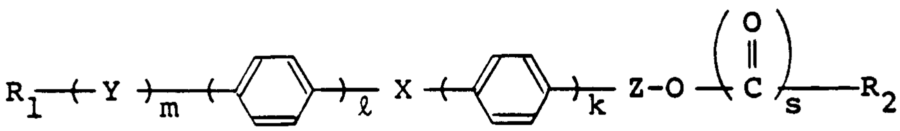 (I)

wherein X represents -COO- or -OCO-; Y represents -COO-, -OCO- or -O-; $R_2$ represents an alkyl or alkoxyalkyl group having 1 to 20 carbon atoms optionally substituted by halogen atoms; $R_1$ represents an alkyl group having 3 to 20 carbon atoms;
Z represents

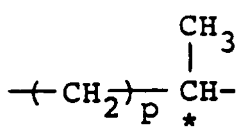

or

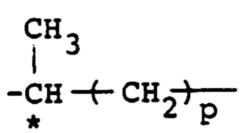 ,

wherein p represents a number of 1 to 5 and * indicates asymmetric carbon atom; ℓ and k each represents a number of 1 or 2; m and s each represents a number of 0 or 1.

**20.** The liquid crystal composition according to claim 19, wherein Z in the formula (I) representing the optically active aromatic compound is

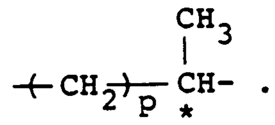

**21.** The liquid crystal composition according to claim 19, wherein Z in the formula (I) representing the optically active aromatic compound is

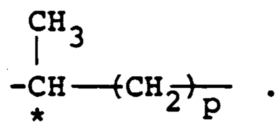

**22.** The liquid crystal composition according to claim 20 or 21, wherein X in the formula (I) representing the optically active aromatic compound is -OCO-.

**23.** The liquid crystal composition according to claim 20 or 21, wherein X in the formula (I) representing the optically active aromatic compound is -COO-.

**24.** The liquid crystal composition according to claim 20 or 21, wherein s in the formula (I) representing the optically active aromatic compound is 0.

**25.** A light switching element employing a liquid crystal composition according to claim 19 as a liquid cyrstal material.

**26.** The light switching element according to claim 25, wherein Z in the formula (I) representing optically active aromatic compound is

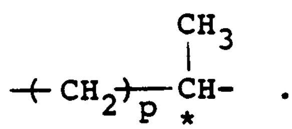

**27.** The light switching element according to claim 25, wherein Z in the formula (I) representing optically active aromatic compound is

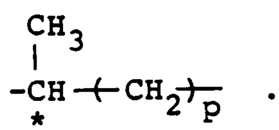

**28.** The light switching element according to claim 26 or 27, wherein X in the formula (I) representing the optically active aromatic compound is -OCO-.

**29.** The light switching element according to claim 26 or 27, wherein X in the formula (I) representing the optically active aromatic compound is -COO-.

**30.** The light switching element according to claim 26 or 27, wherein s in the formula (I) representing the optically active aromatic compound is 0.

## Patentansprüche

1. Optisch aktive aromatische Verbindung der Formel (I):

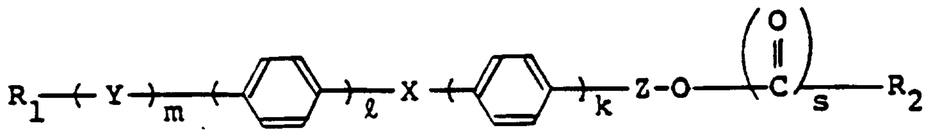

(I)

in der X eine -COO- oder -OCO-Gruppe bedeutet; Y eine -COO-, -OCO oder -O-Gruppe bedeutet; $R_2$ einen gegebenfalls mit Halogenatomen substituierten Alkyl- oder Alkoxyalkylrest mit 1 bis 20 Kohlenstoffatomen bedeutet; $R_1$ einen Alkylrest mit 3 bis 20 Kohlenstoffatomen bedeutet;
Z eine

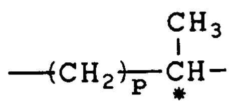

oder

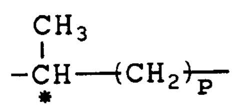

Gruppe

bedeutet, wobei p eine Zahl von 1 bis 5 bedeutet, und * ein asymmetrisches Kohlenstoffatom anzeigt; l und k jeweils die Zahl 1 oder 2 bedeuten; m und s jeweils die Zahl 0 oder 1 bedeuten.

2. Optisch aktive aromatische Verbindung nach Anspruch 1, wobei Z eine

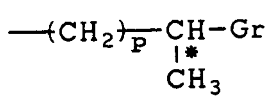

Gruppe

ist.

3. Optisch aktive aromatische Verbindung nach Anspruch 1, wobei Z eine

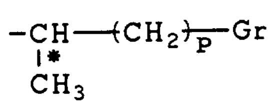

Gruppe

ist.

4. Optisch aktive aromatische Verbindung nach Anspruch 2, wobei X eine -OCO-Gruppe ist.

5. Optisch aktive aromatische Verbindung nach Anspruch 2, wobei X eine -COO-Gruppe ist.

6. Optisch aktive aromatische Verbindung nach Anspruch 3, wobei X eine -OCO-Gruppe ist.

7. Optisch aktive aromatische Verbindung nach Anspruch 3, wobei X eine -COO-Gruppe ist.

8. Optisch aktive aromatische Verbindung nach Anspruch 5, wobei s 0 bedeutet.

**9.** Optisch aktive aromatische Verbindung nach Anspruch 8, wobei $R_2$ einen gegebenfalls mit Halogenatomen substituierten Alkylrest mit 1 bis 20 Kohlenstoffatomen bedeutet.

**10.** Optisch aktive aromatische Verbindung nach Anspruch 9, wobei l und k jeweils 1 bedeuten.

**11.** Optisch aktive aromatische Verbindung nach Anspruch 6 oder 7, wobei $R_2$ einen gegebenfalls mit Halogenatomen substituierten Alkylrest mit 1 bis 20 Kohlenstoffatomen bedeutet.

**12.** Optisch aktive aromatische Verbindung nach Anspruch 11, wobei l 1 bedeutet.

**13.** Verfahren zur Herstellung optisch aktiver aromatischer Verbindungen der Formel (I-a):

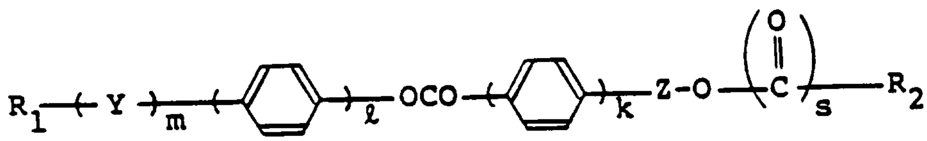

(I-a)

(in der Y eine -COO-, -OCO oder -O-Gruppe bedeutet; $R_2$ einen gegebenfalls mit Halogenatomen substituierten Alkyl- oder Alkoxyalkylrest mit 1 bis 20 Kohlenstoffatomen bedeutet; $R_1$ einen Alkylrest mit 3 bis 20 Kohlenstoffatomen bedeutet;
Z eine

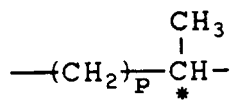

oder

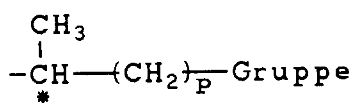

bedeutet, wobei p eine Zahl von 1 bis 5 bedeutet, und * ein asymmetrisches Kohlenstoffatom anzeigt; l und k jeweils die Zahl 1 oder 2 bedeuten; m und s jeweils die Zahl 0 oder 1 bedeuten), das die Umsetzung der Phenole der Formel (II):

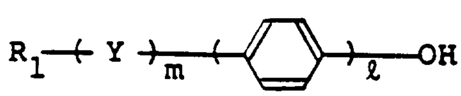

(II)

(in der $R_1$, Y, l und m die vorstehend angegebenen Bedeutungen haben), mit optisch aktiven Carbonsäuren der Formel (III):

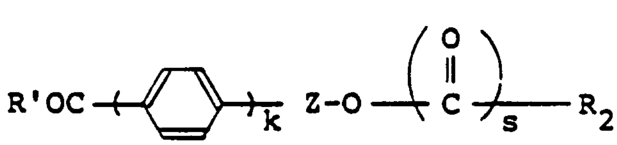

(III)

umfaßt, in der $R_2$, s, k und Z die vorstehend angegebenen Bedeutungen haben, und R' eine Hydroxylgruppe oder ein Halogenatom bedeutet.

**14.** Verfahren zur Herstellung optisch aktiver aromatischer Verbindungen der Formel (I-b):

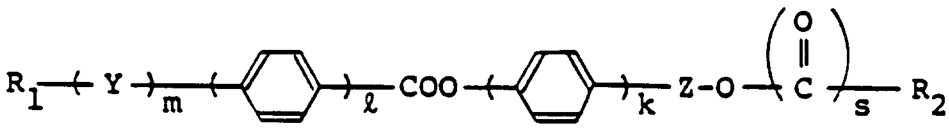

(I-b)

(in der Y eine -COO-, -OCO oder -O-Gruppe bedeutet; $R_2$ einen gegebenfalls mit Halogenatomen substituierten Alkyl- oder Alkoxyalkylrest mit 1 bis 20 Kohlenstoffatomen bedeutet; $R_1$ einen Alkylrest mit 3 bis 20 Kohlenstoffatomen bedeutet;
Z eine

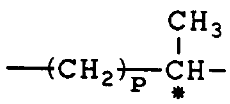

oder

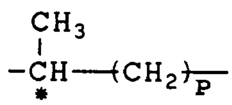 Gruppe

bedeutet, wobei p eine Zahl von 1 bis 5 bedeutet, und * ein asymmetrisches Kohlenstoffatom anzeigt; l und k jeweils die Zahl 1 oder 2 bedeuten; m und s jeweils die Zahl 0 oder 1 bedeuten), das die Umsetzung der Carbonsäureverbindungen der Formel (IV):

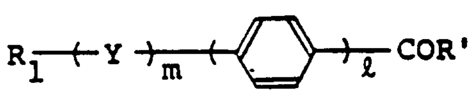

(IV)

(in der $R_1$, Y, l und m die vorstehend angegebenen Bedeutungen haben, und R' eine Hydroxylgruppe oder ein Halogenatom bedeutet) mit optisch aktiven Phenolen der Formel (V):

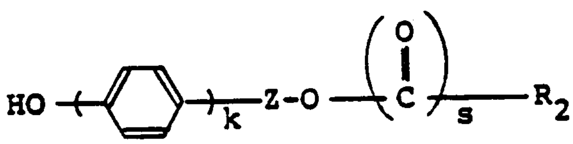

(V)

umfaßt, in der $R_2$, Z, k und s die vorstehend angegebenen Bedeutungen haben.

**15.** Verfahren nach Anspruch 13 oder 14, wobei die Umsetzung in Gegenwart eines Katalysators durchgeführt wird.

**16.** Verfahren nach Anspruch 15, wobei es sich bei dem Katalysator um organische Amine handelt.

**17.** Verfahren nach Anspruch 13 oder 14, wobei die Umsetzung in Gegenwart eines Kondensationsmittels durchgeführt wird, wenn optisch aktive Carbonsäuren freie Säuren sind oder Carbonsäureverbindungen freie Säuren sind.

**18.** Verfahren nach Anspruch 17, wobei eine organische Base mitverwendet wird.

**19.** Smektische oder chirale smektische Flüssigkristall-Zusammensetzung mit wenigstens zwei Komponenten, von denen wenigstens eine eine optisch aktive aromatische Verbindung der Formel:

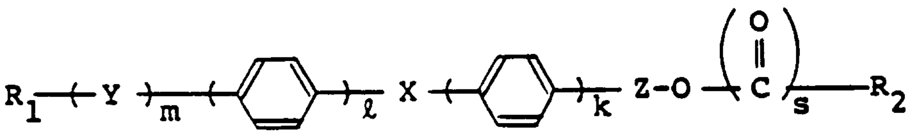

(I)

ist, in der X eine -COO- oder -OCO-Gruppe bedeutet; Y eine -COO-, -OCO oder -O-Gruppe bedeutet; $R_2$ einen gegebenfalls mit Halogenatomen substituierten Alkyl- oder Alkoxyalkylrest mit 1 bis 20 Kohlenstoffatomen bedeutet; $R_1$ einen Alkylrest mit 3 bis 20 Kohlenstoffatomen bedeutet;
Z eine

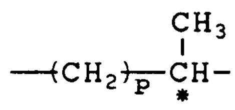

oder

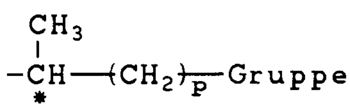

Gruppe

bedeutet, wobei p eine Zahl von 1 bis 5 bedeutet, und * ein asymmetrisches Kohlenstoffatom anzeigt; l und k jeweils die Zahl 1 oder 2 bedeuten; m und s jeweils die Zahl 0 oder 1 bedeuten.

**20.** Flüssigkristall-Zusammensetzung nach Anspruch 19, wobei Z in der optisch aktiven aromatischen Verbindung der Formel (I) eine

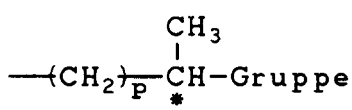

Gruppe

ist.

**21.** Flüssigkristall-Zusammensetzung nach Anspruch 19, wobei Z in der optisch aktiven aromatischen Verbindung der Formel (I) eine

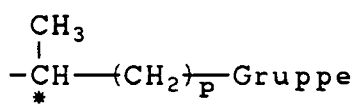

Gruppe

ist.

**22.** Flüssigkristall-Zusammensetzung nach Anspruch 20 oder 21, wobei X in der optisch aktiven aromatischen Verbindung der Formel (I) eine -OCO-Gruppe ist.

**23.** Flüssigkristall-Zusammensetzung nach Anspruch 20 oder 21, wobei X in der optisch aktiven aromatischen Verbindung der Formel (I) eine -COO-Gruppe ist.

**24.** Flüssigkristall-Zusammensetzung nach Anspruch 20 oder 21, wobei s in der optisch aktiven aromatischen Verbindung der Formel (I) 0 ist.

**25.** Lichtschalterelement unter Verwendung einer Flüssigkristall-Zusammensetzung nach Anspruch 19 als flüssigkristallinem Material.

**26.** Lichtschalterelement nach Anspruch 25, wobei Z in der optisch aktiven aromatischen Verbindung der Formel (I) eine

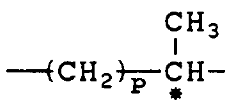 Gruppe

ist.

**27.** Lichtschalterelement nach Anspruch 25, wobei Z in der optisch aktiven aromatischen Verbindung der Formel (I) eine

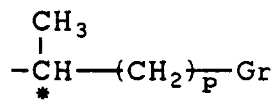 Gruppe

ist.

**28.** Lichtschalterelement nach Anspruch 26 oder 27, wobei X in der optisch aktiven aromatischen Verbindung der Formel (I) eine -OCO-Gruppe ist.

**29.** Lichtschalterelement nach Anspruch 26 oder 27, wobei X in der optisch aktiven aromatischen Verbindung der Formel (I) eine -COO-Gruppe ist.

**30.** Lichtschalterelement nach Anspruch 26 oder 27, wobei s in der optisch aktiven aromatischen Verbindung der Formel (I) 0 ist.

**Revendications**

**1.** Composé aromatique optiquement actif représenté par la formule (I) :

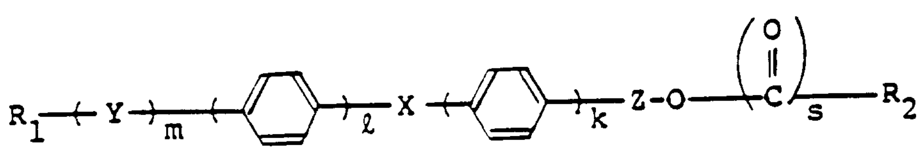 (I)

dans laquelle X représente -COO- ou -OCO-; Y représente -COO-, -OCO- ou -O-; $R_2$ représente un groupement alkyle ou alcoxyalkyle ayant de 1 à 20 atomes de carbone éventuellement substitué par des atomes d'halogène; $R_1$ représente un groupement alkyle ayant de 3 à 20 atomes de carbone; Z représente

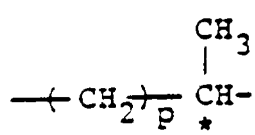

ou

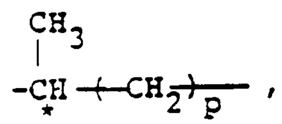

où p représente un nombre de 1 à 5 et * indique un atome de carbone asymétrique; l et k représentent chacun un nombre de 1 ou 2; m et s représentent chacun un nombre de 0 ou 1.

**2.** Composé aromatique optiquement actif selon la revendication 1, dans lequel Z est

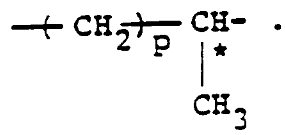

**3.** Composé aromatique optiquement actif selon la revendication 1, dans lequel Z est

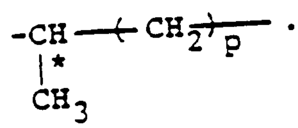

**4.** Composé aromatique optiquement actif selon la revendication 2, dans lequel X est -OCO-.

**5.** Composé aromatique optiquement actif selon la revendication 2, dans lequel X est -COO-.

**6.** Composé aromatique optiquement actif selon la revendication 3, dans lequel X est -OCO-.

**7.** Composé aromatique optiquement actif selon la revendication 3, dans lequel X est -COO-.

**8.** Composé aromatique optiquement actif selon la revendication 5, dans lequel s représente 0.

**9.** Composé aromatique optiquement actif selon la revendication 8, dans lequel $R_2$ représente un groupement alkyle ayant de 1 à 20 atomes de carbone éventuellement substitué par des atomes d'halogène.

**10.** Composé aromatique optiquement actif selon la revendication 9, dans lequel l et k représentent chacun 1.

**11.** Composé aromatique optiquement actif selon la revendication 6 ou 7, dans lequel $R_2$ représente un groupement alkyle ayant de 1 à 20 atomes de carbone éventuellement substitué par des atomes d'halogène.

**12.** Composé aromatique optiquement actif selon la revendication 11, dans lequel l représente 1.

**13.** Procédé de préparation de composés aromatiques optiquement actifs représentés par la formule (I-a) :

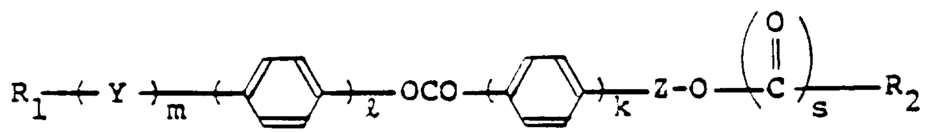

(I-a)

(dans laquelle X représente -COO- ou -OCO-; Y représente -COO-, -OCO- ou -O-; $R_2$ représente un groupement alkyle ou alcoxyalkyle ayant de 1 à 20 atomes de carbone éventuellement substitué par des atomes d'halogène; $R_1$ représente un groupement alkyle ayant de 3 à 20 atomes de carbone;
Z représente

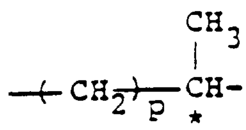

ou

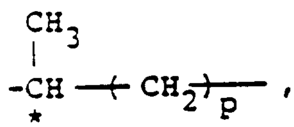

où p représente un nombre de 1 à 5 et * indique un atome de carbone asymétrique; l et k représentent chacun un nombre de 1 ou 2; m et s représentent chacun un nombre de 0 ou 1),
qui consiste à faire réagir des phénols représentés par la formule générale (II):

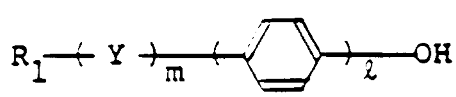

(II)

(dans laquelle $R_1$, Y, l et m ont les significations données précédemment) avec des acides carboxyliques optiquement actifs représentés par la formule (III):

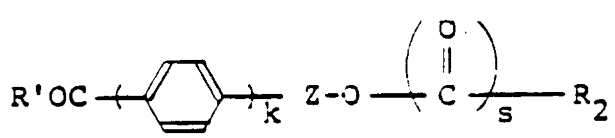

(III)

dans laquelle $R_2$, s, k et Z ont les significations données précédemment et R' représente un groupement hydroxy ou un atome d'halogène.

**14.** Procédé de préparation de composés aromatiques optiquement actifs représentés par la formule (I-b) :

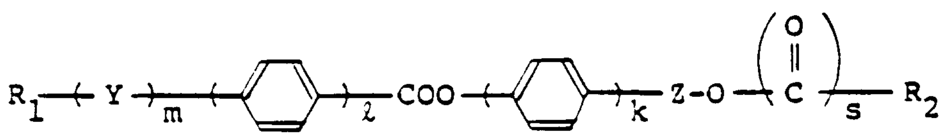

(I-b)

(dans laquelle X représente -COO- ou -OCO-; Y représente -COO-, -OCO- ou -O-; $R_2$ représente un

groupement alkyle ou alcoxyalkyle ayant de 1 à 20 atomes de carbone éventuellement substitué par des atomes d'halogène; $R_1$ représente un groupement alkyle ayant de 3 à 20 atomes de carbone; Z représente

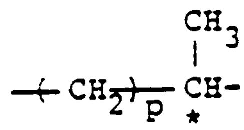

ou

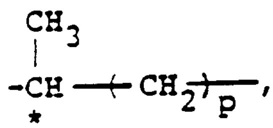

où p représente un nombre de 1 à 5 et * indique un atome de carbone asymétrique; l et k représentent chacun un nombre de 1 ou 2; m et s représentent chacun un nombre de 0 ou 1), qui consiste à faire réagir des dérivés d'acide carboxylique représentés par la formule (IV)

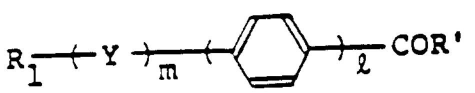

(IV)

(dans laquelle $R_1$, Y, l et m ont les significations données précédemment et R' représente un groupement hydroxy ou un atome d'halogène) avec des phénols optiquement actifs représentés par la formule (V):

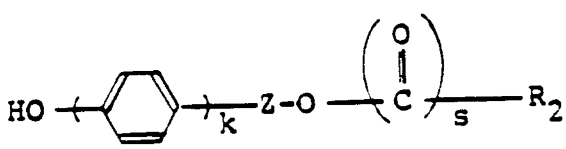

(V)

dans laquelle $R_2$, Z, k et s ont les significations données précédemment.

**15.** Procédé selon la revendication 13 ou 14, dans lequel la réaction est effectuée en présence d'un catalyseur.

**16.** Procédé selon la revendication 15, dans lequel le catalyseur est constitué par des amines organiques.

**17.** Procédé selon la revendication 13 ou 14, dans lequel, quand les acides carboxyliques optiquement actifs sont des acides libres ou que les dérivés d'acides carboxyliques sont des acides libres, la réaction est effectuée en présence d'un réactif de condensation.

**18.** Procédé selon la revendication 17, dans lequel on utilise simultanément une base organique.

**19.** Composition cristalline liquide smectique ou smectique chirale contenant au moins deux composants dont au moins l'un est un composé aromatique optiquement actif représenté par la formule :

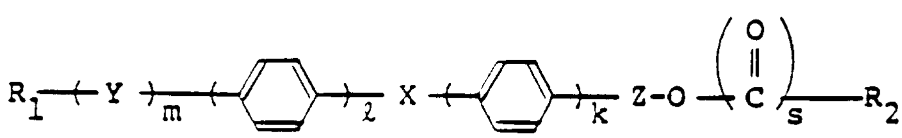

(I)

dans laquelle X représente -COO- ou -OCO-; Y représente -COO-, -OCO- ou -O-; $R_2$ représente un groupement alkyle ou alcoxyalkyle ayant de 1 à 20 atomes de carbone éventuellement substitué par des atomes d'halogène; $R_1$ représente un groupement alkyle ayant de 3 à 20 atomes de carbone;
Z représente

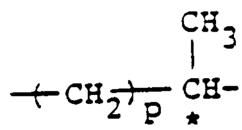

ou

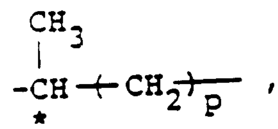

où p représente un nombre de 1 à 5 et * indique un atome de carbone asymétrique; l et k représentent chacun un nombre de 1 ou 2; m et s représentent chacun un nombre de 0 ou 1.

**20.** Composition cristalline liquide selon la revendication 19, dans laquelle Z dans la formule (I) représentant le composé aromatique optiquement actif est

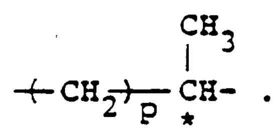

**21.** Composition cristalline liquide selon la revendication 19, dans laquelle Z dans la formule (I) représentant le composé aromatique optiquement actif est

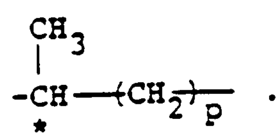

**22.** Composition cristalline liquide selon la revendication 20 ou 21, dans laquelle X dans la formule (I) représentant le composé aromatique optiquement actif est -OCO-.

**23.** Composition cristalline liquide selon la revendication 20 ou 21, dans laquelle X dans la formule (I) représentant le composé aromatique optiquement actif est -COO-.

**24.** Composition cristalline liquide selon la revendication 20 ou 21, dans laquelle s dans la formule (I) représentant le composé aromatique optiquement actif est 0.

**25.** Elément de commutation optique utilisant une composition cristalline liquide selon la revendication 19 comme matériau cristallin liquide.

**26.** Elément de commutation optique selon la revendication 25, dans lequel Z dans la formule (I) représentant le composé aromatique optiquement actif est

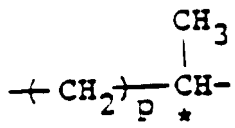 .

**27.** Elément de commutation optique selon la revendication 25, dans lequel Z dans la formule (I) représentant le composé aromatique optiquement actif est

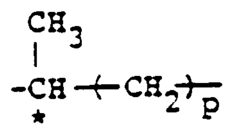 .

**28.** Elément de commutation optique selon la revendication 26 ou 27, dans lequel X dans la formule (I) représentant le composé aromatique optiquement actif est -OCO-.

**29.** Elément de commutation optique selon la revendication 26 ou 27, dans lequel X dans la formule (I) représentant le composé aromatique optiquement actif est -COO-.

**30.** Elément de commutation optique selon la revendication 26 ou 27, dans lequel s dans la formule (I) représentant le composé aromatique optiquement actif est 0.